# EUROPEAN PATENT APPLICATION

(11) **EP 4 811 806 A1**
(43) Date of publication of application: **23.09.2026**
(21) Application number: 24891734.6
(22) Date of filing: 11.11.2024
(51) Int. Cl.: H04N 23/68, H04N 23/54, H04N 23/55

(54) **CAMERA DEVICE AND OPTICAL INSTRUMENT**

(30) Priority: 13.11.2023 KR 20230156230
(71) Applicant: LG Innotek Co., Ltd., Seoul 07796 (KR)
(72) Inventor: LEE, Sung Guk, Seoul 07796 (KR)
(74) Representative: DREISS Patentanwälte PartG mbB
(86) International application number: PCT/KR2024/017725
(87) International publication number: WO 2025/105788

(57) **Abstract**

An embodiment includes: a fixed part; a moving part including an image sensor and a lens; a tilting guide part disposed between the fixed part and the moving part; and an elastic member connecting the fixed part and the moving part, wherein the elastic member includes: a first coupling part coupled to the moving part; a second coupling part coupled to the fixed part; and a connection part connecting the first coupling part and the second coupling part, wherein the tilting guide part is pressed by the moving part by means of the elastic member, and the moving part is tilted with respect to a first axis perpendicular to the optical axis direction or a second axis perpendicular to the optical axis direction and intersecting the first axis.

## Description

### [Technical Field]

Embodiments relate to a camera device and an optical instrument including the same.

### [Background Art]

Camera devices are devices that take pictures or videos of subjects, and are mounted in portable devices, drones, vehicles, and the like. In order to improve the quality of an image, a camera device may have an image stabilization (IS) function of correcting or preventing shaking of an image caused by movement of a user, e.g., an optical image stabilization (OIS) function, and an autofocus (AF) function.

### [Disclosure]

### [Technical Problem]

Embodiments provide a camera device and an optical instrument capable of achieving stable and desired holding force and performing stable OIS operation.

### [Technical Solution]

A camera device according to an embodiment includes a stationary unit, a moving unit comprising an image sensor and a lens, a tilting guide unit disposed between the stationary unit and the moving unit, and an elastic member connecting the stationary unit to the moving unit, wherein the elastic member includes a first coupling portion coupled to the moving unit, a second coupling portion coupled to the stationary unit, and a connecting portion connecting the first coupling portion to the second coupling portion, wherein the tilting guide unit is pushed toward the moving unit by the elastic member, and wherein the moving unit is tilted about a first axis perpendicular to an optical-axis direction or a second axis perpendicular to the optical-axis direction and intersecting the first axis.

The tilting guide unit may include an opening, the moving unit may include an extension portion coupled to the first coupling portion, and at least a part of the extension portion may be disposed in the opening in the tilting guide unit.

The first coupling portion may have a height difference from the second coupling portion in the optical-axis direction, and the height difference may be less than the length of the extension portion in the optical-axis direction.

The moving unit may include a sensor base and a circuit board which is disposed on the sensor base and on which the image sensor is disposed, the tilting guide unit may include an opening, and the sensor base may include an extension portion which extends through the opening in the tilting guide and is coupled to the first coupling portion. The stationary unit may include an opening through which the extension portion and the first coupling portion are exposed.

At least a part of the extension portion may be disposed in the opening in the stationary unit. The stationary unit may include a receiving portion depressed from a lower surface thereof, and the second coupling portion may be disposed in the receiving portion. The camera device may include a shield member which is disposed on a lower surface of the stationary unit so as to cover the opening in the stationary unit and is spaced apart from the elastic member.

The elastic member may be a leaf spring. The elastic member may have restoring force, and the restoring force may be force which pulls the moving unit toward the stationary unit. The image sensor may be disposed closer to the first coupling portion than to the second coupling portion.

The tilting guide unit may include a first boss disposed on the upper surface of the tilting guide unit in the first axis direction and a second boss disposed on the lower surface of the tilting guide unit in the second axis direction, and the first coupling portion may be located higher than the lowest end of the second boss. The second coupling portion may be located lower than the lowest end of the second boss.

A camera device according to another embodiment includes a stationary unit, a moving unit including a sensor base, an image sensor disposed on the sensor base and a lens, a tilting guide unit disposed between the stationary unit and the moving unit and including an opening, and an elastic member disposed under the tilting guide unit and connecting the stationary unit to the moving unit, wherein the sensor base includes an extension portion which extends through the opening of the tilting guide unit and is coupled to the elastic member, and the moving unit is tilted about a first axis perpendicular to an optical-axis direction or a second axis perpendicular to the optical-axis direction and intersecting the first axis. The elastic member includes a first coupling portion coupled to the extension portion of the sensor base, a second coupling portion coupled to the stationary unit, and a connecting portion connecting the first coupling portion to the second coupling portion, and the image sensor is located closer to the first coupling portion than to the second coupling portion.

A camera device according to another embodiment includes a stationary unit, a moving unit including an image sensor and a lens disposed on the image sensor, a tilting guide unit disposed between the stationary unit and the moving unit, and an elastic member including a first coupling portion coupled to the moving unit, a second coupling portion coupled to the stationary unit and a connecting portion connecting the first coupling portion to the second coupling portion, wherein the second coupling portion is located lower than the first coupling portion, the tilting guide unit is pushed toward the moving unit by the elastic member, and the moving unit is tilted about a first axis perpendicular to an optical-axis direction or a second axis perpendicular to the optical-axis direction and intersecting the first axis.

### [Advantageous Effects]

In an embodiment, an elastic member is used to generate holding force for pressing the tilting guide unit that supports the OIS moving unit, rather than using magnetic materials.

In an embodiment, since the elastic member is used, it is possible to prevent magnetic field interference between the magnetic materials and a driving magnet, thereby achieving stable and desired holding force.

In an embodiment, since the elastic member is used, the selection of an axis for module tilting may be easy and free, and linear holding force may be achieved with respect to the stroke or displacement of the OIS moving unit.

An embodiment is capable of reducing a space required to tilt a sensor base, which is an OIS moving unit, for hand-tremor compensation and reducing the size of a camera device.

An embodiment is capable of reducing the number of parts and reducing the weight of the camera device.

Furthermore, in an embodiment, since a tilting guide unit is used to tilt the OIS moving unit, it is possible to stably, precisely, and accurately tilt the OIS moving unit, thereby enhancing the reliability of OIS operation, compared to an example using only a ball member or a shaft member.

### [Description of Drawings]

FIG. 1 is a perspective view of a camera device according to an embodiment.
FIG. 2A is a first exploded perspective view of the camera device of FIG. 1.
FIG. 2B is a second exploded perspective view of the camera device of FIG. 1.
FIG. 3 is a perspective view of the camera device excluding a cover member.
FIG. 4A is a cross-sectional view of the camera device in direction A-B of FIG. 3.
FIG. 4B is a cross-sectional view of the camera device in direction C-D of FIG. 3.
FIG. 4C is a cross-sectional view of the camera device in direction E-F of FIG. 3.
FIG. 4D is a cross-sectional view of the camera device in direction G-H of FIG. 3.
FIG. 4E is a cross-sectional view of the camera device in direction I-J of FIG. 3.
FIG. 4F is a cross-sectional view of the camera device in direction K-M of FIG. 3.
FIG. 4G is a cross-sectional view showing a boss of the cover member.
FIG. 5 is an exploded perspective view of a bobbin, a rolling member, and a magnet.
FIG. 6 is an exploded perspective view of the bobbin, a holder, a sensor base, and a housing.
FIG. 7A is a first exploded perspective view of the holder, a filter, a circuit board, the sensor base, a tilting guide unit, and an elastic member.
FIG. 7B is a second exploded perspective view of the holder, the filter, the circuit board, the sensor base, the tilting guide unit, and the elastic member of FIG. 7A.
FIG. 7C is a coupled perspective view of the sensor base and the circuit board.
FIG. 7D is a coupled perspective view of the sensor base, the tilting guide unit, and the elastic member.
FIG. 8 is a perspective view of the holder, the rolling member, a coil, a position sensor, the circuit board, and the sensor base.
FIG. 9A is a front perspective view of the tilting guide unit.
FIG. 9B is a rear perspective view of the tilting guide unit.
FIG. 9C is a front perspective view of a tilting guide unit and first ball members according to another embodiment.
FIG. 9D is a rear perspective view of the tilting guide unit of FIG. 9C and second ball members.
FIG. 10A is an exploded perspective view of the housing, magnets, a yoke, and a movement inhibition portion.
FIG. 10B is a coupled perspective view of the housing, the magnets, the yoke, and the movement inhibition portion.
FIG. 10C is a rear perspective view of the housing.
FIG. 11A is a perspective view of the cover member, the holder, the sensor base, the circuit board, the elastic member, the tilting guide unit, and a reinforcement member.
FIG. 11B is a rear perspective view of the camera device from which the elastic member is separated.
FIG. 11C is a rear perspective view of the camera device to which the elastic member is coupled.
FIG. 11D is a rear perspective view of the camera device to which a shield member is coupled.
FIG. 12A is a cutaway perspective view of the camera device.
FIG. 12B is an enlarged view of a dotted part in FIG. 12A.
FIG. 12C is a fragmentary enlarged cross-sectional view of FIG. 4A.
FIG. 12D is a fragmentary enlarged cross-sectional view of FIG. 4F.
FIG. 13A shows electromagnetic force due to interaction between magnet units and coil units.
FIG. 13B shows the motion of an OIS moving unit due to the electromagnetic force of FIG. 13A.
FIG. 13C shows the disposition of magnet units according to a modification of FIG. 13A.
FIG. 13D shows electromagnetic force due to interaction between magnet units and coil units according to another embodiment.
FIG. 14 is a perspective view of a camera device including a lens module.
FIG. 15A shows pushing force acting on the tilting guide unit due to restoring force of the elastic member.
FIG. 15B shows a first position of the OIS moving unit.
FIG. 15C shows a second position of the OIS moving unit.
FIG. 15D shows a third position of the OIS moving unit.
FIG. 16A is a perspective view of an optical instrument according to an embodiment.
FIG. 16B is a perspective view of an optical instrument according to another embodiment.
FIG. 17 is a block diagram of the optical instrument shown in FIGs. 16A and 16B.

### [Best Mode]

Reference will now be made in detail to embodiments, examples of which are illustrated in the accompanying drawings.

In the following description of the embodiments, it will be understood that, when each element is referred to as being "on" or "under" another element, it can be directly on or under the other element, or can be indirectly formed such that one or more intervening elements are also present. In addition, when an element is referred to as being "on or under," "under the element" as well as "on the element" may be included based on the element.

In addition, the relational terms "first," "second," "on/upper part/above," and "under/lower part/below" are used herein only to distinguish between one subject or element and another subject or element without necessarily requiring or involving any physical or logical relationship or sequence between such subjects or elements. Wherever possible, the same reference numerals will be used throughout the drawings to refer to the same parts.

Additionally, the terms "comprises," "includes," and "has" described herein should be interpreted not to exclude other elements but to further include such other elements, since the corresponding elements may be inherent unless mentioned otherwise. In addition, the term "corresponding to" described herein may encompass at least one of the meanings of "facing" and "overlapping."

Hereinafter, a camera device according to an embodiment and an optical instrument including the same will be described with reference to the accompanying drawings. For convenience of description, a camera device according to an embodiment will be described using the Cartesian coordinate system (x, y, z), to which embodiments are not limited, and may be described using other coordinate systems. In the respective drawings, the X-axis and the Y-axis may be axes perpendicular to the Z-axis, which is an optical-axis (OA) direction.

In addition, the Z-axis direction, which is the direction of the optical axis OA, may be defined as one of a first direction, a second direction, and a third direction, the X-axis direction may be defined as another of the first to third directions, and the Y-axis direction may be defined as the remaining one of the first to third directions. For example, the first direction may be a direction perpendicular to the imaging region of an image sensor.

In addition, the X-axis (or the Y-axis) may be referred to as a "first horizontal axis," the X-axis (or the Y-axis) direction may be referred to as a "first horizontal direction," the Y-axis (or the X-axis) may be referred to as a "second horizontal axis," and the Y-axis (or the X-axis) direction may be referred to as a "second horizontal direction." For example, the optical-axis direction may be a direction of the optical axis or a direction parallel to the optical axis. In addition, the first-axis direction may be a direction parallel to the first axis, and the second-axis direction may be a direction parallel to the second axis.

In addition, for example, the optical axis may be an optical axis of a lens mounted in a lens barrel. Alternatively, for example, the optical axis may be an axis perpendicular to an image-capturing area of the image sensor and extending through the center of the image-capturing area. Hereinafter, the term "terminal" may alternatively be referred to as a pad, an electrode, or a conductive layer.

Also, in embodiments, in coupling between a boss and a hole to couple two configurations to each other, one of the configurations may be a coupling boss (or a coupling hole) and the other configuration may be a coupling hole (or a coupling boss) corresponding thereto.

A camera device according to an embodiment may perform a hand-tremor compensation function and an autofocus function. The hand-tremor compensation function may be a function of moving a lens in a direction perpendicular to the optical-axial direction or tilting the lens with respect to the optical axis so as to cancel vibration (or motion) caused by shaking of the user's hand. In addition, the autofocus function may be a function of automatically focusing on a subject by moving a lens in the optical-axis direction according to the distance to the subject such that an image sensor obtains a clear image of the subject. Hereinafter, the "camera device" may alternatively be referred to as a "camera," an "actuator," a "camera module," an "image-capturing device," or a "photographing device."

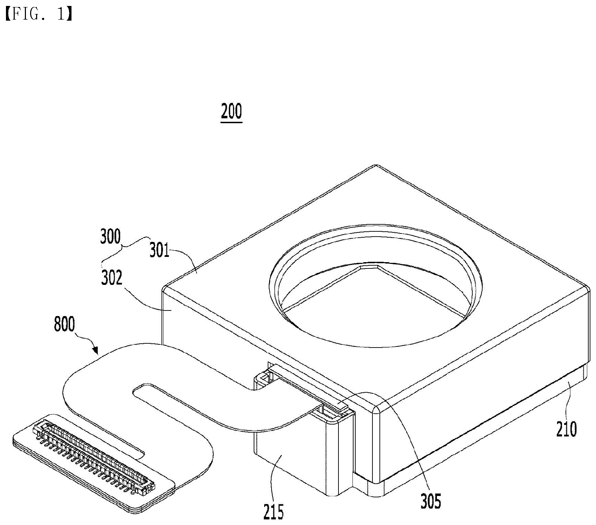

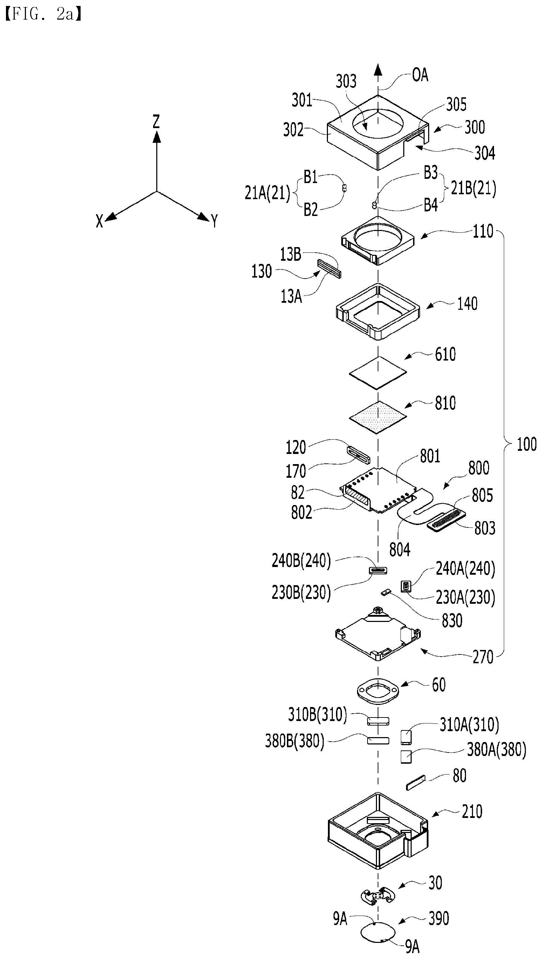

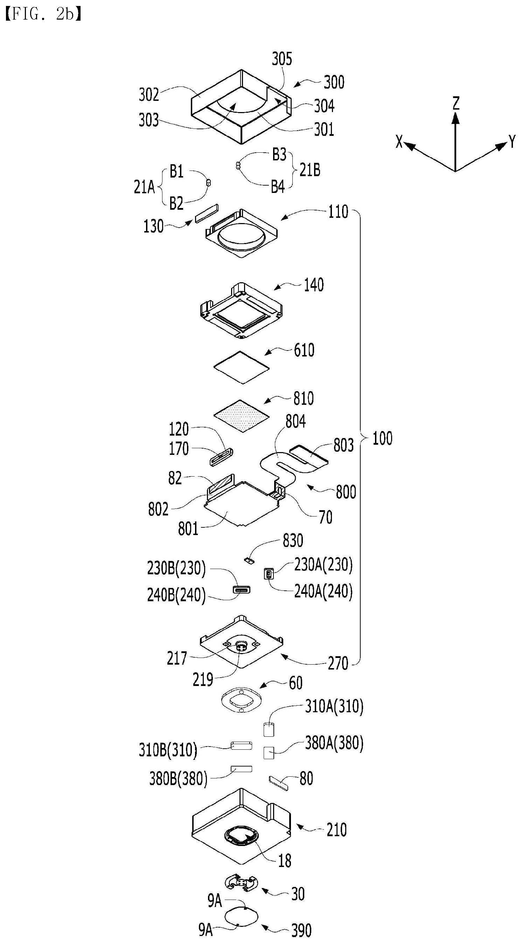

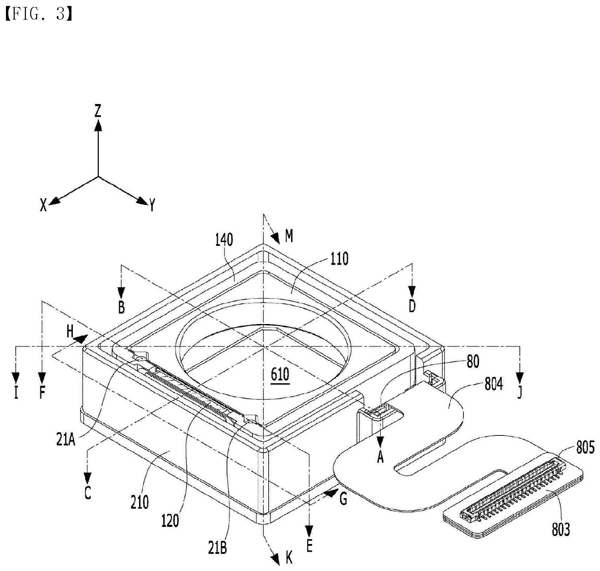

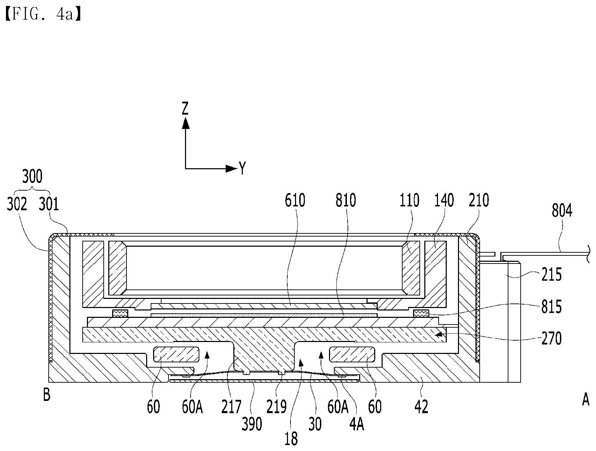

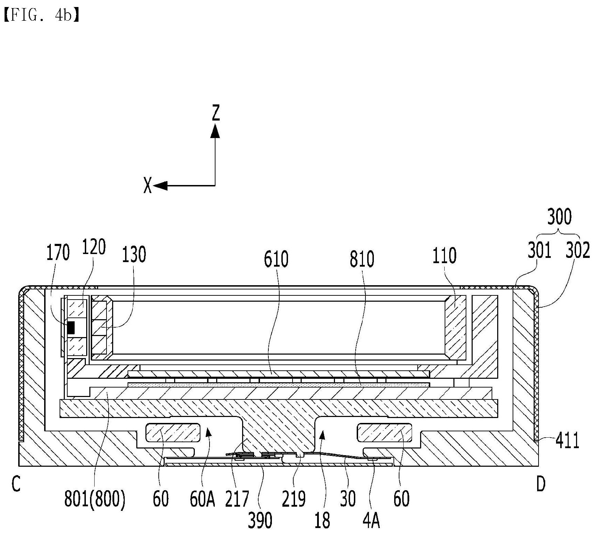

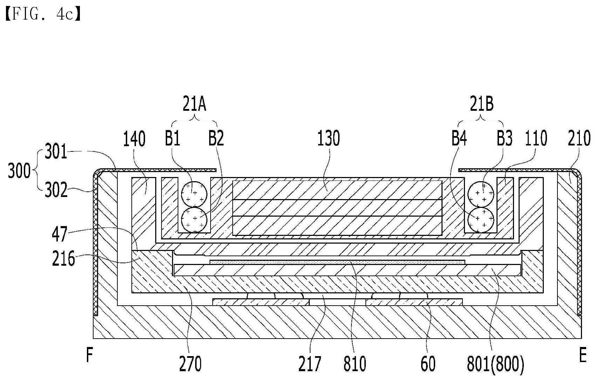

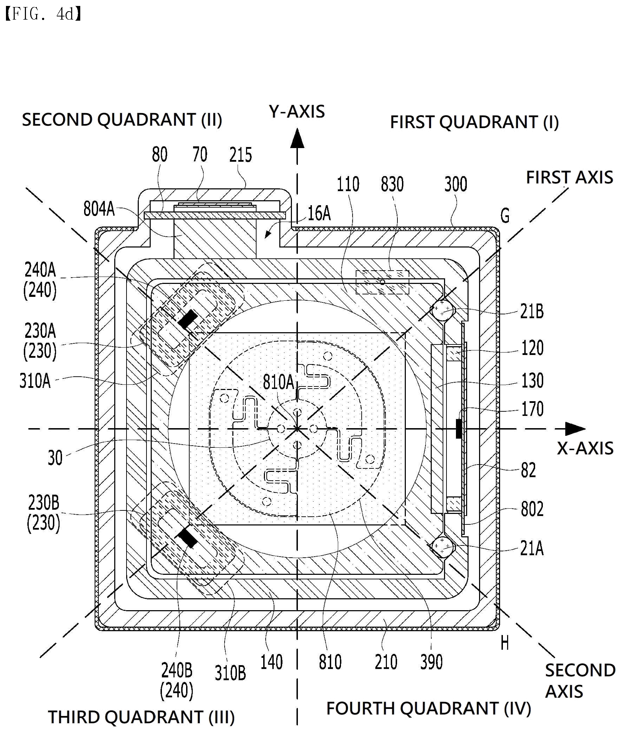

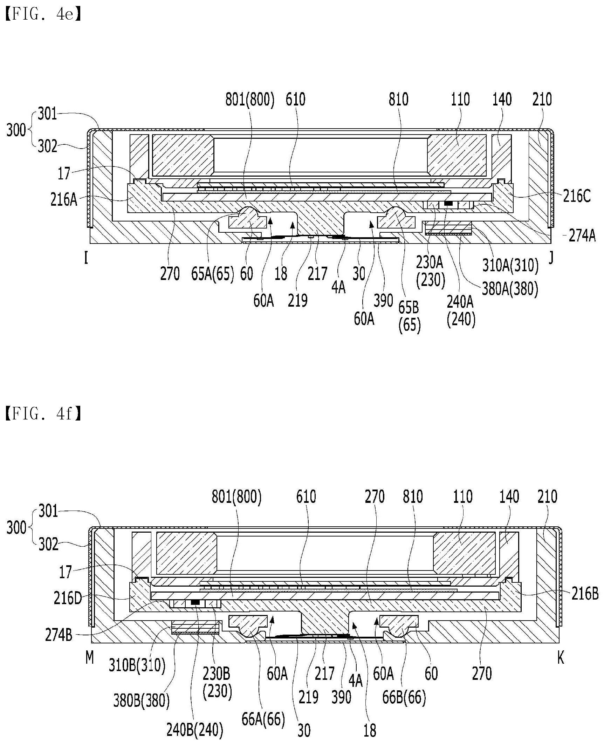

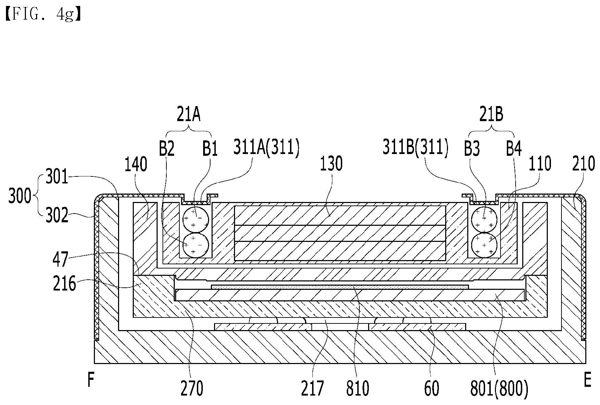

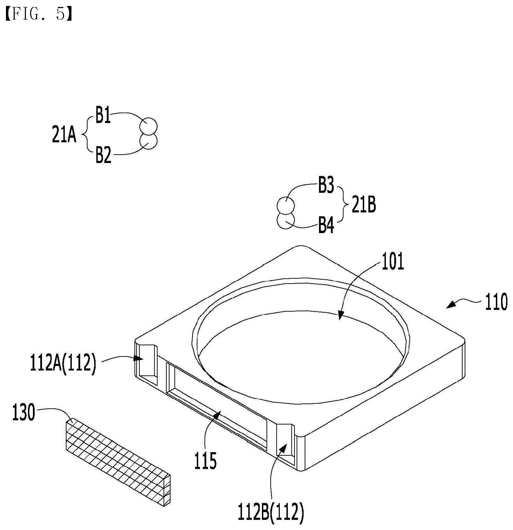

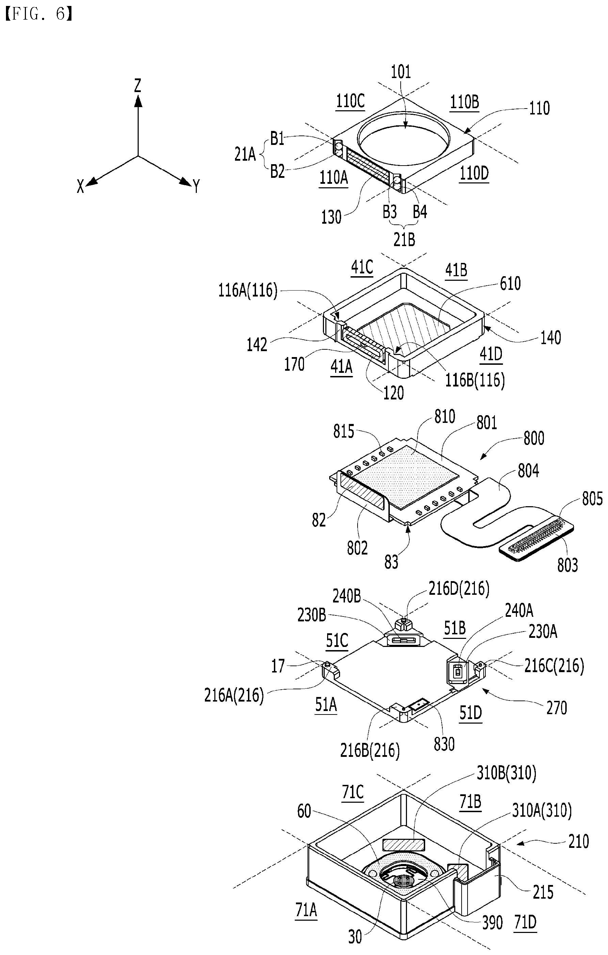

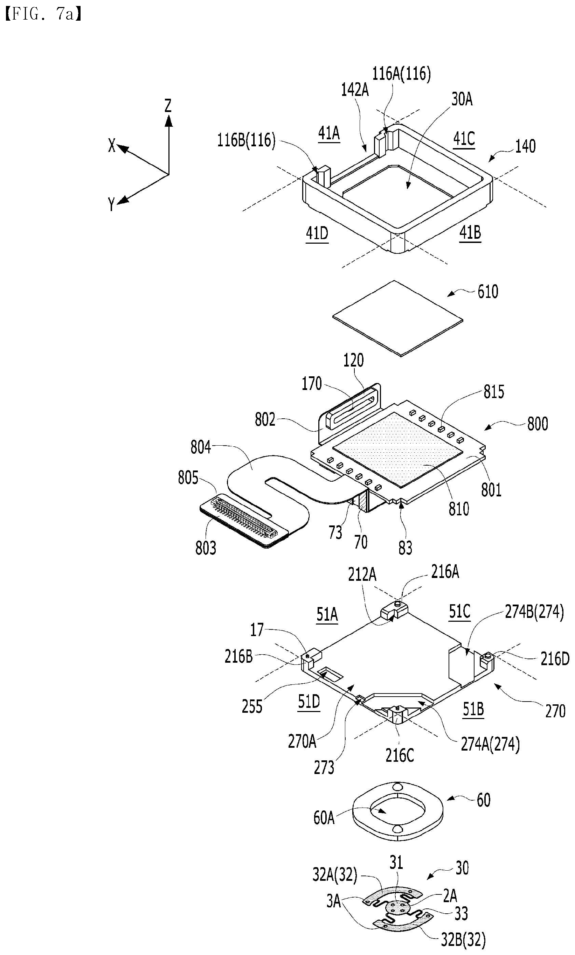

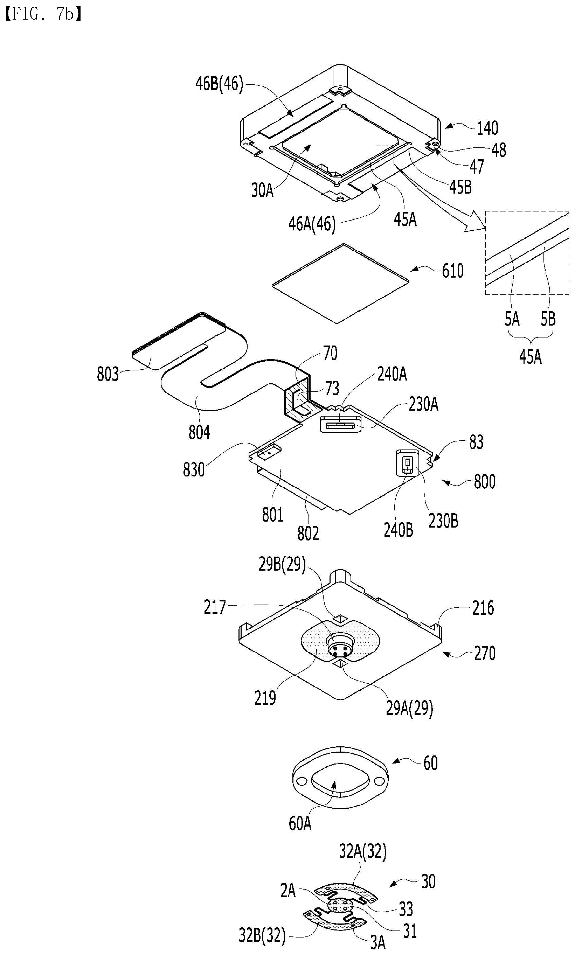

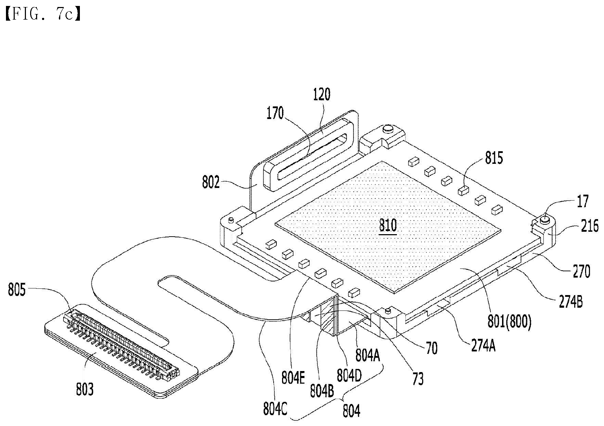

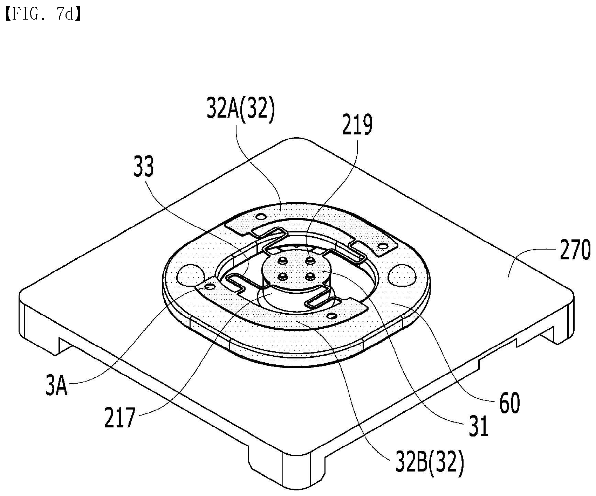

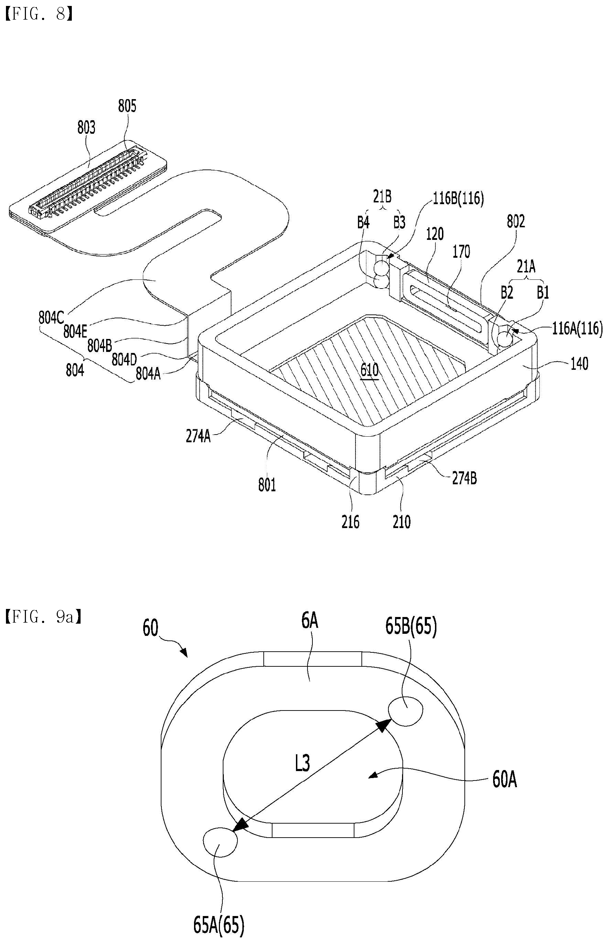

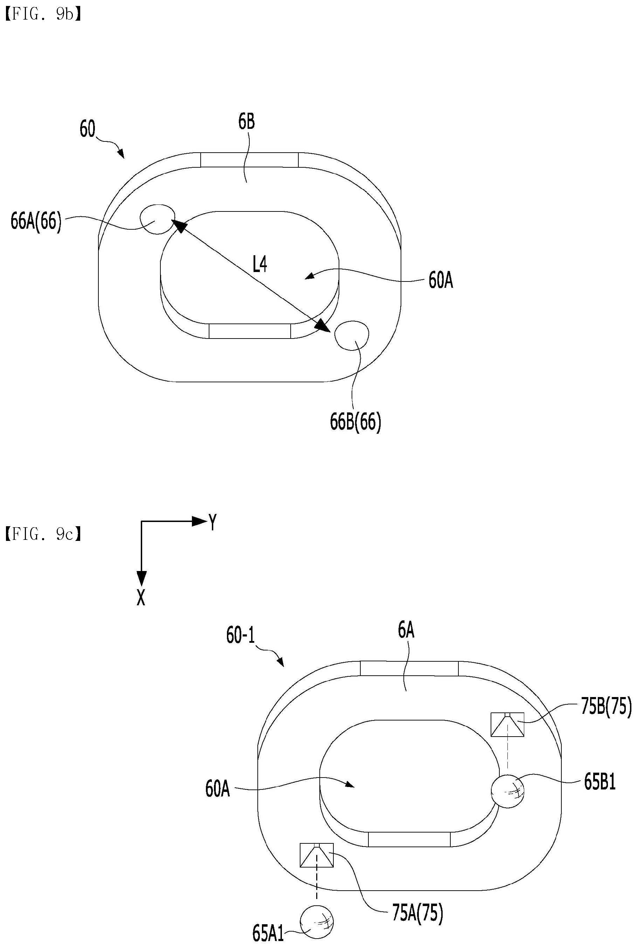

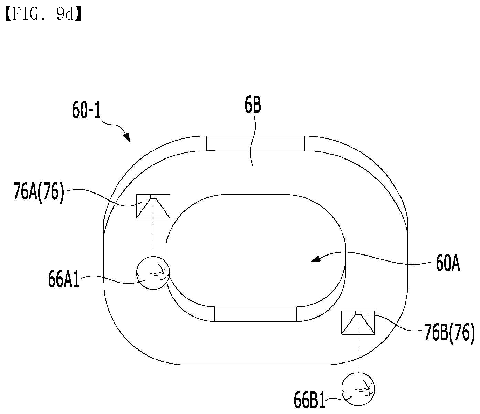

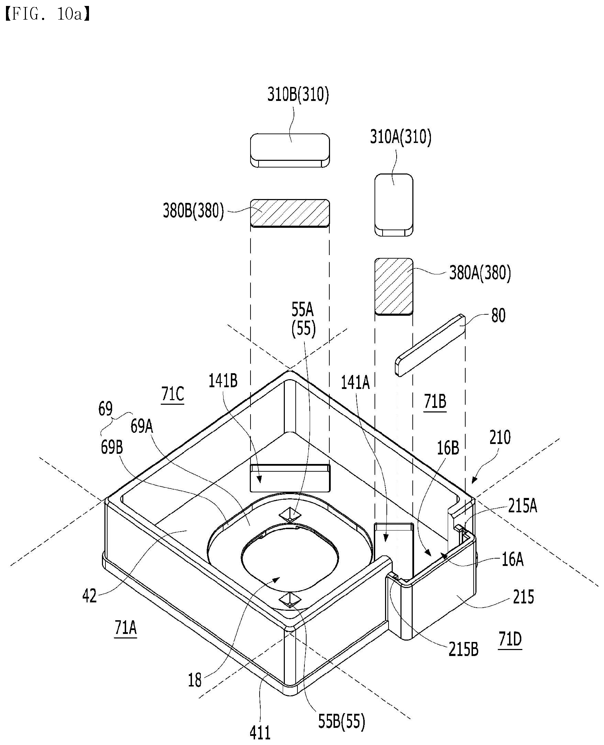

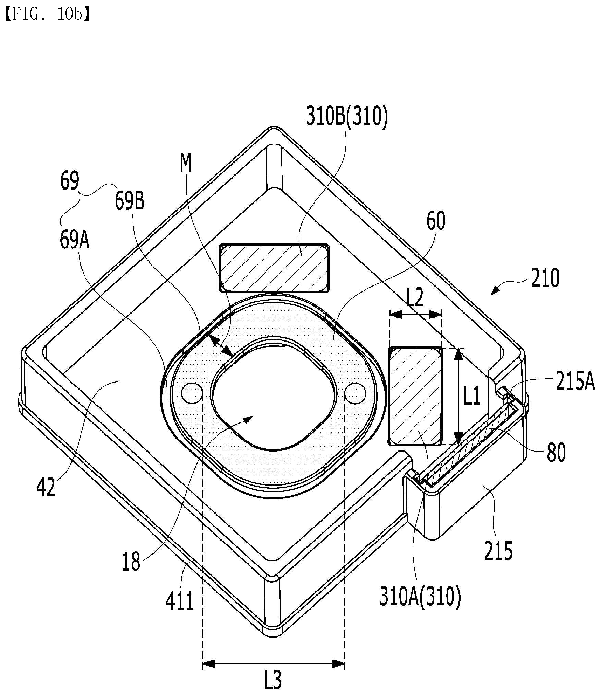

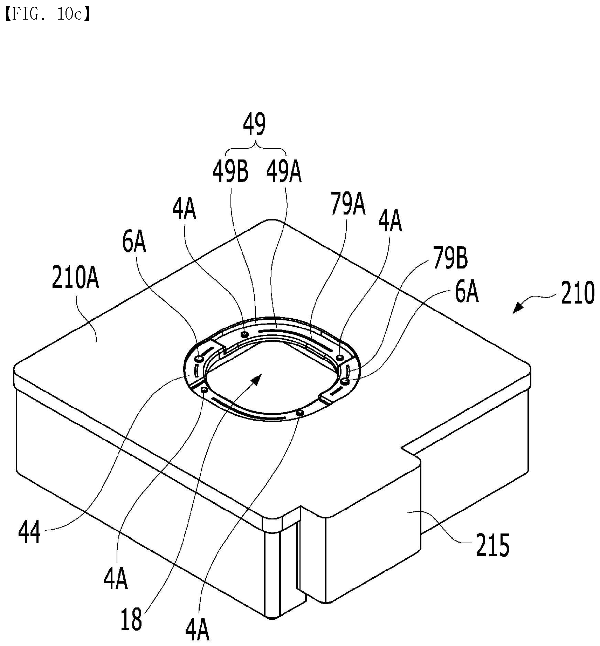

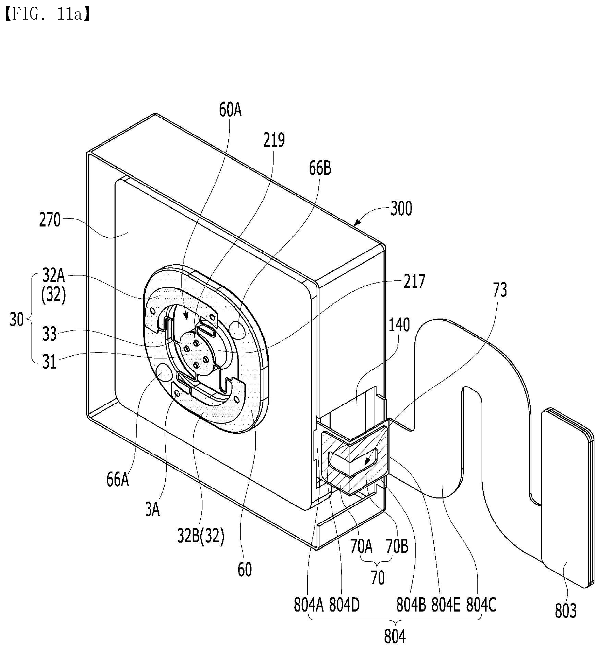

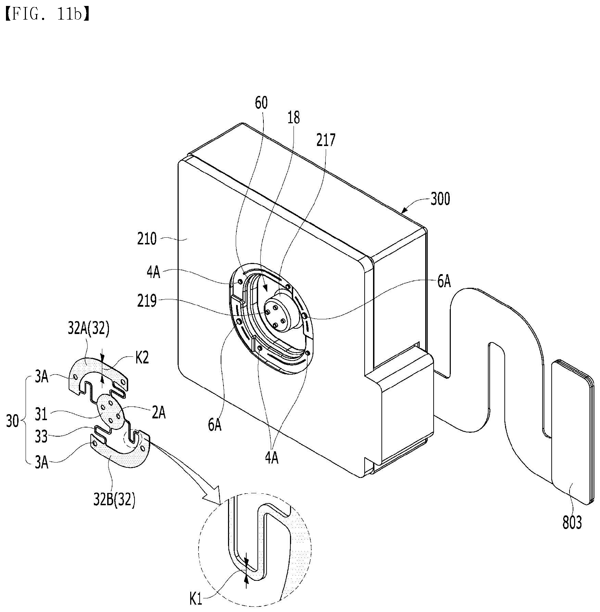

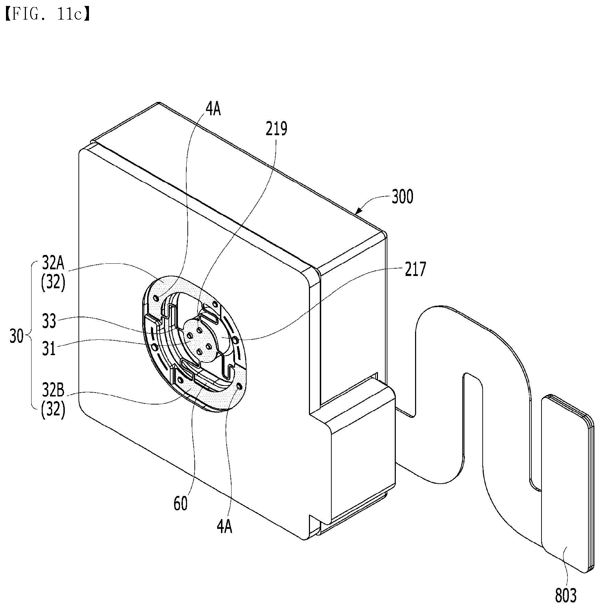

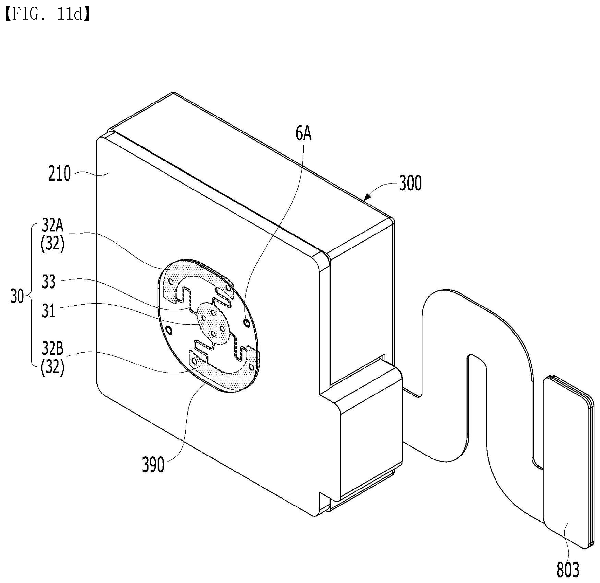

FIG. 1 is a perspective view of a camera device 200 according to an embodiment, FIG. 2A is a first exploded perspective view of the camera device 200 of FIG. 1, FIG. 2B is a second exploded perspective view of the camera device 200 of FIG. 1, FIG. 3 is a perspective view of the camera device 200 excluding a cover member 300, FIG. 4A is a cross-sectional view of the camera device 200 in direction A-B of FIG. 3, FIG. 4B is a cross-sectional view of the camera device 200 in direction C-D of FIG. 3, FIG. 4C is a cross-sectional view of the camera device 200 in direction E-F of FIG. 3, FIG. 4D is a cross-sectional view of the camera device 200 in direction G-H of FIG. 3, FIG. 4E is a cross-sectional view of the camera device 200 in direction I-J of FIG. 3, FIG. 4F is a cross-sectional view of the camera device 200 in direction K-M of FIG. 3, FIG. 4G is a cross-sectional view showing a boss 311 of the cover member 300, FIG. 5 is an exploded perspective view of a bobbin 110, a rolling member 21, and a magnet 130, FIG. 6 is a exploded perspective view of the bobbin 110, a holder 140, a sensor base 270, and a housing 210, FIG. 7A is a first exploded perspective view of the holder 140, a filter 610, the circuit board 800, and the sensor base 270, a tilting guide unit 60, and an elastic member 30, FIG. 7B is a second exploded perspective view of the holder 140, the filter 610, the circuit board 800, the sensor base 270, the tilting guide unit, and the elastic member 30 of FIG. 7A, FIG. 7C is a coupled perspective view of the sensor base 270 and the circuit board 800, FIG. 7D is a coupled perspective view of the sensor base 270, the tilting guide unit 60 and the elastic member 30, FIG. 8 is a perspective view of the holder 140, the rolling member 21, a coil 120, a position sensor 170, the circuit board 800, and the sensor base 270, FIG. 9A is a front perspective view of the tilting guide unit 60, FIG. 9B is a rear perspective view of the tilting guide unit 60, FIG. 9C is a front perspective view of a tilting guide unit 60-1 and first ball members 65A1 and 65B1 according to another embodiment, FIG. 9D is a rear perspective view of the tilting guide unit 60-1 of FIG. 9C and second ball members 66A1 and 66B1, FIG. 10A is an isolated perspective view of the housing 210, magnets 310A and 310B, a yoke 380, and a movement inhibition portion 80, FIG. 10B is a coupled perspective view of the housing 210, the magnets 310A and 310B, the yoke 380, and the movement inhibition portion 80, FIG. 10C is a rear perspective view of the housing 210, FIG. 11A is a perspective view of the cover member 300, the holder 140, the sensor base 270, the circuit board 800, the elastic member 30, the tilting guide unit 60, and a reinforcement member 70, FIG. 11B is a rear perspective view of the camera device 200 from which the elastic member 30 is separated, FIG. 11C is a rear perspective view of the camera device 200 to which the elastic member 30 is coupled, and FIG. 11D is a rear perspective view of the camera device 200 to which a shield member 390 is coupled.

Referring to FIGs. 1 to 11D, the camera device 200 may include a stationary unit, a moving unit, and a support unit configured to support the moving unit with respect to the stationary unit. The moving unit may include an AF moving unit and an OIS moving unit 100. The OIS moving unit 100 may alternatively be referred to as a "moving unit," a "shaking unit," or a "motion unit."

The stationary unit may be a stationary element. That is, the stationary unit may not be moved in the optical-axis direction. Alternatively, the stationary unit may not be moved or tilted in a direction perpendicular to the optical axis. In addition, a configuration coupled to the stationary unit may be a stationary unit.

The stationary unit may include a housing 210. The stationary unit may include a cover member 300. For example, the stationary unit may include a configuration disposed on or coupled to the housing 210 or the cover member 300. For example, the stationary unit may include at least one of a magnet 310, or a movement inhibition portion 80 disposed on the housing 210.

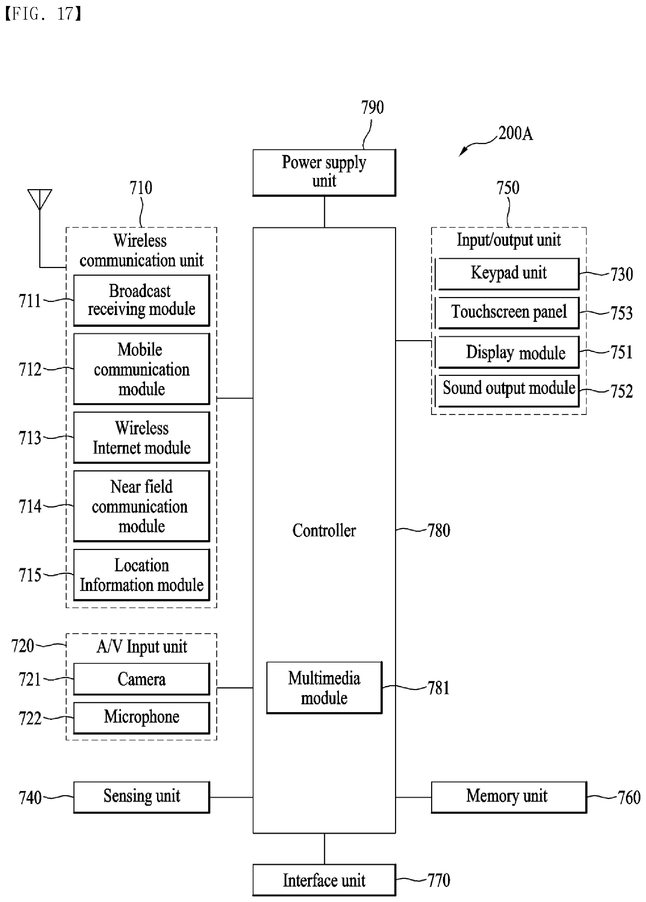

The AF moving unit may move relative to the stationary unit in the optical-axis direction. For example, the AF moving unit may include a bobbin 110. In another embodiment, the AF moving unit may further include a configuration (e.g., a magnet 130) coupled to the bobbin 110. In another embodiment, the AF moving unit may further include a lens module 400 (see FIG. 17) coupled to the bobbin 110.

The OIS moving unit 100 (see FIG. 2A) may be moved and/or tilted leftward or rightward about the first axis (e.g., pitch) that intersects the optical axis with respect to the stationary unit. In addition, the OIS moving unit may be moved and/or tilted leftward or rightward about the second axis (e.g., yaw) that intersects the optical axis with respect to the stationary unit. For example, the first axis may be perpendicular to the optical-axis direction, and the second axis may be perpendicular to the optical-axis direction and the first axis. For example, the first axis may intersect the X-axis or the Y-axis. For example, the second axis may intersect the X-axis or the Y-axis. For example, the first axis and the second axis may be perpendicular to each other. In another embodiment, for example, the first axis may be one of the X-axis and the Y-axis, and the second axis may be the other of the X-axis and the Y-axis.

For example, the OIS moving unit 100 may include the AF moving unit. In addition, the OIS moving unit may include an image sensor 810. The OIS moving unit 100 may include a circuit board 800 on which the image sensor 810 is disposed. In addition, the OIS moving unit 100 may include a sensor base 270 on which at least a part of the circuit board 800 is disposed. In addition, the OIS moving unit may include a holder 140 coupled to the sensor base 270.

The OIS moving unit 100 may be referred to as a first moving unit (or a first motion unit), and the AF moving unit may alternatively be referred to as a second moving unit (or a second motion unit). For example, the first moving unit may include the sensor base 270 and the circuit board 800.

In addition, for example, the OIS moving unit 100 may include a configuration disposed on or coupled to at least one of the holder 140, the sensor base 270, or the circuit board 800. For example, the OIS moving unit 100 may include a filter 610 disposed on the holder 140.

For example, the OIS moving unit 100 may include at least one of an image sensor 810, sensors 170 and 240, coils 120 and 230, a circuit element 815, or a controller 830 disposed on the circuit board 800.

In addition, the OIS moving unit 100 may include a moving module (or a tilting module). For example, the moving module (or the tilting module) may include the lens module 400 and the image sensor 810. Also, for example, the moving module (or the tilting module) may include the sensor base 270. Also, for example, the moving module (or the tilting module) may further include at least one of the holder 140 or the circuit board 800. For example, the moving module (or the tilting module) may be tilted about the first axis or the second axis. For example, the moving module may alternatively be referred to as a "mover."

The support unit may support the OIS moving unit with respect to the stationary unit. For example, the support unit may include a tilting guide unit 60. In another embodiment, for example, the support unit may further include a rolling member (e.g. a ball member), or a sliding member (e.g., a shaft). In addition, the support unit may include the elastic member 30 connecting the OIS moving unit to the stationary unit.

A part (or an end) of the elastic member 30 may be coupled to the OIS moving unit (e.g., the sensor base 270), and another part (the other end) of the elastic member 30 may be coupled to the stationary unit (e.g., the housing 210).

The bobbin 110 is configured to receive a lens or a lens barrel and may be disposed in the holder 140. Alternatively, the bobbin 110 may be disposed in the cover member 300. The bobbin 100 may be disposed in the cover member 300. The bobbin 110 may alternatively be referred to as a "lens holder" or a "lens carrier."

The bobbin 110 may move in the optical-axis direction. For example, the bobbin 110 may be moved in the first direction (e.g., the z-axis direction) by electromagnetic interaction between the coil 120 and the magnet 130. The coil 120 and the magnet 130 may be an AF driving unit configured to move or drive the AF moving unit. In addition, the bobbin 110 may be included in the OIS moving unit 100, and the bobbin 110 may be tilted about the first axis or the second axis or may be rotated by a predetermined angle.

Referring to FIG. 5, the bobbin 110 may include an opening 101 for coupling to the lens module 400. The opening 101 may be a hole or a hollow formed through the bobbin 110 in the optical-axis direction. The shape of the opening 101 in the bobbin 110 may match the shape of the lens module 400 mounted or coupled thereto, and may be, without being limited to, circular, oval, or polygonal.

Although not shown in FIG. 1, the bobbin 110 may include at least one stopper disposed on at least one of an upper surface or a lower surface thereof. The stopper of the bobbin 110 may protrude from the upper surface (or the lower surface) of the bobbin 110 in the first direction or an upward direction (or a downward direction), and may prevent the upper surface (or the lower surface) of the bobbin 110 from directly colliding with an inner surface of an upper plate 301 of the cover member 300 (or a lower portion of the holder 140).

The bobbin 110 may include a seating portion 115 configured to allow the magnet 130 to be seated or disposed thereon. For example, the seating portion 115 may be a recess depressed from an outer surface of the bobbin 110.

Referring to FIG. 6, the bobbin 110 may include a plurality of side surfaces 110A to 110D or outer surfaces. For example, the bobbin 110 may include a first side surface 110A, a second side surface 110B, a third side surface 110C, and a fourth side surface 110D.

For example, the second side surface 110B may face the first side surface 110A or may be opposite the first side surface 110A with respect to the optical axis OA. The third side surface 110C and the fourth side surface 110D may be located between the first side surface 110A and the second side surface 110B. For example, the fourth side surface 110D may face the third side 110C or may be opposite the third side surface 110C with respect to the optical axis OA. In FIG. 6, the bobbin 110 is shown as including four side surfaces, but in another embodiment, the bobbin may include three side surfaces or five or more side surfaces.

For example, the seating portion 115 may be formed on the first side surface 110A of the bobbin. For example, a lower portion of the seating portion 115 may be closed rather than open to a lower surface of the bobbin 110. In addition, an upper portion of the seating portion 115 may be closed rather than open to the upper surface of the bobbin 110. In another embodiment, for example, the seating portion 115 may include an opening that opens to at least one of the upper surface or the lower surface of the bobbin 110.

The bobbin 110 may include a receiving portion 112 configured to receive at least a part of the rolling member 21. For example, at least a part of the receiving portion 112 may be disposed on the first side surface 110A of the bobbin 110. The receiving portion 112 may be a recess depressed from an outer surface (e.g., the first side surface 110A) of the bobbin 110. The receiving portion 112 may alternatively be referred to as a "receiving recess," a "recess," or a "guide recess." A lubricant (e.g., grease) may be disposed in the receiving portion 112 of the bobbin 110 in order to reduce friction with the rolling member 21.

For example, the bobbin 110 may include a first receiving portion 112A configured to receive a rolling member 21A and a second receiving portion 112B configured to receive a rolling member 21B. For example, the seating portion 115 may be disposed between the first receiving portion 112A and the second receiving portion 112B.

For example, the first receiving portion 112A (or the second receiving portion 112B) may include an opening that opens to the upper surface of the bobbin 110. In another embodiment, upper portions of the receiving portions 112A and 112B may be closed rather than open to the upper surface of the bobbin 110. For example, lower portions of the receiving portions 112A and 112B may be closed rather than open to the lower surface of the bobbin 110. For example, the receiving portion 112 may be formed so as to extend in the optical-axis direction. For example, the receiving portion 112 may extend in the optical-axis direction so as to be formed between the upper surface and the lower surface of the bobbin 110.

For example, when viewed from above, the shape of the receiving portion 112 may be, without being limited to, triangular, and the shape of the receiving portion may be polygonal (e.g., quadrangular or pentagonal). Alternatively, for example, when viewed from above, the receiving portion 112 may have a "V" or "U" shape.

The magnet 130 may be disposed on, coupled to, or fixed to the bobbin 110. For example, the magnet 130 may be disposed on or coupled to the first side surface 110A of the bobbin 110. For example, the magnet 130 may be disposed in the seating portion 115 of the bobbin 110, or may be coupled to the seating portion 115. For example, the magnet 130 may be disposed between the first rolling member 21A and the second rolling member 21B.

The shape of the magnet 130 may have a shape corresponding to the first side surface 110A of the bobbin 110, such as a cuboidal shape. In another embodiment, for example, at least one of opposite ends of the magnet 130 may be tapered. For example, the magnet 130 may include a first side surface 13A facing the coil 120 and a second side surface 13B opposite the first side surface 13A. The first side surface 13A of the magnet 130 may be exposed from the first side surface 110A of the bobbin 110.

Also, in order to enhance electromagnetic force, the magnet 130 may be a four-pole magnet. For example, the magnet 130 may include two N poles and two S poles. For example, the magnet 130 may include a first magnet including an N pole and an S pole, a second magnet including an S pole and an N pole, and a partition wall disposed between the first magnet and the second magnet. The partition wall, which is a substantially non-magnetic part, may include a section with almost no polarity, which may be filled with air or made of a non-magnetic material, and may be referred to as a "neutral zone." For example, the first magnet and the second magnet may face each other in the optical-axis direction, and the first magnet and the second magnet may be disposed so as to face different polarities in the optical-axis direction.

In another embodiment, the magnet 130 may be a two-pole magnet with two different polarities and an interface naturally formed between the different polarities. For example, in another embodiment, the magnet 130 may include one N pole and one S pole. For example, the magnet 130 may be a two-pole magnet with an N pole and an S pole separated or disposed in the optical-axis direction. In another embodiment, the magnet 130 may be a two-pole magnet with an N pole and an S pole separated in a direction perpendicular to the optical axis.

The holder 140 may be disposed in the cover member 300. The holder 140 may be disposed in the housing 210. The holder 140 may include a cavity configured to receive the bobbin 110. The holder 140 may include an opening 30A corresponding to the opening 101 in the bobbin 110. For example, the opening 30A may be a through-hole or a hollow configured to expose at least a part of the bobbin 110 (or the lens module 400). In addition, for example, the opening 30A in the holder 140 may expose an image-capturing area of the image sensor 810. The holder 140 may alternatively be referred to as a "housing." For example, the opening 30A may be located in the center or a central region of the holder 140. For example, the opening 30A in the holder 140 may be a through-hole or a hollow formed through the holder 140 in the optical-axis direction. The opening 30A in the holder 140 may have a shape corresponding to the shape of the bobbin 110, such as, but not limited to, a polygonal shape (e.g., a quadrangular shape or an octagonal shape) or a circular shape (or an oval shape), and may have a variety of shapes.

The holder 140 may include a plurality of side portions 41A to 41D. The holder 140 may include a corner located between two adjacent side portions and connecting the two adjacent side portions to each other. The holder 140 may include a first side portion 41A corresponding to or opposite the first side surface 110A of the bobbin 110, a second side portion 41B corresponding to or opposite a second side surface 110B of the bobbin 110, a third side portion 41C corresponding to or opposite a third side surface 110C of the bobbin 110, and a fourth side portion 41D corresponding to or opposite a fourth side surface 110D of the bobbin 110.

The first side portion 41A (or a first side surface or a first outer surface) of the holder 140 may be located opposite the second side portion 41B (or a second side surface or a second outer surface) of the holder 140 with respect to the optical axis, and the third side portion 41C (or a third side surface or a third outer surface) of the holder 140 may be located opposite the fourth side portion 41D (or a fourth side surface or a fourth outer surface) of the holder 140 with respect to the optical axis. Each of the first to fourth side portions 41A to 41D of the holder 140 may be disposed parallel to a corresponding one of side plates 302 of the cover member 300.

Referring to FIGs. 7A and 7B, the holder 140 may include a seating portion 142A on which the coil 120 is disposed. For example, the seating portion 142A may be disposed or formed on the first side portion 41A of the holder 140. For example, the seating portion 142A may be a through-hole formed through the first side portion 41A of the holder 140. Since the seating portion 142A is a through-hole, a part of the holder 140 may not be interposed between the coil 120 and the magnet 130, which may increase electromagnetic force between the magnet 130 and the coil 120. In addition, since a part of the holder 140 may not be interposed between the position sensor 170 and the magnet 130, the output of the position sensor 170 may be increased, and sensitivity of the position sensor 170 may be improved. In addition, since a part of the holder 140 is not interposed between the coil 120 and the magnet 130, the size of the camera device may be reduced. In another embodiment, the seating portion 142A may be a recess depressed from an outer surface (or an inner surface) of the first side portion 41A of the holder 140.

The holder 140 may include a recess 142 in which at least a part of the circuit board 800, e.g., at least a part of a second substrate 802, is disposed. Since at least a part of the second substrate 802 is disposed in the recess 142 in the holder 140, the second substrate 802 and a magnetic material 82 may not protrude from the outer surface of the first side portion 41A of the holder 140, or may not protrude excessively from the outer surface of the first side portion 41A. That is, the second substrate 802 and the magnetic material 82 may protrude less than the sum of the thickness of the second substrate 802 and the thickness of the magnetic material 82 with respect to the outer surface of the first side portion 41A of the holder 140. This may prevent an increase in the size of the camera device 200 in a direction perpendicular to the optical axis.

The holder 140 may include a receiving portion 116 configured to allow at least another part of the rolling member 21 to be disposed or received therein. For example, at least a part of the receiving portion 116 may be disposed on the first side portion 41A of the holder 140. The receiving portion 116 may be a recess depressed from the inner surface of the holder 140 (e.g., the inner surface of the first side portion 41A). The receiving portion 116 may alternatively be referred to as a "receiving recess," a "recess," or a "guide recess." At least a part of the receiving portion 116 of the holder 140 may correspond to, be opposite, or overlap the receiving portion 112 of the bobbin 110.

For example, the holder 140 may include a first receiving portion 116A configured to receive at least another part of a first rolling member 21A (B1 and B2) and a second receiving portion 116B configured to receive at least another part of a second rolling member 21B (B3 and B4). For example, the seating portion 142A of the holder 140 may be disposed between the first receiving portion 116A and the second receiving portion 116B of the holder 140.

For example, the first receiving portion 116A (or the second receiving portion 116B) may include an opening that opens to the upper surface of the holder 140. In another embodiment, an upper portion of the receiving portion 116 may be closed rather than open to the upper surface of the holder 140. For example, a lower portion of the receiving portion 116 may be closed rather than open to the lower surface of the holder 140. For example, the receiving portion 116 may be formed so as to extend in the optical-axis direction. For example, the receiving portion 116 may extend in the optical-axis direction so as to be formed between the upper surface and the lower surface of the holder 140. For example, when viewed from above, the shape of the receiving portion 116 of the holder 140 may be, without being limited to, triangular, and the shape of the receiving portion may be polygonal (e.g., quadrangular or pentagonal). Alternatively, for example, when viewed from above, the receiving portion 116 may have a "V" or "U" shape.

For example, when viewed in the optical-axis direction or from above, the receiving portion 116 may be opposite or may overlap the upper plate 301 of the cover member 300. For example, at least a part of the upper plate 301 of the cover member 300 may cover the receiving portion 116.

The camera device 200 may include a rolling member 21 disposed between the bobbin 110 and the holder 140. The rolling member 21 may alternatively be referred to as a "ball member," a "ball," or a "ball bearing."

At least a part of the rolling member 21 may contact the bobbin 110 and the holder 140, and may be rolled or rotated between the bobbin 110 and the holder 140 to support movement of the bobbin 110 in the optical-axis direction. When the bobbin 110 is moved in the optical-axis direction, the rolling member 21 may reduce friction between the bobbin 110 and the holder 140. Due to rolling or rotation of the rolling member 21, the bobbin 110 may slide in the optical-axis direction in contact with the rolling member 21.

For example, the rolling member 21 may be made of a metal material, a plastic material, or a resin material, without being limited thereto. The rolling member 21 may have a circular shape, and may have a diameter of sufficient size to support the movement of the bobbin 110 in the optical-axis direction.

For example, the rolling member 21 may be disposed between the outer surface of the bobbin 110 and the inner surface of the holder 140. For example, the rolling member 21 may be disposed between the first side surface 110A of the bobbin 110 and the first side portion 41A of the holder 140. For example, the rolling member 21 may be disposed between the receiving portion 112 of the bobbin 110 and the receiving portion 116 of the holder 140. For example, at least a part of the rolling member 21 may be in contact with the receiving portion 112 of the bobbin 110, and at least another part of the rolling member 21 may be in contact with the receiving portion 116 of the holder 140.

The rolling member 21 may include at least one ball member. For example, the rolling member 21 may include two or more ball members B1 to B4. For example, the rolling member 21 may include a first rolling member 21A disposed between the first receiving portion 112A of the bobbin 110 and the first receiving portion 116A of the holder 140 and a second rolling member 21B disposed between the second receiving portion 112B of the bobbin 110 and the second receiving portion 116B of the holder 140. For example, the first rolling member 21A may include at least one ball. For example, the first rolling member 21A may include a plurality of balls B1 and B2. The second rolling member 21B may include at least one ball. For example, the second rolling member 21B may include a plurality of balls B3 and B4.

In another embodiment, each of the first rolling member 21A and the second rolling member 21B may include one ball. In another embodiment, each of the first rolling member 21A and the second rolling member 21B may include three or more balls. For example, each of the first rolling member 21A and the second rolling member 21B may include a top ball located at the uppermost side, a bottom ball located at the lowermost side, and at least one intermediate ball located between the top ball and the bottom ball. For example, the diameter of the top ball may be greater than the diameter of the intermediate ball, and the diameter of the bottom ball may be greater than the diameter of the intermediate ball. In addition, for example, the diameter of the top ball and the diameter of the bottom ball may be equal to each other. In another embodiment, the diameter of the top ball, the diameter of the bottom ball, and the diameter of the intermediate ball may be equal to each other. For example, each of the first rolling member 21A and the second rolling member 21B may include a first ball (a top ball), a second ball (a bottom ball), and a third ball (an intermediate ball) disposed in the optical-axis direction, wherein the diameter of the first ball may be greater than the diameter of the third ball. In addition, the diameter of the second ball may be greater than the diameter of the third ball. For example, the diameter of the first ball and the diameter of the third ball may be equal to each other. In another embodiment, the diameter of the first ball may be greater than the diameter of the second ball. In another embodiment, the diameter of the first ball may be less than the diameter of the second ball. In another embodiment, the diameter of the first ball, the diameter of the second ball, and the diameter of the third ball may be equal to each other. For example, each of the diameter of the first ball and the diameter of the second ball may be 0.85 mm to 0.95 mm, and the diameter of the third ball may be 0.75 mm to 0.85 mm.

In another embodiment, each of the first rolling member 21A and the second rolling member 21B may include four balls, wherein each of the diameter of the top ball and the diameter of the bottom ball may be 0.85 mm to 0.95 mm, and the diameter of each of the two intermediate balls may be 0.75 mm to 0.85 mm.

When viewed from above, the coil 120 and the magnet 130 may be located between the first rolling member 21A and the second rolling member 21B. Consequently, when the bobbin 110 moves in the optical-axis direction, titling of the bobbin 110 may be prevented, the rolling member 21 may stably support the bobbin 110, and the reliability of autofocus may be improved.

In another embodiment, each of the first rolling member 21A and the second rolling member 21B may take the form of a shaft or a roller. Another embodiment may include a sliding member (e.g., a shaft or a roller) in place of the ball members 21A and 21B.

The camera device 200 may include a magnetic material 82 configured such that attractive force acts between the magnet 130 and the magnetic material. For example, attractive force may act between the magnetic material 82 and the magnet 130 in a direction perpendicular to the optical axis (or the second direction). For example, the magnetic material 82 may be disposed on the holder 140. In another embodiment, the magnetic material 82 may be disposed on the housing 210.

The magnetic material 82 may be a material that sticks to a magnet. For example, the magnetic material 82 may be a metal material. Alternatively, for example, the magnetic material 82 may be a metal material that is magnetic. Alternatively, for example, the magnetic material 82 may be a magnet. The magnetic material 82 may alternatively be referred to as a "yoke" or a "metal plate." The magnetic material 82 may serve to enhance or increase electromagnetic force between the magnet 130 and the coil 120.

Since the magnet 130 is disposed on the bobbin 110 and the magnetic material 82 is disposed on the holder 140, the bobbin 110 may be pulled in a direction toward the holder 140 on which the magnetic material 82 is disposed by attractive force acting between the magnetic material 82 and the magnet 130. Due to attractive force between the magnetic material 82 and the magnet 130, the bobbin 110 and the holder 140 may press the rolling member 21, and the bobbin 110 may be stably supported. The magnetic material 82 and the magnet 130 may be a "pressing unit" or a "pressing member." When the bobbin 110 is moved in the optical-axis direction by the pressing unit, contact between the bobbin 110 and the rolling member 21 and between the holder 140 and the rolling member 21 may be maintained. That is, the rolling member 21 may stably support the bobbin 110 against the holder 140 due to attractive force between the magnet 130 and the magnetic material 82.

In another embodiment, the magnet 130 may be disposed on the holder 140, and the coil 120 may be disposed on the bobbin 110. For example, the magnetic material 82 may be disposed on the holder 140 along with the magnet 130. For example, the magnet 130 may be disposed between the magnetic material 82 and the coil 120. In another embodiment, the magnetic material 82 may be disposed on the bobbin 110 along with the coil 120 while being opposite the magnet 130 disposed on the holder 140. In addition, a camera device 200 according to another embodiment may further include an energizing member, such as a conductive member, configured to electrically connect the coil 120 disposed on the bobbin 110 and a second substrate 802 of the circuit board 800 to each other.

Referring to FIG. 7B, the holder 140 may include a seating portion 45A on which the filter 610 is seated or disposed. The seating portion 45A may be disposed or formed on the lower surface of the holder 140. For example, the seating portion 45A may be a recess depressed from the lower surface of the holder 140. For example, the seating portion 45A may include a bottom surface 5A having a step formed from the lower surface of the holder 140 in the optical-axis direction and a side surface 5B connecting the lower surface of the holder 140 and the bottom surface 5A of the seating portion 45A to each other. For example, the opening 30A may be formed through the bottom surface 5A of the seating portion 45A.

The holder 140 may include a depressed portion 45B disposed or formed on a corner region of an inner surface of the seating portion 45A. The depressed portion 45B may have a structure depressed in a direction from the optical axis toward the corner region of the inner surface of the seating portion 45A. The depressed portion 45B may prevent an adhesive (e.g., UV epoxy) configured to attach or couple the filter 610 to the seating portion 45A from overflowing out of the seating portion 45A.

The holder 140 may include an escape recess 46 configured to avoid spatial interference with the circuit element 815. For example, the escape recess 46 may be disposed or formed on the lower surface of the holder 140. For example, the escape recess 46 may be depressed from the lower surface of the holder 140. For example, the escape recess 46 may correspond to, be opposite, or overlap the circuit element 815 in the optical-axis direction. For example, the escape recess 46 may be located between the seating portion 45A and a side of the lower surface of the holder 140. For example, the escape recess 46 may include a first escape recess 46A and a second escape recess 46B located opposite each other with respect to the seating portion 45A or the filter 610. In another embodiment, the escape recess 46 may include four escape recesses disposed between the opening 30A and four sides of the holder 140.

The holder 140 may include a recess 47 corresponding to a protrusion 216 of the sensor base 270. The protrusion 216 of the sensor base 270 and the recess 47 in the holder 140 may serve as a guide configured to facilitate assembly of the sensor base 270 and the holder 140, and may increase the coupling area between the sensor base 270 and the holder 140 to improve coupling force between the sensor base and the holder.

For example, the recess 47 may be depressed from the lower surface of the holder 140. For example, the recess 47 may be disposed or formed on the corner or the corner region of the lower surface of the holder 140. The recess 47 in the holder 140 may have a shape corresponding to the protrusion 216 of the sensor base 270. In addition, the holder 140 may include a recess 48 or a hole corresponding to a boss 17 of the sensor base 270. For example, the boss 17 of the sensor base 270 may be inserted into or coupled to the recess 48 in the holder 140. For example, the recess 48 may be disposed or formed on a bottom surface of the recess 47 in the holder 140. For example, the recess 48 may be depressed from the bottom surface of the recess 47 in the holder 140.

In another embodiment, the holder 140 may include a protrusion protruding from the lower surface of the holder 140 instead of the recess 47, and the sensor base 270 may include a recess depressed from an upper surface of the sensor base 270 and coupled to the protrusion of the holder 140 instead of the protrusion 216. Also, in another embodiment, the boss 17 may be formed on the holder 140, and the recess 48 may be formed in the sensor base 270.

The camera device 200 may include a filter 610 disposed on or coupled to the holder 140. For example, the filter 610 may be disposed under the holder 140. The filter 610 may be disposed between the lens module 400 and the image sensor 810. For example, the filter 610 may be coupled to the lower surface of the holder 140. For example, the filter 610 may be disposed on the seating portion 45A of the holder 140.

The filter 610 may serve to block a specific frequency band component of light passing through the lens module 400 from being incident on the image sensor 810. For example, the filter 610 may be an infrared cutoff filter. For example, the filter 610 may be disposed parallel to a plane perpendicular to the optical axis OA. The filter 610 may be coupled to the holder 140 (or the seating portion 45A) via an adhesive (not shown). For example, an edge region of the filter 610 may be coupled to the bottom surface of the seating portion 45A.

For example, the adhesive may be epoxy, a thermohardening adhesive, or a UV hardening adhesive. For example, at least a part of the filter 610 may correspond to, be opposite, or overlap the lens module 400 and/or the image sensor 810 in the optical-axis direction.

The sensor base 270 may be disposed under the holder 140. The sensor base 270 may be disposed in the housing 210. The sensor base 270 may be disposed under the filter 610. For example, the sensor base 270 may be disposed under the image sensor 810. For example, the sensor base 270 may be disposed under the circuit board 800.

The sensor base 270 may be coupled to the holder 140. The sensor base 270 may alternatively be referred to as a "holder." In addition, the holder 140 may be referred to as a "first housing" (or a "first holder"), and the sensor base 270 may be referred to as a "second housing" (or a "second holder"). In addition, the holder 140 and the sensor base 270 may not be represented separately and may alternatively be referred to by a single term, e.g., a "housing" (or a holder). In another embodiment, the sensor base 270 and the holder 140 may be integrally formed. In another embodiment, the sensor base 270 and the holder 140 may be integrally formed.

For example, the sensor base 270 may include a protrusion 216 protruding from the upper surface thereof. The protrusion 216 may alternatively be referred to as a "pillar portion." For example, the protrusion 216 may correspond to, be opposite, or overlap the recess 47 in the holder 140 in the optical-axis direction. At least a part of the protrusion 216 of the sensor base 270 may be inserted into the recess 47 in the holder 140. For example, at least a part of the protrusion 216 may be coupled to the recess 47 in the holder 140. For example, at least a part of the protrusion 216 may be coupled to the recess 47 in the holder 140 via an adhesive.

For example, the sensor base 270 may include a body 270A and a protrusion 216 protruding from an upper surface of the body 270A. For example, the body 270A may have a shape corresponding to a first substrate 801 of the circuit board 800. For example, the body 270A may have a polyhedral shape, such as a hexahedral shape. For example, the protrusion 216 may be disposed on a corner region of the upper surface of the body 270A. For example, the protrusion 216 may include four protrusions 216A to 216D disposed on four corner regions of the upper surface of the body 270A. In addition, for example, the holder 140 may include four recesses 47 corresponding to the four protrusions 216A to 216D. In another embodiment, the housing 210 may include at least one protrusion disposed on at least one of the four corner regions of the upper surface of the body 270A, and the holder 140 may include at least one recess 48 corresponding to the at least one protrusion of the housing 210.

The sensor base 270 or the body 270A may include side portions 51A to 51D corresponding to, opposite, or overlapping the side portions 41A to 41D of the holder 140. The sensor base 270 may include corners disposed between the side portions 51A to 51D. For example, the sensor base 270 may include first to fourth corners.

The camera device 200 may include a gyro sensor (not shown) disposed on the circuit board 800. For example, the gyro sensor may be disposed on the first substrate 801 of the circuit board 800. For example, the gyro sensor may be disposed on, coupled to, or fixed to a lower surface of the first substrate 801. For example, the gyro sensor may output rotational angular velocity information caused by movement of the camera device 200. For example, the gyro sensor may be implemented as a 2-axis or 3-axis gyro sensor or an angular velocity sensor. For example, the gyro sensor may be conductively or electrically connected to the first substrate 801.

In another embodiment, the sensor base 270 may include a receiving portion configured to allow the gyro sensor to be disposed therein or to avoid spatial interference with the gyro sensor. For example, the receiving portion may be a through-hole formed through the sensor base 270 in the optical-axis direction or a recess depressed from the upper surface of the sensor base 270 or the upper surface of the body 270A. In this case, the receiving portion may include an opening that opens to an outer surface of the sensor base 270.

The sensor base 270 may include a receiving portion 255 in which the controller 830 is disposed or the controller 830 is received. The receiving portion 255 may be a recess depressed from the upper surface of the sensor base 270 or the upper surface of the body 270A. In another embodiment, the receiving portion 255 may be a through-hole formed through the sensor base 270 or the body 270A in the optical-axis direction.

The sensor base 270 may include seating portions 274 configured to allow the coil 230 to be disposed thereon. The seating portions 274 may be disposed or formed on the upper surface of the sensor base 270. For example, the seating portions 274 may be recesses depressed from the upper surface of the sensor base 270. For example, the sensor base 270 may include a first seating portion 274A configured to allow a first coil unit 230A to be disposed or seated thereon and a second seating portion 274B configured to allow a second coil unit 230B to be disposed or seated thereon.

For example, the first seating portion 274A may be formed adjacent to or abutting any one (e.g., 216C) of the protrusions 216A to 216D of the sensor base 270. For example, the first seating portion 274A may be a recess formed in the upper surface of the sensor base 270 adjacent to the third protrusion 216C of the sensor base 270. For example, the first seating portion 274A may include an opening that opens to outer surfaces of the side portions (e.g., 51B and 51D) adjacent to the third protrusion 216C of the sensor base 270. In another embodiment, the first seating portion 274A may be spaced apart from the outer surfaces of the side portions (e.g., 51B and 51D) of the sensor base 270, and may not include an opening that opens to the outer surfaces of the side portions 51B and 51D.

For example, the second seating portion 274B may be formed adjacent to or abutting another (e.g., 216D) of the protrusions 216A to 216D of the sensor base 270. For example, the second seating portion 274B may be a recess formed in the upper surface of the sensor base 270 adjacent to the fourth protrusion 216D of the sensor base 270. For example, the second seating portion 274B may include an opening that opens to outer surfaces of the side portions (e.g., 51B and 51C) adjacent to the fourth protrusion 216D of the sensor base 270. In another embodiment, the second seating portion 274B may be spaced apart from the outer surfaces of the side portions (e.g., 51B and 51C) of the sensor base 270, and may not include an opening that opens to the outer surfaces of the side portions 51B and 51C.

In another embodiment, the seating portion 274 of the sensor base 270 may be formed at a position corresponding to the position where the coil 230 is disposed. In another embodiment, each of the seating portions 274A and 274B may take the form of a through-hole. For example, at least one of the first and second seating portions 274A and 274B may be a hole or through-hole formed through the sensor base 270 in the optical-axis direction. In this case, a part of the sensor base 270 may not be interposed between the coil 230 and the magnet 310, which may increase electromagnetic force between the magnet 310 and the coil 230. In addition, a part of the sensor base 270 may not be interposed between the position sensor 240 and the magnet 310, which may increase the output of the position sensor 240 and may improve the sensitivity of the position sensor 240. In addition, since a part of the sensor base 270 is not interposed between the position sensor 240 and the magnet 310, the height of the camera device may be reduced. In another embodiment, each of the seating portions 274A and 274B may be an escape portion that avoids spatial interference with the entire coil 230.

The sensor base 270 may include a recess 29 in which at least a part (e.g., a boss 65) of the tilting guide unit 60 is disposed or received. The recess 29 may be formed in a lower surface of the sensor base 270. For example, the recess 29 may be depressed from the lower surface of the sensor base 270. The number of the recesses 29 may be equal to the number of bosses 65 of the tilting guide unit 60.

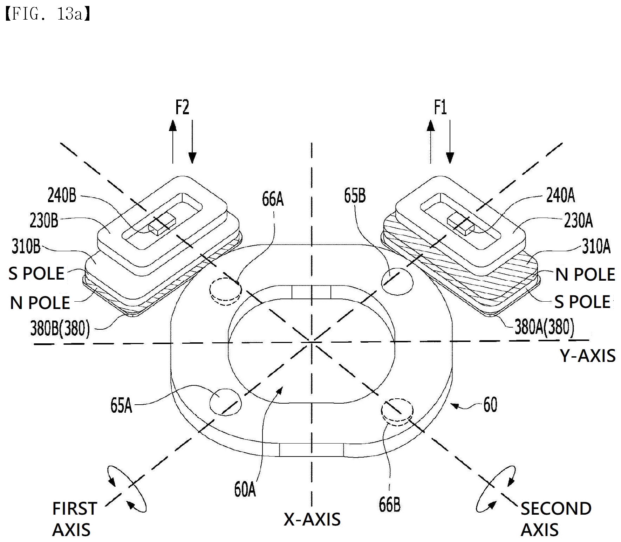

For example, the recess 29 may include two recesses 29A and 29B spaced apart from each other. For example, the two recesses 29A and 29B may be disposed spaced apart from each other in the first-axis direction (see FIG. 13A). The extension portion 217 of the sensor base 270 may be disposed between the two recesses 29A and 29B of the sensor base 270.

The recess 29 may contact the boss 65 of the tilting guide unit 60 at at least one point. For example, the recess 29 may include a bottom surface and at least one side surface connected to the bottom surface. The at least one side surface may be an inclined surface. For example, the recess 29 may include a bottom surface and a plurality of inclined surfaces. The inclined surfaces of the recess 29 may have the same shape. In another embodiment, at least one of the inclined surfaces of the recess 29 may have a different shape from the others.

Referring to FIG. 7A, the protrusion 216 of the sensor base 270 may have a recess 212A in which at least a part of the first substrate 801 of the circuit board 800 is inserted or disposed. For example, a corner of the first substrate 801 may be inserted into or coupled to the recess 212A in the protrusion 216 of the sensor base 270. For example, the recess 212A may be formed in the side surface of the protrusion 216 opposite the corner of the circuit board 800. In addition, at least one corner of the circuit board 800 may have a recess 83 configured to be inserted into or be coupled to the recess 212A in the protrusion 216. The recess 212A of the protrusion 216 of the sensor base 270 may serve as a coupling guide for coupling between the first substrate 801 and the sensor base 270, and may serve to inhibit the first substrate 801 from being rotated and/or separated from the sensor base 270.

The sensor base 270 may include the extension portion 217 extending from the lower portion or the lower surface of the sensor base 270. The extension portion 217 may protrude from the lower surface of the sensor base 270. The extension portion 217 may protrude in the downward direction from the lower surface of the sensor base 270. The extension portion 217 of the sensor base 270 may alternatively be referred to as a "protrusion," a "guide portion," a "coupling guide portion," or a "coupling portion."

The extension portion 217 may have a cylindrical shape, a circular column shape or a polyhedral shape. The lower surface of the extension portion 217 may include a flat surface for coupling to the elastic member 30. The extension portion 217 and the sensor base 270 may be formed integrally with each other. In another embodiment, the extension portion 217 may have a structure configured to be coupled to the sensor base 270.

The sensor base 270 may include an adhesion portion 219 disposed on the lower surface of the sensor base 270. The adhesion portion 219 may be disposed around the extension portion 217. The adhesion portion 219 may be disposed so as to surround the upper end of the extension portion 217. The adhesion portion 219 may be disposed so as to correspond to, be opposite or overlap the opening 60A in the tilting guide unit 60. Foreign materials or contaminants may be adhered to the adhesion portion 219. The adhesion portion 219 may be formed of an adhesive material to which foreign materials or contaminants stick or adhere. Foreign materials or contaminants introduced through the opening 60A in the tilting guide unit 60 may be adhered to the adhesion portion 219. Accordingly, it is possible to prevent introduction of the foreign materials or the contaminants to the image sensor 810 by virtue of the adhesion portion 219. The adhesion portion 219 may include an escape portion configured to avoid spatial interference with the recess 29.

In another embodiment, a recess may be formed in the lower surface of the sensor base 270 on which the adhesion portion 219 is disposed, and the adhesion portion 219 may be formed by disposing an adhesive material in the recess in the sensor base 270. Here, the recess in the sensor base 270 may serve to facilitate application of an adhesive material.

The circuit board 800 may be disposed on the sensor base 270. The circuit board 800 may be disposed on, coupled to, or fixed to the sensor base 270. For example, the circuit board 800 may be coupled to the sensor base 270 via an adhesive or a fixing member.

The circuit board 800 may be disposed on, coupled to, or fixed to the body 270A of the sensor base 270. The circuit board 800 may include at least one of a rigid printed circuit board (rigid PCB), a flexible printed circuit board (flexible PCB), or a rigid-flexible printed circuit board (rigid-flexible PCB). For example, the circuit board 800 may include a rigid printed circuit board and a flexible printed circuit board. The circuit board 800 may alternatively be referred to as a "substrate unit," a "substrate," or a "printed circuit board."

For example, the circuit board 800 may include a first substrate 801 (or a "first region") disposed on, coupled to, or fixed to the sensor base 270. For example, the first substrate 801 may be disposed on, coupled to, or fixed to the body 270A of the sensor base 270. For example, a lower side of the first substrate 801 may be coupled to the upper surface of the sensor base 270 or the upper surface of the body 270A. For example, the lower surface of the first substrate 801 may be coupled to the upper surface of the sensor base 270 or the upper surface of the body 270A via an adhesive. The circuit board 800 may include a second substrate 802 (or a "second region") connected to the first substrate 801 and disposed on, coupled to, or fixed to the holder 140. For example, the second substrate 802 may be disposed on, coupled to, or fixed to the first side portion 41A of the holder 140.

In FIG. 7A, the circuit board 800 includes a single second substrate, but in another embodiment, the circuit board 800 may include a plurality of second substrates disposed on at least one of the side portions of the holder 140.

For example, the second substrate 802 may be connected to a first side surface of the first substrate 801. For example, the second substrate 802 may be bent from the first side surface of the first substrate 801 toward the first side portion 41A of the holder 140. For example, the second substrate 802 may extend from the first substrate 801 in an upward direction. The circuit board 800 may include a third substrate 803 on which a connector 805 is disposed or provided and a fourth substrate 804 connecting the first substrate 801 and the third substrate 803 to each other.

For example, the first substrate 801 may be a rigid printed circuit board. For example, the second substrate 802 may be a flexible printed circuit board. For example, the third substrate 803 may be a rigid printed circuit board. For example, the fourth substrate 804 may be a flexible printed circuit board. For example, the rigid printed circuit board may include a plurality of conductive layers (or circuit patterns) disposed spaced apart from each other in the optical-axis direction and an insulating layer disposed between two neighboring ones of the plurality of conductive layers. For example, the flexible circuit board may include one conductive layer (or a circuit pattern), a first insulating layer disposed on the conductive layer, and a second insulating layer disposed under the conductive layer. In another embodiment, the flexible circuit board may include a first conductive layer, a second conductive layer, a first insulating layer disposed between the first and second conductive layers, a second insulating layer disposed on the first conductive layer, and a third insulating layer disposed under the second conductive layer.

The image sensor 810 may be disposed on the sensor base 270. The image sensor 810 may be disposed on the circuit board 800. The image sensor 810 may be disposed on the first substrate 801. The image sensor 810 may be disposed so as to correspond to, to be opposite, or to overlap the lens module 400 and/or the filter 610 in the optical-axis direction. For example, the image sensor 810 may be disposed on an upper surface of the circuit board 800. For example, the image sensor 810 may be disposed on an upper surface of the first substrate 801.

The image sensor 810 may include a sensor surface configured to detect light. For example, the sensor surface may include an image-capturing area. Here, the image-capturing area may alternatively be referred to as an effective area, a light receiving area, or an active area. For example, the image-capturing area may include a plurality of pixels from which an image is formed. The image-capturing area may correspond to, be opposite, or overlap the lens module 400 and/or the filter 610 in the optical-axis direction.

The image sensor 810 may be conductively or electrically connected to the first substrate 801. For example, the image sensor 810 may be conductively connected to the first substrate 801 via a conductive member, such as a wire (not shown). For example, the first substrate 801 of the circuit board 800 may include at least one pad or terminal (not shown) conductively connected to a wire conductively connected to the image sensor 810. For example, the pad or terminal conductively connected to the wire may be disposed on the upper surface of the first substrate 801.

The camera device 200 may include a circuit element 815 disposed on the first substrate 801. For example, the circuit element 815 may include at least one of a passive element (e.g., a capacitor or a resistor), an active element (e.g., a sensor, a memory, or a driver IC), or a circuit pattern. For example, in order to avoid spatial interference with the image sensor 810, the circuit element 815 may be disposed between the image sensor 810 and an edge (e.g., a side) of the first substrate 801.

The camera device 200 may include a controller 830 disposed on the circuit board 800. For example, the controller 830 may be a driver IC. For example, the controller 830 may be disposed on the first substrate 801. For example, the controller 830 may be disposed under the first substrate 801. For example, the controller 830 may be disposed on, coupled to, or fixed to the lower surface of the first substrate 801. For example, the controller 830 may be conductively or electrically connected to the first substrate 801.

For example, the controller 830 may be conductively or electrically coupled to the coil 120, and may supply a drive signal to the first coil 120. The controller 830 may be conductively or electrically connected to the coil units 230A and 230B of the coil 230, may supply a first drive signal to the first coil unit 230A, and may supply a second drive signal to the second coil unit 230B.

The controller 830 may be conductively or electrically connected to the position sensor 170. In addition, the controller 830 may be conductively or electrically connected to the position sensor 240. For example, the controller 830 may receive an output signal from the position sensor 170, and may control a drive signal (e.g., drive current) that is supplied to the coil 120 using the output signal from the position sensor 170.

For example, the controller 830 may receive an output signal from the position sensor 240, and may control a drive signal (e.g., drive current) that is supplied to the coil 230 using the output signal from the position sensor 240. For example, the controller 830 may receive an output signal from the first sensor 240A, and may control a first drive signal (e.g., first drive current) that is supplied to the first coil unit 230A using the output signal from the first sensor 240A. In addition, the controller 830 may receive an output signal from the second sensor 240B, and may control a second drive signal (e.g., second drive current) that is supplied to the second coil unit 230B using the output signal from the second sensor 240B.

The coils 120 and 230 may be disposed on, coupled to, or fixed to the circuit board 800. For example, the coil 120 may be conductively or electrically connected to the circuit board 800 (e.g., the second substrate 802) via a conductive adhesive or a solder. For example, the coil 230 may be conductively or electrically connected to the circuit board 800 (e.g., the first substrate 801) via a conductive adhesive or a solder.

The first coil unit 230A and the second coil unit 230B may be disposed on or coupled to the first substrate 801, and may be conductively or electrically connected to the first substrate 801. Referring to FIG. 7B, for example, the first coil unit 230A and the second coil unit 230B may be disposed on, coupled to, or fixed to the lower surface of the first substrate 801. For example, the first coil unit 230A and the second coil unit 230B may be disposed between the first substrate 801 and the sensor base 270.

For example, the first and second coil units 230A and 230B may be disposed adjacent to two adjacent ones of the four corners of the first substrate 801. For example, for diagonal driving, the first coil unit 230A may be disposed adjacent to one corner of the first substrate 801 corresponding to the protrusion 216C of the sensor base 270 (or one corner of the sensor base 270), and the second coil unit 230B may be disposed adjacent to another corner of the first substrate 801 corresponding to the protrusion 216D of the sensor base 270 (or another corner of the sensor base 270). For example, the first coil unit 230A may be disposed adjacent to the protrusion 216C of the sensor base 270, and the second coil unit 230B may be disposed adjacent to the protrusion 216D of the sensor base 270.

In another embodiment, the first and second coil units 230A and 230B may be disposed adjacent to two adjacent ones of the four sides of the first substrate 801.

The coil 120 may move the AF moving unit (e.g., the bobbin) in the optical-axis direction by interaction with the magnet 130. The coil 120 may be disposed on the holder 140. The coil 120 may be disposed on the second substrate 902.

The coil 120 may be disposed so as to correspond to, to be opposite, or to overlap the magnet 130 in a direction perpendicular to the optical axis. For example, the coil 120 may be disposed on the holder 140 so as to correspond to, to be opposite, or to overlap the magnet 130 in the second direction (e.g., the X-axis direction) or in a direction from the first side portion 41A to the second side portion 41B of the holder 140. For example, the coil 120 may be disposed on the first side portion 41A of the holder 140. The coil 120 may be disposed in the seating portion 142A of the holder 140.

For example, the coil 120 may include a hollow or a hole. For example, the coil 120 may have a ring shape or a closed curved shape. For example, the coil 120 may have a ring shape wound around a straight line perpendicular to the optical axis OA and perpendicular to the outer surface of the first side portion 41A of the holder 140 as an axis. For example, the coil 120 may have a ring shape configured such that the length thereof in a transverse direction (or the third direction) is greater than the length thereof in a longitudinal direction (or the optical-axis direction).

A drive signal may be applied to the coil 120 in order to generate electromagnetic force by electromagnetic interaction with the magnet 130. For example, a drive signal from the circuit board 800 or the controller 830 may be applied to the coil 120. The drive signal supplied to the coil 120 may be direct current, and may take the form of voltage or current. Alternatively, in another embodiment, for example, the drive signal provided to the coil 120 may include at least one of a direct current signal or an alternating current signal.

The coil 120, to which the drive signal has been supplied, may electromagnetically interact with the magnet 130 disposed on the bobbin 110, and the AF moving unit may be moved in the first direction by electromagnetic force due to electromagnetic interaction between the coil 120 and the magnet 130. The magnitude and/or the direction of the drive signal (e.g., drive current) may be adjusted by the controller 830, whereby movement of the AF moving unit in the first direction may be controlled, and therefore the autofocus function may be performed.

For AF feedback driving, the camera device 200 may include a position sensor 170. The position sensor 170 may detect the position or displacement of the bobbin 110 in the optical-axis direction. For example, the position sensor 170 may detect the magnet 130 disposed on the bobbin 110. In another embodiment, a sensing magnet separate from the magnet 130 and opposite the position sensor 170 may be disposed on the bobbin, and the position sensor 170 may detect the sensing magnet or a magnetic field of the sensing magnet to detect the displacement of the bobbin.

For example, the position sensor 170 may be disposed on the holder 140. For example, the position sensor 170 may be disposed on the first side portion 41A of the holder 140. For example, the position sensor 170 may be disposed in the seating portion 142A of the holder 140. For example, the position sensor 170 may be disposed in a hollow of the coil 120. In another embodiment, the position sensor 170 may be disposed outside the hollow of the coil 120.

For example, the position sensor 170 may be coupled to the circuit board 800. For example, the position sensor may be coupled to the circuit board 800 via a conductive adhesive or a solder. For example, the position sensor 170 may be conductively or electrically connected to the second substrate 802. For example, the position sensor 170 may be conductively or electrically connected to the second substrate 802 via a conductive adhesive or a solder.

For example, the position sensor 170 may be disposed on, coupled to, or fixed to a first surface of the second substrate 802. For example, the position sensor 170 may correspond to, be opposite, or overlap the magnet 130 in a direction perpendicular to the optical axis or in the second direction.

The position sensor 170 may detect the displacement of the bobbin 110 in the optical-axis direction. For example, the position sensor 170 may detect a magnetic field of the magnet 130 mounted on the bobbin 110 or the intensity of the magnetic field based on movement of the bobbin 110, and may output an output signal.

For example, the position sensor 170 may be a Hall sensor. In this case, the position sensor 170 may include two input terminals to which a drive signal is applied and two output terminals from which an output signal is output. The circuit board 800 may be conductively or electrically connected to the two input terminals and two output terminals of the position sensor 170. The circuit board 800 or the controller 830 may supply a drive signal to the two input terminals of the position sensor 170, and an output signal from the two output terminals of the position sensor 170 may be transmitted to the circuit board 800 or the controller 830.

In another embodiment, the position sensor 170 may be implemented in the form of a driver IC including a Hall sensor. For example, when the position sensor 170 is a driver IC including a Hall sensor, the position sensor 170 may transmit and receive data to and from the outside through data communication using a protocol, such as I2C communication.

For example, when the position sensor 170 is a driver IC including a Hall sensor, the position sensor 170 may include first and second terminals to which power or a drive signal is input, a third terminal for a clock signal, a fourth terminal for a data signal, and fifth and sixth terminals configured to supply a drive signal to the coil 120. The first to sixth terminals of the position sensor 170 may be conductively or electrically connected to the circuit board 800.

The coil 230 may tilt the OIS moving unit about the first axis or the second axis, or may rotate the OIS moving unit by a predetermined angle, due to interaction with the magnet 310 disposed on the housing 210, which is a stationary unit.

The coil 230 may be opposite, may correspond to, or may overlap the magnet 310 in the optical-axis direction. The coil 230 may include a first coil unit 230A that corresponds to, is opposite, or overlaps the first magnet unit 310A in the optical-axis direction and a second coil unit 230B that corresponds to, is opposite, or overlaps the second magnet unit 310B in the optical-axis direction. For example, the coil 230 may not overlap the magnet 310 in a direction perpendicular to the optical axis.

For example, the coil 230 may be disposed lower than the coil 120. For example, the first coil unit 230A may be disposed in the first seating portion 274A of the sensor base 270, and the second coil unit 230B may be disposed in the second seating portion 274B of the sensor base 270.

For example, each of the first and second coil units 230A and 230B may include a hollow or a hole. For example, each of the first and second coil units 230A and 230B may have a ring shape or a closed curved shape. For example, each of the first coil unit 230A and the second coil unit 230B may have a ring shape wound around a straight line parallel to the optical axis OA and perpendicular to the upper surface of the sensor base 270 or the upper surface of the body 270A as an axis.

For example, referring to FIG. 13A, the first coil unit 230A may have a ring shape configured such that the length thereof in the transverse direction (or the direction parallel to the second axis) is greater than the length thereof in the longitudinal direction (or the direction parallel to the first axis). For example, the second coil unit 230B may have a ring shape configured such that the length thereof in the longitudinal direction (or the direction parallel to the first axis) is greater than the length thereof in the transverse direction (or the direction parallel to the second axis).

For OIS feedback driving, the camera device 200 may include a position sensor 240. The position sensor 240 may detect displacement or angular displacement of the OIS moving unit 100 due to tilting or rotation of the OIS moving unit. The position sensor 240 may detect a magnetic field of the magnet 310.

For example, the position sensor 240 may include a first sensor 240A and a second sensor 240B. For example, at least a part of the first sensor 240A may correspond to, be opposite, or overlap the first magnet unit 310A in the optical-axis direction. For example, the center of the first sensor 240A may overlap the first magnet unit 310A in the optical-axis direction. For example, the first sensor 240A may detect the first magnet unit 310A (or a magnetic field of the first magnet unit 310A). For example, the first sensor 240A may detect a tilted angle of the OIS moving unit 100 relative to the second axis. In another embodiment, the first sensor 240A may not overlap the first and second magnet units 310A and 310B in the optical-axis direction.

At least a part of the second sensor 240B may correspond to, be opposite, or overlap the second magnet unit 310B in the optical-axis direction. For example, the center of the second sensor 240B may overlap the second magnet unit 310B in the optical-axis direction. For example, the second sensor 240B may detect the second magnet unit 310B (or a magnetic field of the second magnet unit 310B). For example, the second sensor 240B may detect a tilted angle of the OIS moving unit 100 relative to the first axis. In another embodiment, the second sensor 240B may not overlap the second magnet unit 310B in the optical-axis direction.

For example, the first and second sensors 240A and 240B may be disposed on, coupled to, or fixed to the first substrate 801 of the circuit board 800. For example, the first and second sensors 240A and 240B may be conductively or electrically connected to the first substrate 801.

For example, the first sensor 240A may be disposed in the hollow (or the hole) in the first coil unit 230A, and the second sensor 240B may be disposed in the hollow (or the hole) in the second coil unit 230B. In another embodiment, the first sensor 240A may be disposed outside the hollow (or the hole) in the first coil unit 230A, and the second sensor 240B may be disposed outside the hollow (or the hole) in the second coil unit 230B.

For example, each of the first sensor 240A and the second sensor 240B may be a Hall sensor including first and second input terminals and first and second output terminals. For example, the first and second input terminals and the first and second output terminals of the first sensor 240A may be conductively or electrically connected to the first substrate 801, and the first and second input terminals and the first and second output terminals of the second sensor 240B may be conductively or electrically connected to the first substrate 801.

For example, the first substrate 801 or the controller 830 may supply or apply a first drive signal to the first and second input terminals of the first sensor 240A. The first sensor 240A may output a first output signal, and the first output signal may be transmitted to the first substrate 801 or the controller 830. The first output signal may be output to the first and second output terminals of the first sensor 240A.

For example, the first substrate 801 or the controller 830 may supply or apply a second drive signal to the first and second input terminals of the second sensor 240B. The second sensor 240B may output a second output signal, and the second output signal may be transmitted to the first substrate 801 or the controller 830. The second output signal may be output to the first and second output terminals of the second sensor 240B.

The controller 830 may control the first drive signal supplied to the first coil unit 230A and the second drive signal supplied to the second coil unit 230B using the first output signal from the first sensor 240A and the output signal from the second sensor 240B.

In another embodiment, each of the first sensor 240A and the second sensor 240B may be a driver IC including a Hall sensor. A description of an embodiment in which the position sensor 170 is a driver IC including a Hall sensor may be applied or analogically applied to an embodiment in which each of the first and second sensors 240A and 240B is a driver IC including a Hall sensor.

The camera device 200 may include a magnetic material 82 disposed opposite at least one of the coil 120 or the magnet 130. For example, the magnetic material 82 may be disposed on the holder 140 or on the second substrate 802 of the circuit board 800. For example, the magnetic material 82 may be disposed so as to correspond to, to be opposite, or to overlap the magnet 130 in the second direction. In addition, for example, the magnetic material 82 may be disposed so as to correspond to, to be opposite, or to overlap the coil 120 in the second direction. For example, the coil 120 may be disposed on the first surface of the second substrate 802 that faces the magnet 130, and the magnetic material 82 may be disposed on a second surface of the second substrate 802, which is opposite the first surface of the second substrate 802. The magnetic material 82 may be coupled, attached, or fixed to the second substrate 802 via an adhesive.

The camera device 200 may include a heat dissipation member (not shown) coupled to at least one of the circuit board 800 or the sensor base 270. For example, the heat dissipation member may be disposed under the circuit board 800. For example, the heat dissipation member 280 may be disposed between the circuit board 800 and the sensor base 270. The heat dissipation member may be a plate-shaped member having a predetermined thickness and hardness. In addition, the heat dissipation member may dissipate heat generated from a heat source of the circuit board 800 to the outside and may improve heat dissipation efficiency. For example, the heat dissipation member may be a metal material or a metal plate.

Referring to FIGs. 10A and 10B, the housing 210 may include a cavity configured to receive the OIS moving unit 100. For example, the housing 210 may have a shape corresponding to the OIS moving unit 100, e.g., the holder 140 or the sensor base 270, such as, but not limited to, a polygonal shape (e.g., a quadrangular shape or an octagonal shape) or a circular shape (or an oval shape), and may have a variety of shapes. The housing 210 may alternatively be referred to as a "base" or a "frame."

The housing 210 may include a plurality of side portions 71A to 71D corresponding to the side portions 41A to 41D of the holder 140 or the side portions 51A to 51D of the sensor base 270. The housing 210 may include a corner located between two adjacent side portions.

In addition, the housing 210 may include a lower portion 42 (or a lower plate) located under the side portions 71A to 71D. The lower portion 42 may be connected to a lower side of each of the side portions 71A to 71D. For example, the lower portion 42 may alternatively be referred to as a "bottom portion," a "bottom surface," or a "body." For example, the side portions 71A to 71D may protrude upward from the lower portion 42.

The housing 210 has a first side portion 71A corresponding to, opposite, or overlapping the first side portion 41A of the holder 140, a second side portion 71B corresponding to, opposite, or overlapping the second side portion 41B of the holder 140, a third side portion 71C corresponding to, opposite, or overlapping the third side portion 41C of the holder 140, and a fourth side portion 71D corresponding to, opposite, or overlapping the fourth side portion 41D of the holder 140.

The first side portion 71A (or a first side surface or a first outer surface) of the housing 210 may be located opposite the second side portion 71B (or a second side surface or a second outer surface) of the housing 210, and the third side portion 71C (or a third side surface or a third outer surface) of the housing 210 may be located opposite the fourth side portion 71D (or a fourth side surface or a fourth outer surface) of the housing 210. For example, each of the first to fourth side portions 71A to 71D of the housing 210 may be disposed parallel to a corresponding one of the side plates 302 of the cover member 300.

The housing 210 may include a step 411 disposed on a lower portion of at least one of the side portions 71A to 71D. For example, the step 411 may protrude from an outer surface of each of the side portions 71A to 71D of the housing 210 in a direction perpendicular to the optical axis. For example, the step 411 may be opposite or may overlap the side plate 302 of the cover member 300 in the optical-axis direction. For example, the step 411 may be coupled to the side plate 302 of the cover member 300 via an adhesive.

The housing 210 may include seating portions 141A and 141B on which the magnet 310 is disposed. For example, each of the seating portions 141A and 141B may be a recess formed in the lower portion 42 of the housing 210. In another embodiment, each of the seating portions 141A and 141B may be a through-hole formed through the lower portion 42 of the housing 210.

The housing 210 may include a first seating portion 141A on which the first magnet unit 310A is disposed and a second seating portion 141B on which the second magnet unit 310B is disposed. For example, the first seating portion 141A may be disposed or formed in a first region of the lower portion 42 of the housing 210 adjacent to one of the four corners of the housing 210. For example, the one corner of the housing 210 may be a corner corresponding to or adjacent to the protrusion 216C of the sensor base 270.

For example, the second seating portion 141B may be disposed or formed in a second region of the lower portion 42 of the housing 210 adjacent to another of the four corners of the housing 210. For example, the other corner of the housing 210 may be a corner corresponding to or adjacent to the protrusion 216D of the sensor base 270.

In another embodiment, the first and second seating portions may be disposed at positions corresponding to the positions where the coil units 230A and 230B and the magnet units 310A and 310B are disposed. For example, in another embodiment, the first seating portion may be formed adjacent to the first side portion (or the second side portion) of the housing 210, and the second seating portion may be formed adjacent to the third side portion (or the fourth side portion) of the housing 210.

The magnet 310 may be disposed on or coupled to the housing 210. For example, the magnet 310 may include a first magnet unit 310A and a second magnet unit 310B disposed on the lower portion 42 of the housing 210. For example, the magnet 310 may be disposed under the coil 230.

For example, the first magnet unit 310A may be disposed so as to correspond to, to be opposite, or to overlap the first coil unit 230A in the optical-axis direction. The second magnet unit 310B may be disposed so as to correspond to, to be opposite, or to overlap the second coil unit 230B in the optical-axis direction.

For example, the first magnet unit 310A and the second magnet unit 310B may be disposed so as to be misaligned with each other in the first-axis direction (or the direction parallel to the first axis) or the second-axis direction (or the direction parallel to the second axis). For example, when viewed from above or in the optical-axis direction, the first magnet unit 310A and the second magnet unit 310B may be disposed on the housing 210 so as not to overlap each other in the direction parallel to the first axis or the direction parallel to the second axis. For example, the first magnet unit 310A and the second magnet unit 310B may be disposed on the lower portion 42 of the housing 210 so as not to overlap each other in the direction parallel to the first axis or the direction parallel to the second axis.

In another embodiment, the first magnet unit and the second magnet unit may be disposed so as to be misaligned with each other in the first horizontal direction (or the X-axis direction) or the second horizontal direction (or the Y-axis direction). For example, in another embodiment, when viewed from above, the first magnet unit may be disposed so as to overlap the first horizontal axis (or the X-axis), and the second magnet unit may be disposed so as to overlap the second horizontal axis (or the X-axis).

Each of the first magnet unit 310A and the second magnet unit 310B may be a two-pole magnet including one N pole and one S pole. For example, each of the first magnet unit 310A and the second magnet unit 310B may be a magnet with an N pole and an S pole separated or disposed in the optical-axis direction. For example, the N pole (or the S pole) of each of the first magnet unit 310A and the second magnet unit 310B may be located above the S pole (or the N pole) thereof.

For example, a first surface of the magnet 310 that faces or is opposite the coil 230 in the optical-axis direction may have an S pole (or an N pole). A second surface of the magnet 310, which is opposite the first surface, may have an N pole (or an S pole).

In the embodiment of FIGs. 2A and 2B, the coil 230 and the magnet 310 face each other in the optical-axis direction. However, in another embodiment, the coil 230 and the magnet 310 may be disposed so as to face each other in a direction perpendicular to the optical-axis direction (e.g., the second direction or the third direction). In this case, the magnet units 310A and 310B may be disposed on two adjacent ones of the side portions 71A to 71D of the housing 210, and the coil units 230A and 230B may be disposed on the moving unit (e.g., the holder 140) so as to face the magnet units 310A and 310B in a direction perpendicular to the optical axis. In this case, the circuit board 800 may include an additional substrate (or an extension region) connected to the first substrate 801 and configured to allow the coil units 230A and 230B to be disposed thereon. In another embodiment, the position sensor 240 may be disposed on two side portions of the housing 210 together with the coil 230, and may be disposed on or coupled to and electrically connected to the additional substrate (or the extension region) of the circuit board 800. In another embodiment, the magnet units 310A and 310B may be disposed on two adjacent ones of the corners of the housing 210.

Referring to FIGs. 10A and 13A, the camera device 200 may include a yoke 380 disposed on the magnet 310. The yoke 380 may reduce or inhibit leakage flux from the magnet 310, increase the electromagnetic force between the magnet 310 and the coil 230, and enhance the drive force for OIS operation. The yoke 380 may be made of a material that sticks to a magnet. For example, the yoke 380 may be made of a metal material. Alternatively, for example, the yoke 380 may be made of a magnetic metal material. Alternatively, for example, the yoke 380 may be a magnetic material, such as a magnet.

The yoke 380 may be disposed on the housing 210. For example, the yoke 380 may be disposed between the housing 210 and the magnet 310. For example, the yoke 380 may be disposed in the seating portions 141A and 141B of the housing 210. For example, the yoke 380 may face the magnet 310 or the coil 230. For example, the yoke 380 may be disposed on the second surface (e.g., the lower surface) of the magnet 310 opposite the first surface (e.g., the upper surface) of the magnet 310 facing the coil 230. The yoke 380 may contact or be attached to the magnet 310. For example, the yoke 380 may be adhered to the magnet 310.

For example, the yoke 380 may be coupled to the housing 210 by insert injection molding. When the yoke 380 and the housing 210 are coupled to each other by insert injection molding, at least a part of the yoke 380 may be located in the housing 210, and at least another part of the yoke 380 may be exposed from the housing 210 and may be coupled or attached to the magnet 310.

In another embodiment, the yoke 380 may be disposed in the seating portions 141A and 141B of the housing 210 by an adhesive. The yoke 380 may include a first yoke 380A disposed on the first magnet unit 310A and a second yoke 380B disposed on the second magnet unit 310B. For example, the first yoke 380A may be disposed in the first seating portion 141A of the housing 210, and the second yoke 380B may be disposed in the second seating portion 141B of the housing 210. Since the magnet 310 can be adhered to the yoke 380, assemblability between the magnet 310 and the housing 210 may be improved or the assembly between the magnet 310 and the housing 210 may be facilitated when assembling the magnet 310 to the housing 210.

In another embodiment, each of the first magnet unit 310A and the second magnet unit 310B may be a magnet with one N pole and one S pole separated or disposed in a direction perpendicular to the optical-axis direction. In another embodiment, each of the first magnet unit 310A and the second magnet unit 310B may be a magnet including two N poles and two S poles. Electromagnetic force may be generated between the first and second magnet units 310A and 310B and the first and second coil units 230A and 230B, and the generated electromagnetic force may cause first-axis tilting or second-axis tilting of the OIS moving unit.

In another embodiment, the positions of the magnet 310 and the coil 230 in FIG. 6 may be interchanged. For example, the magnet 310 may be disposed on the moving unit 100 (e.g., the sensor base 270), and the coil 230 may be disposed on the stationary unit (e.g., the housing 210). In this case, the yoke of FIG. 13A may be disposed on the sensor base 270. For example, the yoke may be disposed on an upper surface of the magnet 310. A camera device according to another embodiment may include a circuit board (referred to as a "second circuit board") provided separately from the circuit board 800 (referred to as a "first circuit board") and disposed on the stationary unit (e.g., the housing 210). The coil 230 may be disposed on or coupled to the second circuit board. The coil 230 may be conductively or electrically connected to the second circuit board. For example, the second circuit board may be disposed under the housing 210. The coil 230 may be disposed on the seating portion 141 of the housing 140, wherein the seating portion 141 may be a through-hole formed through the lower portion 42 of the housing 140. The position sensor 240 may be disposed on or coupled to the second circuit board. For example, the first sensor 240A may be disposed in the hollow of the first coil unit 230A, and the second sensor 240B may be disposed in the hollow of the second coil unit 230B. The position sensor 240 may be conductively or electrically connected to the second circuit board. A camera device according to another embodiment may include a controller (referred to as a "second controller") separate from the controller 830 (referred to as a "first controller"). The second controller may be disposed on the second circuit board. The second controller may be conductively or electrically connected to the second circuit board. For example, the second controller may be a driver IC. For example, the second controller may be disposed on, coupled to, or fixed to a first surface of the second circuit board. The first surface of the second circuit board may be a surface facing the magnet 310 or the OIS moving unit, e.g., the lens module. The second coil 230 may be disposed on the first surface of the second circuit board. The second controller may be conductively or electrically connected to the coil 230. A drive signal may be supplied to the coil 230. For example, the second controller may be electrically connected to the coil units 230A and 230B, may supply a first drive signal to the first coil unit 230A, and may supply a second drive signal to the second coil unit 230B. The second controller may be conductively or electrically connected to the position sensor 240. For example, the second controller may supply power or a drive signal to the position sensor 240. For example, the second controller may supply power or a drive signal to each of the first sensor 240A and the second sensor 240B. The controller 830 may receive an output signal from the position sensor 240 and may control a drive signal (e.g., drive current) supplied to the coil 230 using the output signal from the position sensor 240. For example, the second controller may receive an output signal from the first sensor 240A, and may control a first drive signal (e.g., first drive current) supplied to the first coil unit 230A using the output signal from the first sensor 240A. In addition, the second controller may receive an output signal from the second sensor 240B, and may control a second drive signal (e.g., second drive current) supplied to the second coil unit 230B using the output signal from the second sensor 240B. The second circuit board may include a terminal unit. The terminal unit may include a plurality of terminals. For example, the plurality of terminals of the second circuit board may be exposed from the side plate 302 of the cover member 300. At least one of the plurality of terminals may be conductively or electrically connected to the second controller.

In addition, a second circuit board according to another embodiment may include a first substrate disposed on the housing 210 and a second substrate (or an extension substrate) extending from the first substrate. A connector may be provided on the second substrate. In a second circuit board according to another embodiment, the terminal unit may be omitted, and the second controller may be conductively or electrically connected to the connector of the second circuit board. Alternatively, in another embodiment, the second controller may be omitted, and the coil 230 or the position sensor 240 may be conductively or electrically connected to the connector of the second circuit board. The connector of the second circuit board may be coupled or connected to another connector outside the camera device 200 or to an external device. The connector of the second circuit board connected to the other connector outside the camera device may correspond to a stationary unit that does not move during OIS operation.

The stationary unit (e.g., the housing 210) may include a receiving portion 49 in which at least a part of the elastic member 30 is received or disposed. The receiving portion 49 may be depressed from the lower surface of the stationary unit (e.g., the housing 210).

For example, at least a part of the elastic member 30 may be coupled to the receiving portion 49. The receiving portion 49 may be disposed on or be formed in the lower surface 210A of the housing 210. The receiving portion 49 may be disposed on or be formed in the lower portion 42 of the housing 210. The receiving portion 49 may be disposed on or be formed in the lower surface 210A of the lower portion 42 of the housing 210. The receiving portion 49 may be disposed around an opening 18 in the housing 210. The receiving portion 49 may be formed in a region of the lower surface 210A of the lower portion 420 of the housing 210 adjacent to the opening 18 in the housing 210.

For example, the receiving portion 49 may be a recess depressed from the lower surface of the lower portion 42 of the housing 210. For example, the receiving portion 49 may include a bottom surface 49A, which is stepped with respect to the lower surface 210A of the housing 210, and a side surface (or a side wall) 49B disposed between the bottom surface 49A and the lower surface 210A of the housing 210.

The receiving portion 49 may correspond to, be opposite, or overlap a second coupling portion 32 of the elastic member 30. The second coupling portion 32 of the elastic member 30 may be disposed in the receiving portion 49. The second coupling portion 32 of the elastic member 30 may be coupled to the receiving portion 49. The second coupling portion 32 may be coupled to the receiving portion 49 via an adhesive. The second coupling portion 32 of the elastic member 30 may be coupled to the bottom surface 49A of the receiving portion 49. A groove 79A may be formed in the bottom surface 49A so as to allow the adhesive to easily flow therethrough. In addition, the groove 79A may suppress introduction of the adhesive into the opening 60A in the housing 210.

At least one boss 4A, configured to be coupled to a through hole 3A in the second coupling portion 32 of the elastic member 30, may be formed on the bottom surface 49A of the receiving portion 49.

The housing 210 may include a seating portion 69 in which at least a part of the tilting guide unit 60 is disposed or at least a part of the tilting guide unit 60 is received. For example, the seating portion 69 may be a recess depressed from the bottom surface of the housing 210 or the upper surface of the lower portion 42.

For example, the seating portion 69 may have a shape that corresponds to or coincides with the shape of the tilting guide unit 60. For example, the seating portion 69 may include a bottom surface 69A having a step formed from the upper surface of the lower portion 42 of the housing 210 in the optical-axis direction and a side surface 69B connecting the bottom surface 69A and the upper surface of the lower portion 42 to each other. The side surface 69B may be referred to as a "partition wall" or a "side wall." For example, the bottom surface 69A of the seating portion 69 may be located lower than the upper surface of the lower portion 42 of the housing 210. In another embodiment, the seating portion 69 may be omitted.

Since the housing 210 is provided at the upper surface of the lower portion 42 thereof with a seating portion 69 in which at least a part of the tilting guide unit 60 is inserted or disposed, the lower portion 42 of the housing 210 may include a partition wall 69B (or a guide portion) disposed around the tilting guide unit 60. The tilting guide unit 60 may be spaced apart from the partition wall 69B of the housing 210, and the partition wall 69B may be disposed so as to surround the tilting guide unit 60. The partition wall 69B of the housing 210 may prevent the tilting guide unit 60 from being separated or dislodged from the housing 210. In another embodiment, at least a part of the tilting guide unit 60 may be in contact with the partition wall 69B of the housing 210.

For example, at least a part of the first magnet unit 310A may correspond to, be opposite, or overlap the tilting guide unit 60 in a direction parallel to the first axis. In addition, at least a part of the second magnet unit 310B may correspond to, be opposite, or overlap the tilting guide unit 60 in a direction parallel to the second axis.

The housing 210 may include a recess 55 in which at least a part of the boss 66 of the tilting guide unit 60 is disposed or in which at least a part of the boss 66 is received. The recess 55 in the housing 210 may be formed in the upper surface of the lower portion 42 of the housing 210. For example, the recess 55 may be depressed from the upper surface of the lower portion 42 of the housing 210. For example, the recess 55 may be formed in the bottom surface 69A of the seating portion 69 of the housing 210. For example, the recess 55 may be depressed from the bottom surface 69A of the seating portion 69 of the housing 210. The number of the recesses 55 in the housing 210 may be equal to the number of the bosses 66 of the tilting guide unit 60.

For example, the recess 55 may include two recesses 55A and 55B spaced apart from each other. For example, the two recesses 55A and 55B may be disposed spaced apart from each other in the second-axis direction. For example, the direction in which the recesses 55A and 55B in the housing 210 are spaced apart from each other and the direction in which the two recesses 29A and 29B in the sensor base 270 are spaced apart from each other may be intersect or perpendicular to each other. For example, the receiving portion 49 may be disposed between the two recesses 55A and 55B in the housing 210. The recess 55 in the housing 210 may contact the boss 66 of the tilting guide unit 60 at at least one point. For example, the recess 55 may include a bottom surface and at least one side surface connected to the bottom surface. The at least one side surface of the recess 55 may be an inclined surface. For example, the recess 55 may include a bottom surface and a plurality of inclined surfaces. The inclined surfaces of the recess 55 may have the same shape. In another embodiment, at least one of the inclined surfaces of the recess 55 may have a different shape from the others.

The stationary unit (for example, housing 210) may include an opening 18 in which or through which at least a part of the moving module (or the tilting module) is disposed or extends. For example, the housing 210 may include an opening 18 in which or through which at least a part of the sensor base 270 is disposed or extends.

The opening 18 may expose the extension portion 217 of the sensor base 270. The opening 18 may expose a first coupling portion 31 of the elastic member 30. Furthermore, the opening 18 may expose at least a part of a connecting portion 33 of the elastic member 30.

For example, the opening 18 may be disposed in the seating portion 69. For example, the opening 18 may be formed in the bottom surface 69A of the seating portion 69. The opening 18 may be formed through the bottom surface 69A of the seating portion 69. The opening 18 may be formed through the lower surface 210A of the lower portion 420. The opening 18 may be required for assembly of the elastic member 30 with the extension portion 217 of the sensor base 210. For example, the opening may be formed in the lower surface of the lower portion 42 of the housing 210. The shape of the opening 18 in the housing 210 may correspond to or be identical to the shape of the extension portion 217 of the sensor base 270. The opening 18 in the housing 210 may serve as an assembly passage for coupling the elastic member 30 to the extension portion 217 of the sensor base 270. Therefore, the size, such as the diameter, of the opening 18 may be greater than the size of the first coupling portion 31 of the elastic member 30. In this case, the size of the coupling member 31 may be the length of the coupling portion 31 in a direction perpendicular to the optical axis (the length in the transverse or longitudinal direction) or the diameter of the first coupling portion 31.

The moving module (or the tilting module) may include at least a part (or an "extension portion") that is disposed in the opening 18 in the housing 210 or extends through the opening 18 in the housing 210. The at least a part (or the extension portion) of the moving module (or the tilting module) may be connected or coupled to the elastic member 30. For example, the at least a part (or the extension portion) of the moving module (or the tilting module) may be coupled or connected to the first coupling portion 31 of the elastic member 30.

The extension portion 217 of the sensor base 270 may extend through the opening 60A in the tilting guide unit 60. The extension portion 217 of the sensor base 270 may be disposed in the stationary unit (e.g., the housing 210). The extension portion 217 of the sensor base 270 may be connected or coupled to the elastic member 30. For example, the extension portion 217 of the sensor base 270 may be coupled or connected to the first coupling portion 31 of the elastic member 30. For example, the extension portion 217 of the sensor base 270 may include at least one boss 219 configured to be coupled to the elastic member 30 (e.g., the first coupling portion 31). The first coupling portion 31 of the elastic member 30 may include at least one through hole 2A configured to be coupled to the boss 219 of the sensor base 270. In another embodiment, the first coupling portion 31 of the elastic member 30 may include a hole or a recess, in place of the through hole 2A. In another embodiment, the extension portion 217 of the sensor base 270 may extend through the opening 18 in the housing 210.

Although the sensor base 270 may include four bosses, the number of bosses of the sensor base 270 may be one of 1 to 3 and 5 or more in another embodiment. In addition, the number of through holes 2A in the elastic member 30 may be equal to the number of bosses 219 of the sensor base 270. In another, the extension portion 217 of the sensor base 270 may include a recess or a hole, and the first coupling portion 31 of the elastic member 30 may include a boss.

Referring to FIG. 4A, at least a part of the extension portion 217 of the sensor base 270 may be disposed in the opening 18 in the housing 210. At least a part of the extension portion 217 of the sensor base 270 may be exposed through the opening 18 in the housing 210.

The housing 210 may include a protrusion 215 protruding in a direction perpendicular to the optical axis. For example, the protrusion 215 may protrude from the side portion of the housing 210. For example, the protrusion 215 may protrude from an outer surface of the fourth side portion 71D of the housing 210. For example, the protrusion 215 may be formed by at least a part of the fourth side portion 71D protruding in a direction parallel to a straight line that extends through the optical axis and is perpendicular to the optical axis. For example, the protrusion 215 may include a recess 16A (or a cavity) in which at least a part of the fourth substrate 804 is disposed or received. For example, the recess 16A in the protrusion 215 may include an opening that opens upward.

Referring to FIG. 10A, the recess 16A in the protrusion 215 may be provided with coupling recesses 215A and 215B for insertion, coupling, or fixing of the movement inhibition portion 80. For example, the coupling recesses 215A and 215B may be formed in two facing inner surfaces of the recess 16A in the protrusion 215. For example, the coupling recesses 215A and 215B may extend in the optical-axis direction. For example, for easy insertion or coupling of the movement inhibition portion 80 from above, each of the coupling recesses 215A and 215B may include an opening that opens to an upper surface of the protrusion 215.

The maximum length of the protrusion 215 in the optical-axis direction may be less than the maximum length of the housing 210 in the optical-axis direction. In this configuration, space for the circuit board 800 to extend outward may be easily secured, and a compact camera device may be implemented.

The camera device 200 may include a movement inhibition portion 80 coupled to at least a part of the housing 210. The movement inhibition portion 80 may inhibit movement or motion of at least a part of the fourth substrate 804 to inhibit deformation of the shape of at least a part of the fourth substrate 804.

Referring to FIGs. 7C, 8, and 11A, the fourth substrate 804 of the circuit board 800 may include a first portion 804A (or a "first region") connected to the first substrate 801, a second portion 804B connected to the first portion 804A and bent from the first portion 804A, and a third portion 804C connected to the second portion 804B and bent from the second portion 804B. In another embodiment, at least one of the first portion 804A or the second portion 804B may be omitted.

For example, the first portion 804B may extend in a direction parallel to the first substrate 801. For example, the second portion 804B may be bent from the first portion 804B and may extend from the first portion 804B in the upward direction. For example, the third portion 804C may extend from the second portion 804B in a direction opposite the first portion 804A.

For example, the fourth substrate 804 may include a first bent portion 804D connecting the first portion 804A and the second portion 804B to each other. In addition, the fourth substrate 804 may include a second bent portion 804E connecting the second portion 804B and the third portion 804C to each other. The first bent portion 804D and the second bent portion 804E may be angled, and for example, the first portion 804A and the second portion 804B may be perpendicular to each other. In another embodiment, the first bent portion 804D and the second bent portion 804E may be round. In another embodiment, the interior angle between the first portion 804A and the second portion 804B may be an acute angle or an obtuse angle.

The first bent portion 804D and the second bent portion 804E may prevent an increase in the length of the camera device 200 in a direction perpendicular to the optical-axis direction. In addition, since the first bent portion 804D and the second bent portion 804E are located between the upper surface of the camera device 200 (e.g., the upper surface of the cover member 300) and the lower surface of the camera device 200 (e.g., the lower surface of the housing 210), an increase in the length of the camera device 200 in the optical-axis direction may be prevented, whereby it is possible to implement miniaturization of the camera device.

For example, the third portion 804C may take the form of a plate or plane perpendicular to the optical axis. For example, the third portion 804C may include a meandering shape or a serpentine shape. For example, the third portion 804C may include at least one bent or curved region. For example, the bent or curved region of the third portion 804C may be bent in the second direction or the third direction, which is perpendicular to the optical axis. Alternatively, the bent or curved region of the third portion 804C may extend in a direction perpendicular to the optical axis. For example, when viewed from above, the third portion 804C may include a region having a U shape or a V shape.

For example, the third portion 804C may be spaced apart from the housing 210. For example, the third portion 804C may be spaced apart from the protrusion 215 of the housing 210. In another embodiment, for example, at least a part of the third portion 804C may be in contact with the protrusion 215 of the housing 210.

At least a part of the second portion 804B of the fourth substrate 804 may be disposed in the protrusion 215 of the housing 210. At least a part of the second portion 804B of the fourth substrate 804 may be disposed in the recess 16A in the protrusion 215 of the housing 210. For example, at least a part of the first portion 804A of the fourth substrate 804 may be disposed in the recess 16A in the protrusion 215 of the housing 210. The third portion 804C of the fourth substrate 804 may be located outside the protrusion 215 of the housing 210. For example, the third portion 804C of the fourth substrate 804 may be located higher than the protrusion 215 of the housing 210. A lower surface of the third portion 804C of the fourth substrate 804 may be located higher than the upper surface of the protrusion 215 of the housing 210.

Referring to FIG. 7A, the sensor base 270 may include a recess 273 formed in the part at which the fourth substrate 804 and the first substrate 801 are joined or connected to each other, e.g., at the position corresponding to the first portion 804A of the fourth substrate 804. The recess 273 may be disposed adjacent to or abutting an outer surface of the fourth side portion 51D of the sensor base 270 on which the fourth substrate 804 is disposed. The recess 273 may serve to prevent the first portion 804A of the fourth substrate 804 from being damaged by friction with the sensor base 270.

The connector 805 may be coupled or connected to another external connector of the camera device 200 or to an external device. The connector 805 connected to the other external connector may correspond to a stationary unit that does not move when OIS is performed. Since the third portion 804C of the fourth substrate 804 includes at least one bent or curved region, it is possible to flexibly support the camera device 200 or the OIS moving unit and to cushion external impact. That is, the third portion 804C of the fourth substrate 804 may serve as a spring configured to cushion impact. In addition, since the third portion 804C of the fourth substrate 804 may serve to flexibly support the OIS moving unit 100, it is possible to reduce drive force or drive power required to perform OIS.

The camera device 200 may include a reinforcement member 70 disposed on, coupled to, or attached to at least a part of the fourth substrate 804. The reinforcement member 70 may be disposed on, coupled to, or attached to at least one of the first portion 804A or the second portion 804B of the fourth substrate 804. For example, the reinforcement member 70 may be disposed on, coupled to, or attached to at least a part of the first portion 804A of the fourth substrate 804 and at least a part of the second portion 804B of the fourth substrate.

For example, the reinforcement member 70 may be disposed on, coupled to, or attached to a lower surface of the first portion 804A of the fourth substrate 804 and a lower surface of the second portion 804B of the fourth substrate. For example, the reinforcement member 70 may include a first region 70A disposed on, coupled to, or attached to the first portion 804A and a second region 70B disposed on, coupled to, or attached to the second portion 804B. The second region 70B may be bent upward from the first region 70A. For example, a bent portion may be formed between the first region 70A and the second region 70B.

For example, the area of the second region 70B may be greater than the area of the first region 70A. In another embodiment, both may be equal, or the area of the former 70B may be less than the area of the latter 70A.

For example, the reinforcement member 70 may be spaced apart from the third portion 804C of the fourth substrate 804. For example, the second region 70B of the reinforcement member 70 may be spaced apart from the third portion 804C of the fourth substrate 804. In another embodiment, at least a part of the second region 70B of the reinforcement member 70 may be in contact with the third portion 804C of the fourth substrate 804.

In another embodiment, the reinforcement member 70 may be disposed on, coupled to, or attached to an upper surface of the first portion 804A of the fourth substrate 804 and an upper surface of the second portion 804B of the fourth substrate. For example, in another embodiment, the reinforcement member 70 may include a first region disposed on the upper surface of the first portion 804A of the fourth substrate 804 and a second region disposed on the upper surface of the second portion 804B of the fourth substrate.

In another embodiment, the reinforcement member 70 may be disposed on, coupled to, or attached to at least a part of the second portion 804B of the fourth substrate 804 and at least a part of the third portion 804C of the fourth substrate. For example, in another embodiment, the reinforcement member 70 may be disposed on, coupled to, or attached to the second portion 804B and the third portion 804C of the fourth substrate 804. For example, the reinforcement member 70 may include a first region disposed on, coupled to, or attached to the second portion 804B of the fourth substrate 804 and a second region disposed on, coupled to, or attached to the third portion 804C, and a bent portion may be formed between the first region and the second region. The first region of the reinforcement member 70 may be disposed on the lower surface (or the upper surface) of the second portion 804B, and the second region of the reinforcement member 70 may be disposed on the lower surface (or the upper surface) of the third portion 804C.

The reinforcement member 70 may prevent the fourth substrate 804 from being damaged, deformed, or broken by impact or external force. In addition, the reinforcement member 70 may serve to inhibit deformation and restoration of the shape of the fourth substrate 804 as the fourth substrate 804 is forced by tilting of the OIS moving unit 100. For example, the reinforcement member 70 may include at least one of a metal material or an injection-molded material.

For example, the reinforcement member 70 may be disposed in the recess 16A in the protrusion 215 of the housing 210. For example, at least a part of the reinforcement member 70 may be in contact with the recess 16A in the protrusion 215 of the housing 210. For example, the reinforcement member 70 may not be coupled to the housing 210 (e.g., the protrusion 215). In another embodiment, for example, the reinforcement member 70 may be coupled to the housing 210 (e.g., the protrusion 215) via an adhesive.

The reinforcement member 70 may include an opening 73. The opening 73 in the reinforcement member 70 may open or expose at least a part of the fourth substrate 804 of the circuit board 800. For example, the opening 73 may open or expose at least a part of each of the first portion 804A (or the "first region") and the second portion 804B (or the "second region") of the fourth substrate 804. The opening 73 in the reinforcement member 70 may be a hole, a through-hole, or a hollow.

The opening 73 may be formed in at least one of the first region 70A or the second region 70B of the reinforcement member 70. For example, the opening 73 may be formed in each of the first region 70A and the second region 70B of the reinforcement member 70. In addition, the opening 73 may open or expose at least a part of the first bent portion 804D. In another embodiment, the opening 73 may be formed in only one of the first region 70A and the second region 70B of the reinforcement member 70. In another embodiment, the opening 73 may not expose the first bent portion 804D. The opening 73 may reduce the elastic modulus of the second substrate 802 of the circuit board 800 coupled to the reinforcement member 70, thereby facilitating the movement of the OIS moving unit during OIS operation. That is, the opening 73 may reduce the elastic force of the circuit board 800, e.g., the second substrate 802, supporting the OIS moving unit, thereby facilitating OIS operation with less drive force and reducing power consumption. Here, the drive force may be the force resulting from the interaction between the coil 230 and the magnet 310. In another embodiment, the opening 73 may not be formed in the reinforcement member 70.

The movement inhibition portion 80 may be coupled to the protrusion 215 of the housing 210. For example, the movement inhibition portion 80 may be coupled to the coupling recesses 215A and 215B in the protrusion 215 of the housing 210. At least a part of the second portion 804B of the fourth substrate 804 may be disposed between the movement inhibition portion 80 and an inner surface of the protrusion 215 of the housing 210. For example, at least a part of the reinforcement member 70 may be disposed between the movement inhibition portion 80 and the inner surface of the protrusion 215 of the housing 210. The movement inhibition portion 80 may be spaced apart from the circuit board 800 in the second direction (the X-axis direction) or the third direction (the Y-axis direction). For example, the movement inhibition portion 80 may be disposed spaced apart from the circuit board 800 in the optical-axis direction or in a direction perpendicular to the optical-axis direction. That is, the movement inhibition portion 80 may serve to maintain the shape of the bent portions 804D and 804E of the fourth substrate 804, which is a flexible substrate. For example, the movement inhibition portion 80 may be formed by injection-molding a non-magnetic material or a resin. In another embodiment, the movement inhibition portion 80 may be in contact with at least a part of the fourth substrate 804 of the circuit board 800.

Movement or motion of at least a part of the second portion 804B of the fourth substrate 804 disposed in the recess 16A in the protrusion 215 may be restricted by the movement inhibition portion 80, and the second portion 804B may be inhibited or prevented from moving out of the recess 16A in the protrusion 215. This may inhibit or prevent the OIS moving unit from being affected by restoring force of the fourth substrate 804 when OIS is performed, thereby enabling OIS to be accurately performed and improving reliability of OIS operation. The movement inhibition portion 80 may alternatively be referred to as a "clamp."

The cover member 300 may form a receiving space with the housing 210, and the OIS moving unit may be disposed in the receiving space. For example, the cover member 300 may take the form of a box having an open lower portion. For example, the cover member 300 may include an upper plate 301 and a side plate 302 connected to the upper plate 301.

A lower end of the side plate 302 of the cover member 300 may be coupled to the housing 210. The shape of the upper plate 301 of the cover member 300 may be polygonal (e.g., quadrangular or octagonal) or circular. The upper plate 301 of the cover member 300 may include an opening 303 configured to expose the lens (not shown) to external light. The opening 303 may be a through-hole formed through the upper plate 301 of the cover member 300 in the optical-axis direction. For example, the cover member 300 may include a plurality of side plates. The material of the cover member 300 may be a non-magnetic material. In another embodiment, the cover member 300 may be made of a magnetic material. For example, the material of the cover member 300 may be an injection-molded material, such as a resin, or a metal material.

The cover member 300 may include an opening 304 disposed or formed in the side plate 302 to avoid spatial interference with the protrusion 215 of the housing 210. For example, the protrusion 215 of the housing 210 may extend through the opening 304 of the cover member 300 and may protrude from the side plate 302 of the cover member 300.

The cover member 300 may include a protrusion 305 disposed above the opening 304 and protruding from the side plate 302. For example, the protrusion 305 may be in the shape of a plate. For example, the protrusion 305 of the cover member 300 may be disposed on the protrusion 215 of the housing 210. For example, the protrusion 305 may be disposed above the recess 16A in the protrusion 215 of the housing 210. For example, the protrusion 305 may be disposed above the movement inhibition portion 80. For example, the protrusion 305 may overlap the movement inhibition portion 80 in the optical-axis direction. In addition, for example, the protrusion 305 may overlap the first portion 804A of the fourth substrate 804 in the optical-axis direction. The protrusion 305 may inhibit or prevent separation of the movement inhibition portion 80, and may protect the movement inhibition portion 80 and the fourth substrate 804 from impact.

Referring to FIG. 4G, the cover member 300 may include a boss 311 protruding from the upper plate 301. In this case, the boss 311 of the cover member 300 may project from an inner surface of the upper plate 301 of the cover member 300 toward the bobbin 110 or the rolling member 21. For example, the boss 311 of the cover member 300 may be opposite or may overlap the receiving portion 116 of the bobbin 110 in the optical-axis direction. At least a part of the boss 311 of the cover member 300 may be inserted or disposed in the receiving portion 116 of the bobbin 110. The boss 311 of the cover member 300 may be disposed on the rolling member 21.

For example, the cover member 300 may include a first boss 311A corresponding to, opposite, or overlapping the first rolling member 21A or the first receiving portion 116A of the bobbin 110. For example, the cover member 300 may include a second boss 311B corresponding to, opposite, or overlapping the second rolling member 21B or the second receiving portion 116B of the bobbin 110. For example, the boss 311 of the cover member 300 may include a recess depressed from the upper surface of the upper plate 301 of the cover member 330. In another embodiment, the boss of the cover member 300 may not include a recess. As the cover member 300 is provided with the boss 311, the embodiment may prevent the rolling member 21 from being separated from the receiving portion 116 of the bobbin 110. In addition, the boss 311 of the cover member 300 may serve as a stopper configured to prevent further movement of the bobbin 110 within a limited range in the upward direction. In another embodiment, the boss 311 may not be formed on the cover member 300.

Next, the support unit will be described.

The support unit may be disposed between the stationary unit and the OIS moving unit 100. The support unit may be disposed between the sensor base 270 and the housing 210, and may support the sensor base 270 with respect to the housing 210.

The support unit may include a tilting guide unit 60 disposed between the OIS moving unit (e.g., the sensor base 270) and the stationary unit (e.g., the housing 210). The tilting guide unit 60 may guide tilting of the OIS moving unit 100.

The tilting guide unit 60 may alternatively be referred to as a driving plate, a "mover," a "mover plate," a "drive plate," a "plate," a "rotating plate," a "tilting plate," a "moving plate," or a "support plate."

The tilting guide unit 60 may be tiltable about the first axis or the second axis or rotatable by a predetermined angle. For example, the tilting guide unit 60 may be disposed between the lower portion (or the lower surface) of the sensor base 270 and the lower portion 42 of the housing 210. For example, at least a part of the tilting guide unit 60 may be disposed in the seating portion 69 of the housing 210. Since the tilting guide unit 60 is disposed in the seating portion 69 of the housing 210, the length or height of the camera device 200 in the optical-axis direction may be reduced.

The tilting guide unit 60 may be plate-shaped. The tilting guide unit 60 may include a body. The body of the tilting guide unit 60 may alternatively be referred to as a main body or a "plate portion." When viewed from above, the shape of the body of the tilting guide unit 60 may be polygonal (e.g., quadrangular), circular, or oval. When viewed from above, the shape of the body of the tilting guide unit 60 may be quadrangular, and corner (or edge) portions of the body may be round.

For example, the length of the tilting guide unit 60 in a horizontal direction perpendicular to the optical axis (e.g., in the transverse direction or the longitudinal direction) may be greater than the length of the tilting guide unit 60 in the optical-axis direction.

The tilting guide unit 60 may include a first guide member disposed on a first surface (or an upper surface) 6A opposite the OIS moving unit (e.g., the sensor base 270) and a second guide member disposed on a second surface (or a lower surface) 6B opposite the stationary unit (e.g., the housing 210). The first guide member may be provided in one or more, and the second guide member may be provided in one or more. For example, the first axis may be formed by the first guide member, and the second axis may be formed by the second guide member. For example, the first guide member may include a plurality of first guide members spaced apart from each other in a direction parallel to the first axis. The second guide member may include a plurality of second guide members spaced apart from each other in a direction parallel to the second axis. For example, the first axis may be formed by the plurality of first guide members, and the second axis may be formed by the plurality of second guide members.

The first guide member may be a "boss," a "protrusion," a "ball member," or a "ball," and the second guide member may be a "boss," a "protrusion," a "ball member," or a "ball."

Referring to FIGs. 9A and 9B, the tilting guide unit 60 may include a first boss 65 coupled to the sensor base 270 or in contact with the sensor base 270 and a second boss 66 coupled to the housing 210 or in contact with the housing 210. The first boss 65 may be disposed on the first surface 6A (e.g., the upper surface) of the tilting guide unit 60, and the second boss 66 may be disposed on the second surface 6B (or the lower surface) of the tilting guide unit 60, which is opposite the first side 6A. For example, the first boss 65 may protrude from the first surface 6A (e.g., the upper surface) of the tilting guide unit 60, and the second boss 66 may protrude from the second surface 6B (e.g., the lower surface) of the tilting guide unit 60.

The first boss 65 may alternatively be referred to as an "upper boss (or a front boss)" or a "first protrusion," and the second boss 66 may alternatively be referred to as a "lower boss (or a rear boss)" or a "second protrusion." The number of each of the first boss 65 and the second boss 66 may be one, two, or three or more. At least a part of the first boss 65 may be disposed in the recess 29 in the sensor base 270. The first boss 65 may include at least two bosses 65A and 65B. For example, the 1-1 boss 65A and the 1-2 boss 65B may be disposed spaced apart from each other in the first-axis direction. Each of the two bosses 65A and 65B may be inserted into and disposed in a corresponding one of the first and second recesses 29A and 29B in the sensor base 270. In another embodiment, the two bosses 65A and 65B may be disposed spaced apart from each other in the first horizontal direction or the X-axis direction.

At least a part of the second boss 66 may be disposed in the recess 55 in the housing 210. The second boss 66 may include at least two bosses 66A and 66B. For example, the 2-1 boss 66A and the 2-2 boss 66B may be disposed spaced apart from each other in the second-axis direction. Each of the two bosses 66A and 66B may be inserted into and disposed in a corresponding one of the first and second recesses 55A and 55B in the housing 210. In another embodiment, the two bosses 66A and 66B may be disposed spaced apart from each other in the second horizontal direction or the Y-axis direction.

In another embodiment, the two bosses 65A and 65B of the tilting guide unit 60 may be disposed spaced apart from each other in the second-axis direction, the first and second recesses 29A and 29B in the sensor base 270 may be disposed spaced apart from each other in the second-axis direction, the two bosses 66A and 66B of the tilting guide unit 60 may be disposed spaced apart from each other in the first-axis direction, and the first and second recesses 55A and 55B in the housing 210 may be disposed spaced apart from each other in the first-axis direction.

For example, each of the first boss 65 and the second boss 66 may have a curved shape, a hemispherical shape, a dome shape, or a polyhedral shape, but the present disclosure is not limited thereto. For example, the shape of the first boss 65 when viewed from the front or above and the shape of the second boss 66 when viewed from the rear or below may be circular, oval, or polygonal.

The tilting guide unit 60 may include an opening 60A corresponding to, opposite, or overlapping the extension portion 217 of the sensor base 270 or the elastic member 30. For example, the opening 60A in the tilting guide unit 60 may correspond to, be opposite, or overlap the extension portion 217 of the sensor base 270 in the optical-axis direction. The weight of the tilting guide unit 60 may be reduced by the opening 60A, which may result in a lighter camera device 200.

For example, the opening 60A in the tilting guide unit 60 may be disposed at the position corresponding to the extension portion 217 in order to avoid spatial interference with the extension portion 217 of the sensor base 2170. In addition, the opening 60A in the tilting guide unit 60 may be formed to avoid spatial interference with the extension portion 217 of the elastic member 30.

For example, the opening 60A in the tilting guide unit 60 may be a through-hole or a hollow. For example, the opening 60A may be formed through the tilting guide unit 60 in the first direction (the Z-axis direction) or the optical-axis direction. For example, at least a part of the opening 60A in the tilting guide unit 60 may include a shape corresponding to the extension portion 217 of the sensor base 270. For example, the opening 60A may include a circular shape, an oval shape, and a polygonal shape, such as a quadrangular shape.

When viewed from above, the opening 60A in the tilting guide unit 60 may be disposed between the bosses 65A and 65B of the tilting guide unit 60. When viewed from below, the opening 60A in the tilting guide unit 60 may be disposed between the bosses 66A and 66B of the tilting guide unit 60.

For example, the length of the opening 60A in the tilting guide unit 60 in the transverse direction (or in the longitudinal direction) may be longer than the length or the diameter of the extension portion 217 of the sensor base 270 in the transverse direction (or in the longitudinal direction). In another embodiment, the length of the opening 60A in the transverse direction (or in the longitudinal direction) may be equal to the length or the diameter of the extension portion 217 of the sensor base 270 in the transverse direction (or in the longitudinal direction).

At least a part of the extension portion 217 of the sensor base 270 may be disposed in the opening 60A in the tilting guide unit 60. For example, the extension portion 217 of the sensor base 270 may overlap the opening 60A in the tilting guide unit 60 in the optical-axis direction. In addition, for example, at least a part of the extension portion 217 of the sensor base 270 may overlap the tilting guide unit 60 in a direction perpendicular to the optical-axis direction. This may reduce the length or height of the camera device 200 in the optical-axis direction. For example, at least a part of the opening 60A may be disposed between the two bosses 65A and 65B of the first boss 65 of the tilting guide unit 60. In addition, at least a part of the opening 60A may be disposed between the bosses 66A and 66B of the second boss 66 of the tilting guide unit 60.

For example, the tilting guide unit 60 may be made of an injection-molded material. For example, the tilting guide unit 60 may be made of a plastic, resin, or ceramic material. In another embodiment, the tilting guide unit 60 may include a metal material, such as SUS. In addition, the tilting guide unit 60 may be made of a non-magnetic material. In another embodiment, the tilting guide unit 60 may be made of a magnetic material.

The bosses 65A and 65B of the first boss 65 and the bosses 66A and 66B of the second boss 66 may be disposed side by side in directions that intersect or are perpendicular to each other. The first boss 65 of the tilting guide unit 60 may rotate, pivot, or tilt the OIS moving unit about the first axis by a predetermined angle. The second boss 66 of the tilting guide unit 60 may rotate, pivot, or tilt the OIS moving unit about the second axis.

In another embodiment, at least one of the first boss 65 or the second boss 66 of the tilting guide unit 60 may be omitted, and a rolling member or a ball member may be disposed in place of the omitted boss.

Referring to FIGs. 9C and 9D, a tilting guide unit 60-1 according to another embodiment may include a first recess 75 with the first boss 65 omitted, and may include a second recess 76 with the second boss 66 omitted. In addition, the support unit may include a first ball member in place of the first boss 65, and may include a second ball member in place of the second boss 66. For example, the first ball member may include two or more first ball members 65A1 and 65B1, and the second ball member may include two or more ball members 66A1 and 66B1.

The first recess 75 may be disposed or formed in a first surface 6A of the tilting guide unit 60-1. The first surface 6A may be a surface opposite or facing the sensor base 270. The recess 75 may be depressed from the first surface 6A of the tilting guide unit 60-1. For example, the tilting guide unit 60-1 may include first recesses 75A and 75B in which at least a part of the first ball member 65A1 and at least a part of the first ball member 65B1 are disposed, respectively. For example, the first recesses 75A and 75B may be disposed spaced apart from each other in the first-axis direction. For example, the first ball members 65A1 and 65B1 may be disposed spaced apart from each other in the first-axis direction.

In another embodiment, the first ball members 65A1 and 65B1 may be disposed spaced apart from each other in the second-axis direction, and the first recesses 75A and 75B may be disposed spaced apart from each other in the second-axis direction.

In another embodiment, the first ball members 65A1 and 65B1 and the first recesses 75A and 75B may be disposed spaced apart from each other in the first horizontal direction (or the second horizontal direction).

In addition, the second recess 76 in the tilting guide unit 60-1 may be disposed or formed in a second surface 6B of the tilting guide unit 60-1. The second surface 6B may be a surface opposite or facing the housing 210. In addition, the second surface 6B may be a surface opposite the first surface 6A of the tilting guide unit 60-1. The second recess 76 may be depressed from the second surface 6B of the tilting guide unit 60.

For example, the tilting guide unit 60-1 may include second recesses 76A and 76B in which at least a part of the second ball member 66A1 and at least a part of the second ball member 66B1 are disposed, respectively. For example, the second recesses 76A and 76B may be disposed spaced apart from each other in the second-axis direction. For example, the second ball members 66A1 and 66B1 may be disposed spaced apart from each other in the second-axis direction. In another embodiment, the second ball members 66A1 and 66B1 may be disposed spaced apart from each other in the first-axis direction, and the second recesses 76A and 76B may be disposed spaced apart from each other in the first-axis direction. In another embodiment, the second ball members 66A1 and 66B1 and the second recesses 76A and 76B may be disposed spaced apart from each other in the second horizontal direction (or the first horizontal direction).

A description of the shape of the recess 29 in the sensor base 270 or the recess 55 in the housing 210 may be applied or analogically applied to the shape of the first recess 75 and the second recess 76 in the tilting guide unit 60-1.

A lubricant may be disposed on the first boss 66 of the tilting guide unit 60 and in the recess 29 in the sensor base 270 or the second boss 66 of the tilting guide unit 60 and in the recess 55 in the housing 210 in order to reduce frictional force and to protect the tilting guide unit 60.

The first boss 65 of the tilting guide unit 60 may slide in the recess 29 in the sensor base 270, and the second boss 66 may slide in the recess 55 in the housing 210. As a result, it is possible to reduce frictional force between the tilting guide unit 60 and the sensor base 270 and/or frictional force between the tilting guide unit 60 and the housing 210 and to reduce current consumption or power consumption necessary for OIS operation.

The rolling member 21 may not overlap the tilting guide unit 60 in the optical-axis direction. For example, as shown in FIG. 4C, the rolling member 21 may not overlap the tilting guide unit 60 in a direction perpendicular to the optical axis.

For example, the direction in which the first rolling member 21A and the second rolling member 21B are spaced apart from each other may intersect the direction in which the boss 65A and the boss 65B of the tilting guide unit 60 are spaced apart from each other. For example, the direction in which the first rolling member 21A and the second rolling member 21B are spaced apart from each other may not be parallel or perpendicular to the direction in which the boss 65A and the boss 65B of the tilting guide unit 60 are spaced apart from each other.

For example, the direction in which the first rolling member 21A and the second rolling member 21B are spaced apart from each other may intersect the direction in which the boss 66A and the boss 66B of the tilting guide unit 60 are spaced apart from each other. For example, the direction in which the first rolling member 21A and the second rolling member 21B are spaced apart from each other may not be parallel or perpendicular to the direction in which the boss 66A and the boss 66B of the tilting guide unit 60 are spaced apart from each other.

For example, when viewed from above, the distance between the boss 65A and the boss 65B of the tilting guide unit 60 may be less than the distance between the first rolling member 21A and the second rolling member 21B. In another embodiment, the distance between the boss 65A and the boss 65B of the tilting guide unit 60 may be equal to or greater than the distance between the first rolling member 21A and the second rolling member 21B.

For example, when viewed from above, the distance between the boss 66A and the boss 66B of the tilting guide unit 60 may be less than the distance between the first rolling member 21A and the second rolling member 21B. In another embodiment, the distance between the boss 66A and the boss 66B of the tilting guide unit 60 may be equal to or greater than the distance between the first rolling member 21A and the second rolling member 21B.

The support unit may include the elastic member 30 configured to connect the OIS moving unit (e.g., the sensor base 270) to the stationary unit (e.g., the housing 210). The elastic member 30 may be an elastic unit, a spring, a coil spring, a suspension wire, or a leaf spring. For example, the elastic member 30 may be made of an elastic material. For example, the elastic member 30 may be made of metal. For example, the elastic member 30 may exert restoring force such as pulling force (or contractive force).

For example, at least another part of the elastic member 30 may be coupled or connected to the housing 210. For example, at least another part of the elastic member 30 may be coupled or connected to the lower portion 42 of the housing 210. For example, at least another part of the elastic member 30 may be coupled or connected to the receiving portion 49 of the housing 210.

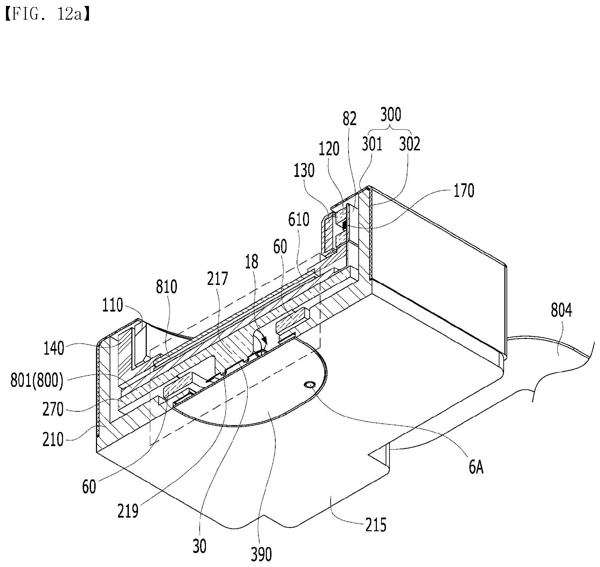

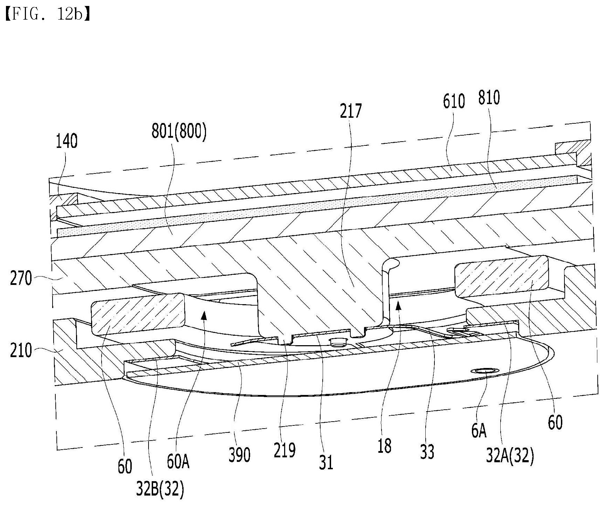

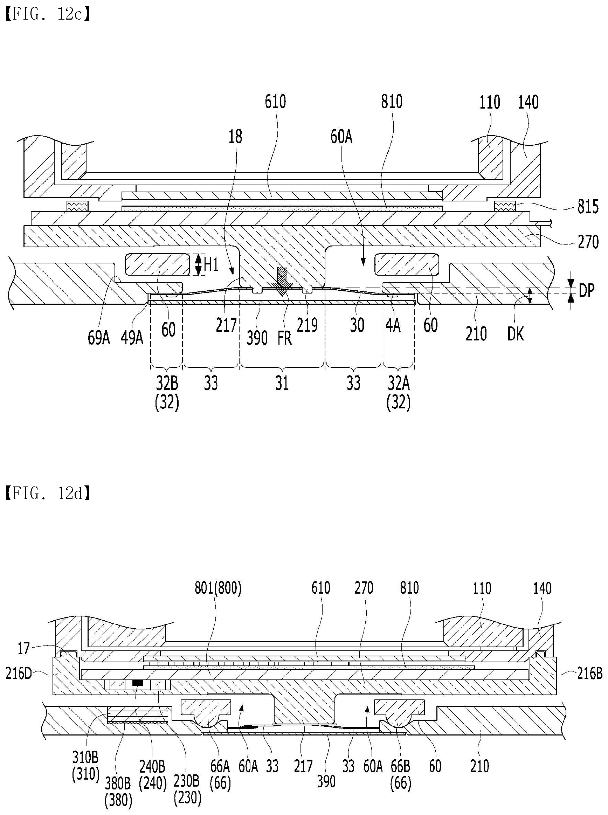

FIG. 12A is a cutaway perspective view of the camera device, FIG. 12B is an enlarged view of a dotted part in FIG. 12A, FIG. 12C is a fragmentary enlarged view of the cross-sectional view of FIG. 4A, and FIG. 12D is a fragmentary enlarged view of the cross-sectional view of FIG. 4F.

Referring to FIGs. 11A to 12D, the elastic member 30 may include the first coupling portion 31 connected or coupled to the moving unit 100, the second coupling portion 32 connected or coupled to the stationary unit, and the connecting portion 33 connecting the first coupling portion 31 to the second coupling portion 32. For example, the first coupling portion 31 may be coupled or connected to the extension portion 217 of the sensor base 270. For example, the second coupling portion 32 may be coupled or connected to the receiving portion 49 of the housing 210. The first coupling portion 31 may alternatively be referred to as a "first portion" or a "first region," the second coupling portion 32 may alternatively be referred to as a "second portion" or a "second region," and the connecting portion 33 may alternatively be referred to as a "third portion" or a "third region."

The elastic member 30 may alternatively be referred to as a "buffer," a "elastic portion," a "connecting elastic portion," an "elastic unit," a "connecting elastic unit," or a "spring portion". The elastic member 30 may be an elastic body. For example, the elastic member 30 may be a spring, a leaf spring, or a suspension spring.

The first coupling portion 31 may include a coupling region or a body. In another embodiment, the first coupling portion 31 may include a plurality of coupling regions or coupling portions which are spaced apart from each other.

The second coupling portion 32 may include a plurality of coupling regions or coupling portions 32A and 32B. In another embodiment, the number of coupling regions of the second coupling portion 32 may be three or more. In another embodiment, the coupling regions of the second coupling portion 32 may be connected to each other. For example, the second coupling portion 32 may include a coupling region or a body surrounding the opening 18 in the housing 210. For the sake of balanced restoring force of the elastic member 30, the coupling regions 32A and 32B may have shapes symmetrical with each other. For the sake of balanced restoring force, the coupling regions 32A and 32B may be disposed symmetrically with each other.

The connecting portion 33 may have a form which is bent or angled at least once. The connecting portion 63 may include at least one bent portion. For example, the connecting portion 63 may have a zigzag shape, at least one curved zone, or at least one bent zone.

The connecting portion 33 may include a plurality of connecting portions. Although four connecting portions are illustrated in FIG. 11B, the number of connecting portions 33 is not limited thereto. In another embodiment, the number of connecting portions 33 may be one, two or more. The plurality of connecting portions may have a shape symmetrical based on the first coupling portion 31. In addition, the plurality of connecting portions may be disposed symmetrically based on the first coupling portion 31. Consequently, the restoring force of the elastic member 30 may act on the OIS moving unit symmetrically, thereby preventing the OIS moving unit from being unintentionally tilted due to the elastic member 30.

The width K1 of the connecting portion 33 may be less than the width K2 of the second coupling portion 32. The width K1 of the connecting portion 33 may be a width in a direction perpendicular to the longitudinal direction of the connecting portion 33. The longitudinal direction of the connecting portion 33 may be a direction in which the connecting portion 33 extends to connect the first coupling portion 31 to the second coupling portion 32. The width K2 of the second coupling portion 31 may be the length of the second coupling portion 31 in a direction perpendicular to the optical-axis direction. The width K1 of the connecting portion 33 may be less than the width or diameter of the first coupling portion 310.

Although one elastic member 30 is illustrated in FIGs. 11A to 12B, the camera device 200 may include two or more elastic members spaced apart from each other in another embodiment. Each of the elastic members may include the first coupling portion 31, the second coupling portion 32, and the connecting portion 33.

The elastic member 30 may be disposed under the tilting guide unit 60. At least a part, for example, the connecting portion 33 of the elastic member 30 may be disposed under the opening 60A in the tilting guide portion 60. The elastic member 30 may be opposite or may overlap the opening 60A in the tilting guide unit 60 in the optical-axis direction. For example, the elastic member 30 may not overlap the tilting guide unit 60 in the optical-axis direction. In addition, for example, at least a part of the elastic member 30 may overlap the tilting guide unit 60 in a direction perpendicular to the optical axis.

The moving module may include a part (or a "first portion") that extends through the opening 60A in the tilting guide unit 60 or is disposed in the opening 60A in the tilting guide unit 60. The elastic member 30 may be coupled to the first portion of the moving module. The stationary unit may include an opening 18 in which the first portion of the moving module is disposed. At least a part of the extension portion 217 of the sensor base 270 may correspond to, be opposite, or overlap the opening 60A in the tilting guide unit 60 in the optical-axis direction. For example, the extension portion 217 may not overlap the tilting guide unit 60 in the optical-axis direction. In another embodiment, a part of the extension portion 217 may overlap the tilting guide unit 60 in the optical-axis direction. At least a part of the extension portion 217 may be disposed in the opening 60A in the tilting guide unit 60. For example, at least a part of the extension portion 217 may extend through the opening 60A in the tilting guide unit 60. For example, at least a part of the extension portion 217 may extend through or penetrate the opening 60A in the tilting guide unit 60 and may be coupled to the first coupling portion 31 of the elastic member 30.

The end (or the lower surface) of the extension portion 217 of the sensor base 270 may be located lower than the lower surface of the tilting guide portion 60. In another embodiment, the end of the extension portion 217 may be located in the opening 60A in the tilting guide unit 60. In another embodiment, the end (or the lower surface) of the extension portion 217 may be disposed between the upper surface and the lower surface of the tilting guide unit 60.

In the embodiment, the extension portion 217 may correspond to a part of the sensor base 270 and may be integrally formed with the sensor base 270. A camera device according to another embodiment may include a coupling member separate from the sensor base 270 instead of the extension portion 217. In this case, the separate coupling member may be coupled to the sensor base 270. For example, the coupling member may be coupled to the sensor base 270 by an adhesive. For example, the coupling member may include a first coupling structure (e.g., a boss or a recess), and the sensor base 270 may include a second coupling structure (e.g., a recess or a boss) for coupling to the first coupling structure. For example, one end of the coupling member may be coupled to the lower portion (or the lower surface) of the sensor base 270, and the other end of the coupling member may be coupled to the first coupling portion 31 of the elastic member 30. At least a part of the coupling member may be disposed in the opening 60A in the tilting guide unit 60. The coupling member may extend through the opening 60A in the tilting guide unit 60 and may be coupled to the first coupling portion 31 of the elastic member 30. In this case, the sensor base 270 may not include a part located in the opening 60A in the tilting guide unit 60.

In the embodiment, the elastic member 30 may be coupled to the extension portion 217 of the sensor base 270 that extends through the opening 60A in the tilting guide unit 60, and the first coupling portion 31 of the elastic member 30 may not overlap the tilting guide unit 60 in the optical-axis direction. The first coupling portion 31 of the elastic member 30 may overlap the opening 60A in the tilting guide unit 60 in the optical-axis direction. The first coupling portion 31 of the elastic member 30 may overlap the opening 18 in the housing 210 in the optical-axis direction. The second coupling portion 32 of the elastic member 30 may overlap the tilting guide unit 60 in the optical-axis direction.

The elastic member 30 may not overlap the tilting guide portion 60 in a direction perpendicular to the optical axis. In another embodiment, the elastic member 30 may overlap the tilting guide unit 60 in the direction perpendicular to the optical axis. The elastic member 30 may overlap the housing 210 in a direction perpendicular to the optical axis.

When viewed from above, the size (e.g., the diameter) of the opening 60A in the tilting guide unit 60 may be greater than the size (e.g., the diameter or the length in a direction perpendicular to the optical axis) of the first coupling portion 31.

The elastic member 30 connecting the OIS moving unit to the stationary unit may exert restoring force FR (see FIG. 12C) such as force pulling the OIS moving unit or contractive force. The tilting guide unit 60 may be pushed with respect to the OIS moving unit 100 by means of the elastic member 30. The tilting guide unit 60 may be brought into contact or close contact with the OIS moving unit 100 by means of the elastic member 30. The tilting guide unit 60 may be maintained in the state of being in contact with the OIS moving unit 100 by means of the elastic member 30.

Specifically, the tilting guide unit 60 may be pushed by the OIS moving unit and the stationary unit by means of the elastic member 30. In other words, the tilting guide unit 60 may be pushed to the moving unit by means of the restoring force FR of the elastic member 30.

When the elastic member 30 is, for example, a leaf spring, the first coupling portion 31 and the second coupling portion 32 may be located at the same height in a normal state before assembly. When the first coupling portion 31 is assembled with the extension portion 217, the first coupling portion 31 may be located higher than the second coupling portion 32, thereby generating restoring force FR to restore the first coupling portion 31 to the normal position.

In other words, a predetermined height difference DP (see FIG. 12C) in the optical-axis direction may be present between the first coupling portion 31 and the second coupling portion 32. For example, the first coupling portion 31 may be located higher than the second coupling portion 32 in the optical-axis direction. For example, the first coupling portion 31 may be disposed lower than the lower surface of the tilting guide unit 60.

The image sensor 810 may be disposed closer to the first coupling portion 31 than to the second coupling portion 32. The distance between the image sensor 81 and the first coupling portion 31 in the optical-axis direction may be less than the distance between the image sensor 810 and the second coupling portion 31 in the optical-axis direction. The filter 610 may be disposed closer to the first coupling portion 31 than to the second coupling portion 32. The distance between the filter 610 and the first coupling portion 31 in the optical-axis direction may be less than the distance between the filter 610 and the second coupling portion 31 in the optical-axis direction.

The first coupling portion 31 may be located higher than the lowest end (or the lowest point) of the boss 66 of the tilting guide unit 60. In another embodiment, the first coupling portion 31 may be located at a level equal to or lower than the lowest end (or the lowest point) of the boss 66 of the tilting guide unit 60.

The second coupling portion 32 may be located lower than the lowest end (or the lowest point) of the boss 66 of the tilting guide unit 60. In another embodiment, the second coupling portion 32 may be located at a level equal to or lower than the lowest end (or the lowest point) of the boss 66 of the tilting guide unit 60.

For example, the predetermined height difference DP may be less than the length of the extension portion 217 in the optical-axis direction. For example, the predetermined height difference DP may be less than the length H1 of the tilting guide unit 60 in the optical-axis direction. In another embodiment, the height difference DP may be equal to or greater than the length H1 of the tilting guide unit 60 in the optical-axis direction. The length H1 may be the distance between the upper surface and the lower surface of the body of the tilting guide unit 60.

The predetermined height difference DP may serve to help preload of the elastic member 30. The elastic member 30 may generate elastic restoring force capable of restoring the elastic member 30 to the normal position. The restoring force FR may be force which pulls the OIS moving unit toward the stationary unit. The restoring force FR may be force which pulls the first coupling portion 31 toward the second coupling portion 32.

The predetermined height difference DP may be less than the distance DK between the first coupling portion 31 and the lower surface of the housing 210. In another embodiment, the distance DK may be the distance between the lower surface of the extension portion 217 and the lower surface of the housing 210. The distance DK may be less than the length of the extension portion 217 in the optical-axis direction. The distance DK may be equal to or less than the length H1 of the tilting guide unit 60 in the optical-axis direction. In another embodiment, the distance DK may be greater than the length H1.

By virtue of the restoring force FR, it is possible to cause the tilting guide unit 60 to be brought into tight contact with the OIS moving unit and the stationary unit and to stably support the OIS moving unit.

In addition, since the first coupling portion 310 of the elastic member 30 is coupled to the extension portion 217 corresponding to or opposite the central region of the lower surface of the sensor base 270, the restoring force of the elastic member 30 may be concentrated to the central region of the sensor base 270, thereby efficiently and stably supporting the OIS moving unit.

By virtue of the restoring force FR of the elastic member 30, the lower surface of the sensor base 270 is able to push the tilting guide unit 60. The lower portion 42 of the housing 210 may press the tilting guide unit 60 due to the restoring force of the elastic member 30. As a result, the first boss 65 and the second boss 66 of the tilting guide unit 60 may be brought into tight contact with the sensor base 270 and/or the housing 210. The tilting guide unit 60 may stably support the OIS moving unit 100 with respect to the stationary unit due to the restoring force of the elastic member 30, whereby stable OIS operation may be performed.

If the restoring force FR is excessively low, the tilting guide unit 60 is unable to stably support the OIS moving unit 100 with respect to the stationary unit. Meanwhile, if the restoring force FR is excessively high, electromagnetic force acting between the coil 230 and the magnet 130, which is required for hand-tremor compensation, may greatly increase, and power consumption may increase.

The magnitude of the restoring force FR may be controlled according to the distance between the first coupling portion 31 and the second coupling portion 32 in the optical-axis direction and/or the width K1 of the connecting portion 33. In order to stably support the OIS moving unit 100 and to prevent electromagnetic force and power consumption for hand-tremor compensation from overly increasing, the width K1 of the connecting portion 33 may be less than the width K2 of the second coupling portion 32.

In addition, in order to stably support the OIS moving unit 100 and to prevent electromagnetic force and power consumption for hand-tremor compensation from overly increasing, the first coupling portion 31 may be located lower than the lower surface of the tilting guide unit 60. Alternatively, the first coupling portion 31 may be located higher than the bottom surface 49A of the receiving portion 49 of the housing 210. The first coupling portion 31 may be located lower than the bottom surface 69A of the seating portion 69 of the housing 210.

In another embodiment, the first coupling portion 31 may be disposed in the opening 60A in the tilting guide unit 60. In another embodiment, for example, the first coupling portion 31 may overlap the tilting guide unit 60 in a direction perpendicular to the optical axis.

In another embodiment, the seating portion 69 of the housing 210 may be omitted, a seating portion corresponding to or identical to the seating portion 69 of the housing 210 may be formed on the lower surface of the sensor base 270, and the tilting guide unit 60 may be disposed in the seating portion of the sensor base 270.

In another embodiment, the tilting guide unit 60 may be omitted, and the support unit may include a rolling member, such as a ball member, disposed between the sensor base 270 and the housing 210. In this case, the rolling member may include two first ball members disposed in a direction parallel to the first axis and two second ball members disposed in a direction parallel to the second axis, and the OIS moving unit may be tilted about the first ball members as an axis or may be rotated by a predetermined angle, and may be tilted about the second ball members as an axis or may be rotated by a predetermined angle, whereby a hand-tremor compensation operation may be performed.

Although at least a part of the extension portion 217 is shown in FIG. 12C as being disposed in the opening 60A in the tilting guide unit 60, the extension portion may be located outside the tilting guide unit 60 rather than being disposed in the center of the lower surface of the sensor base 270, in another embodiment. In other words, in another embodiment, at least a part of the extension portion of the sensor base may be disposed outside the opening 60A in the tilting guide unit 60, and the elastic member may be disposed at a location corresponding to the extension portion of the sensor base 270 and be coupled to the extension portion.

Referring to FIG. 13A, when viewed from above, the first magnet unit 310A may overlap the bosses 65A and 65B of the tilting guide unit 60 in the direction in which the bosses 65A and 65B face each other or the first-axis direction. In addition, the second magnet unit 310B may overlap the bosses 66A and 66B of the tilting guide unit 60 in the direction in which the bosses 66A and 66B face each other or the second-axis direction.

Referring to FIGs. 4E and 4F, the tilting guide unit 60 may overlap the magnet 310 in a direction perpendicular to the optical axis. For example, the first magnet unit 310A may overlap the tilting guide unit 60 in the first-axis direction, and the second magnet unit 310B may overlap the tilting guide unit 60 in the second-axis direction.

For example, the magnet 310 and the yoke 380 may be disposed under the image sensor 810. For example, the magnet 310 may be disposed under the filter 610. In addition, the magnet 310 may be disposed under the elastic member 30. For example, the magnet 310 may be located lower than the holder 140. For example, the magnet 310 may be disposed under the sensor base 270. For example, an upper surface of the magnet 310 may be located lower than the lower surface of the sensor base 270. The upper surface of the magnet 310 may be located lower than the lower surface of the holder 140. The upper surface of the magnet 310 may be located lower than the lower surface of the elastic member 30. For example, the magnet 310 may be located lower than the rolling member 21.

Referring to FIG. 4F, for example, the upper surface of the magnet 310, such as the upper surfaces of the magnet units 310A and 310B, may be located lower than the top end of the elastic member 30. In another embodiment, the upper surface of the magnet 310 may be located higher than the top end of the elastic member 30 or may be positioned at the same height as the top end of the elastic member 30.

For example, the upper surface of the magnet 310, for example, the upper surfaces of the magnet units 310A and 310B may be located higher than the lowest end of the elastic member 30. For example, the lowest end of the elastic member 30 may be located lower than the lower surface of the magnet 310, for example, the lower surfaces of the magnet units 310A and 310B. In another embodiment, the lowest end of the elastic member 30 may be located higher than the lower surface of the magnet 310, for example, the lower surfaces of the magnet units 310A and 310B. In another embodiment, the lowest end of the elastic member 30 and the lower surfaces of the magnet units 310A and 310B may be located at the same height.

Referring to FIG. 10B, for example, the first magnet unit 310A and the second magnet unit 310B may have the same shape and size. The first length L1 of the first magnet unit 310A in the second-axis direction may be less than the second length L2 of the first magnet unit 310A in the first-axis direction. In addition, the first length of the second magnet unit 310B in the first-axis direction may be less than the second length of the second magnet unit 310B in the second-axis direction.

The length of the first magnet unit 310A in the optical-axis direction may be less than the second length L2 of the first magnet unit 310A. In addition, the length of the second magnet unit 310B in the optical-axis direction may be less than the second length of the second magnet unit 310B. In another embodiment, the length of the first magnet unit 310A (or the second magnet unit 310B) in the optical-axis direction may be equal to or greater than the second length L2 of the first magnet unit 310A (or the second magnet unit 310B).

For example, the first length L1 of the first magnet unit 310A (or the second magnet unit 310B) may be less than the length of the tilting guide unit 60 in the second direction (the X-axis direction) or the third direction (the Y-axis direction). For example, the first length L1 of the first magnet unit 310A (or the second magnet unit 310B) may be greater than the length M1 between an outer circumferential surface and an inner circumferential surface of the tilting guide unit 60. For example, M1 may be the shortest distance between the outer surface of the tilting guide unit 60 and the opening 60A in the tilting guide unit 60. In another embodiment, L1 may be equal to or less than M1.

For example, the first length L1 of the first magnet unit 310A (or the second magnet unit 310B) may be less than the length of the opening 60A in the tilting guide unit 60 in the first-axis direction or the second-axis direction. The first length L1 of the first magnet unit 310A (or the second magnet unit 310B) may be less than the length of the opening 60A in the tilting guide unit 60 in the second direction or the third direction. In another embodiment, L1 may be greater than or equal to the length of the opening 60A in the first-axis direction or the second-axis direction. Alternatively, L1 may be greater than or equal to the length of the opening 60A in the tilting guide unit 60 in the second direction or the third direction.

The shortest distance L3 between the first bosses 65A and 65B may be greater than the first length L1. The shortest distance L4 between the second bosses 66A and 66B may be greater than the first length L1. For example, L3 and L4 may be equal to each other. In another embodiment, L3 and L4 may differ from each other. A description of L3 and L4 may be applied or analogically applied to the first ball members 65A1 and 65B1 and the second ball members 66A1 and 66B1 shown in FIGs. 9C and 9D.

For example, the upper surface of the magnet 310 may be located lower than the upper surface of the lower portion 42 of the housing 210. This serves to ensure that there is sufficient space to avoid spatial interference between the magnet 310 and the lower surface of the sensor base 270. In another embodiment, the upper surface of the magnet 310 and the upper surface of the lower portion 310 of the housing 210 may be flush with each other. In another embodiment, the upper surface of the magnet 310 may be located higher than the upper surface of the lower portion 420 of the housing 210. For example, the upper surface of the magnet 310 may be located lower than the highest point of the first boss 65 of the tilting guide unit 60.

When viewed from above or in the optical-axis direction, the bosses 65A and 65B, the elastic member 30, and the first magnet unit 310A may overlap each other in the first-axis direction. When viewed from above or in the optical-axis direction, the bosses 66A and 66B, the elastic member 30, and the second magnet unit 310B may overlap each other in the second-axis direction.

When viewed from above or in the optical-axis direction, the magnet 310 may not overlap the elastic member 30 in the second direction (the X-axis direction) or the third direction (the Y-axis direction).

In another embodiment, when viewed from above or in the optical-axis direction, the magnet 310 may overlap the elastic member 30 in the second direction (the X-axis direction) or the third direction (the Y-axis direction).

Referring to FIGs. 10C and 11D, the camera device may include a shield member 390 that closes the opening 18 in the housing 210. The shield member 390 may be disposed on the lower surface of the housing 210. The shield member 390 may be coupled or attached to the lower surface of the lower portion 42 of the housing 210.

The shield member 390 may be coupled to the housing 210 via an adhesive (not shown). The shield member 390 may be coupled to the receiving portion 49 of the housing 210 via an adhesive. The shield member 390 may be spaced apart from the elastic member 30. For example, the shield member 390 may be spaced apart from the second coupling portion 32 of the elastic member 390. The shield member 390 may be opposite or overlap the elastic member 30 in the optical-axis direction.

The receiving portion 49 may include at least one protrusion 44 protruding from the bottom surface 49A thereof. The shield member 390 may be disposed on the lower surface of the protrusion 44. An adhesive may be disposed on the lower surface of the protrusion 44, and the shield member 390 may be coupled to the lower surface of the protrusion 44 via the adhesive. At least one boss 6A may be disposed on the lower surface of the protrusion 44. A groove 79B may be formed in the lower surface of the protrusion 44 so as to allow the adhesive to easily flow. In addition, the groove 79B may suppress introduction of the adhesive into the opening 60A in the housing 210. The shield member 49 may include a through hole 9A configured to be coupled to the lower surface of the protrusion 44. In another embodiment, the through hole 9A may be a recess or a hole.

For example, the lower surface of the housing 210 may include a first surface 210A, a second surface stepped with respect to the first surface 210A, and a third surface 49A stepped with respect to the second surface. The second surface of the lower surface of the housing 210 may be the upper surface of the protrusion 44. When the camera device 200 is viewed from above, the second surface (the lower surface of the protrusion 44) may be located higher than the first surface 210A, and the third surface 49A may be located higher than the second surface. The second coupling portion 32 may be disposed on or coupled to the third surface 49A, and the shield member 390 may be disposed on or coupled to the second surface.

In another embodiment, the shield member 390 may be a piece of adhesive tape. For example, the shield member 390 may be an injection-molded material or a metal material. The shield member 390 may alternatively be referred to as a "cover," a sealing member, or a "shield tape." The shield member 390 may be spaced apart from the elastic member 30.

The shield member 390 may serve to prevent introduction of foreign materials into the housing 210 through the opening 18 and to protect the extension portion 217 from impact.

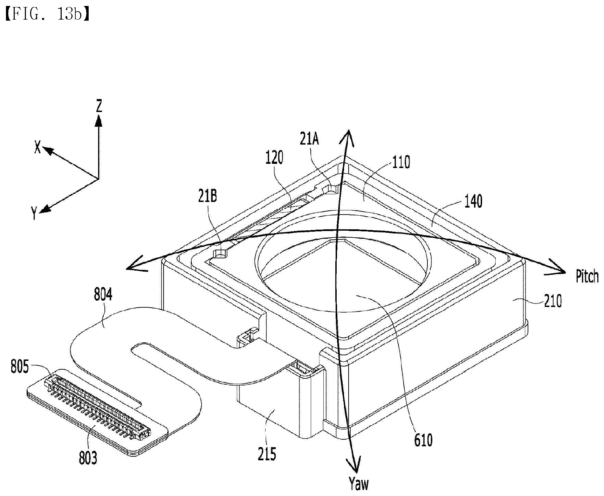

FIG. 13A shows electromagnetic forces F1 and F2 due to interaction between the magnet units 310A and 310B and the coil units 230A and 230B, and FIG. 13B shows the motion of the OIS moving unit 100 due to the electromagnetic forces of FIG. 13A. FIG. 13A shows the electromagnetic force when each of the first and second magnet units 310A and 310B is a two-pole magnet having an N pole and an S pole.

The motion of the OIS moving unit by the OIS driving unit will be described with reference to FIGs. 13A and 13B. The OIS driving unit may include a coil 230 and a magnet 310. In addition, the OIS driving unit may include a position sensor 240. The AF driving unit may be represented by one of a "first driving unit" and a "second driving unit," and the OIS driving unit may be represented by the other of the "first driving unit" and the "second driving unit."

For example, the first surface (e.g., the upper surface) of the first magnet unit 310A facing or opposite the first coil unit 230A in the optical-axis direction and the first surface (e.g., the upper surface) of the second magnet unit 310B facing or opposite the second coil unit 230B in the optical-axis direction may have opposite polarities. As the first surface (e.g., the upper surface) of the first magnet unit 310A and the first surface (e.g., the upper surface) of the second magnet unit 310B have opposite polarities, the influence of a magnetic field of the first magnet unit 310A on the second coil unit 230B and the influence of a magnetic field of the second magnet unit on the first coil unit 230A may be offset, whereby magnetic field balancing may be implemented. As a result, the influence of unnecessary magnetic fields caused by two neighboring magnet units 310A and 310B on the coil units 230A and 230B may be inhibited or reduced, whereby the performance and reliability of OIS operation of the camera device 200 may be improved.

In addition, as the first surface (e.g., the upper surface) of the first magnet unit 310A and the first surface (e.g., the upper surface) of the second magnet unit 310B have opposite polarities, the influence of the magnetic field of the first magnet unit 310A on the second sensor 240B and the influence of the magnetic field of the second magnet unit on the first sensor 240A may be offset, whereby magnetic field balancing may be implemented. As a result, the influence of unnecessary magnetic fields caused by neighboring magnet units 310A and 310B on the sensors 240A and 240B may be inhibited or reduced, whereby the reliability of the output of the sensors 240A and 240B may be improved and the performance and reliability of OIS operation may be improved.

In addition, for example, the second surface (e.g., the lower surface) of the first magnet unit 310A and the second surface (e.g., the lower surface) of the second magnet unit 310B may have opposite polarities. The second surface (e.g., the lower surface) of the first magnet unit 310A may be a surface opposite the first surface (e.g., the upper surface) of the first magnet unit 310A, and may have a polarity opposite the polarity of the first surface (e.g., the upper surface) of the first magnet unit 310A. The second surface (e.g., the lower surface) of the second magnet unit 310B may be a surface opposite the first surface (e.g., the upper surface) of the second magnet unit 310B, and may have a polarity opposite the polarity of the first surface (e.g., the upper surface) of the second magnet unit 310B. For example, the first surface of the first magnet unit 310A may have an N pole (or an S pole), and the first surface of the second magnet unit 310B may have an S pole (or an N pole).

First electromagnetic force F1 may be generated by interaction between the first magnet unit 310A and the first coil unit 230A. For example, the first electromagnetic force F1 may be exerted in the optical-axis direction, such as the upward direction or the downward direction. The OIS moving unit 100 may be tilted about the second axis (or the second boss 66) by the first electromagnetic force F1. For example, the OIS moving unit 100 may be second-axis tilted by the first electromagnetic force F1. Here, second-axis tilting means that the OIS moving unit is tilted about the second axis or the OIS moving unit is rotated about the second axis by a predetermined angle.

For example, the tilting guide unit 60 may be tilted about the second axis (or the bosses 66A and 66B of the second boss 66) by the first electromagnetic force F1. For example, the tilting guide unit 60 may be second-axis tilted by the first electromagnetic force F1. For example, in an embodiment in which the bosses 66A and 66B are disposed in the first-axis direction, the tilting guide unit 60 may be first-axis tilted.

Referring to FIG. 4B, a gap or space must be present between the tilting guide unit 60 and the OIS moving unit (e.g., the sensor base 270) by the first boss 65 of the tilting guide unit 60 in order for the OIS moving unit to be tilted about the second axis (or the second boss 66 of the tilting guide unit 60). For example, a gap or space in which the tilting guide unit 60 is movable may be present between the upper surface 6A of the tilting guide unit 60 and the OIS moving unit (e.g., the sensor base 270). For example, the upper surface 6A of the tilting guide unit 60 may be spaced apart from the OIS moving unit (e.g., the sensor base 270) or the lower surface of the sensor base 270.

Second electromagnetic force F2 may be generated by interaction between the second magnet unit 310B and the second coil unit 230B. For example, the second electromagnetic force F2 may be exerted in the upward direction or the downward direction.

The OIS moving unit may be tilted about the first axis (or the first boss 65) by the second electromagnetic force F2. For example, the OIS moving unit may be first-axis tilted by the second electromagnetic force F2. Here, first-axis tilting means that the OIS moving unit is tilted about the first axis or the OIS moving unit is rotated about the first axis by a predetermined angle.

For example, the tilting guide unit 60 may be brought into contact with the stationary unit (e.g., the housing 210) by first-axis or second-axis tilting. At this time, the stationary unit may serve as a stopper configured to inhibit tilting of the OIS moving unit.

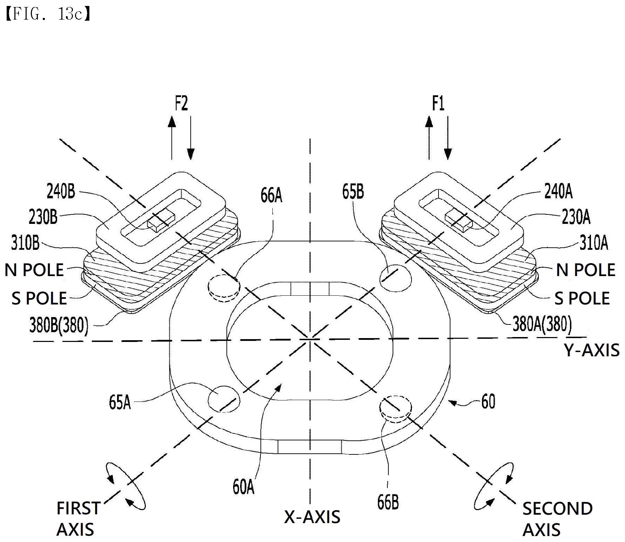

FIG. 13C shows the disposition of magnet units 310A and 310B according to a modification of FIG. 13A. Referring to FIG. 13C, the first surface (e.g., the upper surface) of the first magnet unit 310A facing or opposite the first coil unit 230A in the optical-axis direction and the first surface (e.g., the upper surface) of the second magnet unit 310B facing or opposite the second coil unit 230B in the optical-axis direction may have the same polarity. For example, each of the first surface of the first magnet unit 310A and the first surface of the second magnet unit 310B may have an N pole (or an S pole), and each of the second surface of the first magnet unit 310A and the second surface of the second magnet unit 310B may have an S pole (or an N pole).

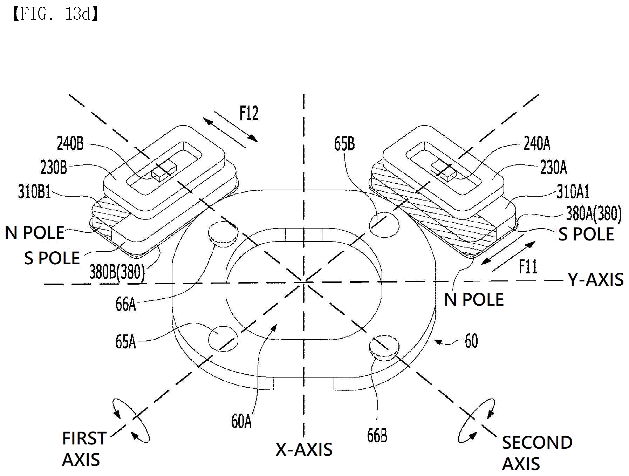

FIG. 13D is a view illustrating electromagnetic forces F11 and F12 due to interaction between magnet units 310A1 and 310B1 according to another embodiment and the coil units 230A and 230B.

Referring to FIG. 13D, the first magnet unit 310A1 may be a magnet with an N pole and an S pole separated or disposed in the first-axis direction. The second magnet unit 310B1 may be a magnet with an N pole and an S pole separated or disposed in the second-axis direction. For example, the first surface of the first magnet unit 310A1 may include an N pole and an S pole, and the first surface of the second magnet unit 310B1 may include an N pole and an S pole.

First electromagnetic force F11 due to the interaction between the first magnet unit 310A1 and the first coil unit 230A may act in a direction different from the optical axis (e.g., the first-axis direction). Second electromagnetic force F12 due to the interaction between the second magnet unit 310B1 and the second coil unit 230 may act in a direction different from the optical axis (e.g., the second-axis direction).

For example, the first electromagnetic force F11 due to the interaction between the first magnet unit 310A1 and the first coil unit 230A may act in a direction perpendicular to the optical axis. In addition, the second electromagnetic force F12 due to the interaction between the second magnet unit 310B1 and the second coil unit 230B may act in a direction perpendicular to the optical axis. For example, F11 and F12 may act in directions that intersect each other (e.g., directions that are perpendicular to each other).

In FIG. 13D, the first pole of the first magnet unit 310A1 may be disposed closer to the tilting guide unit 60 than the second pole of the first magnet unit 310A1. In addition, the second pole of the second magnet unit 310B1 may be disposed closer to the tilting guide unit 60 than the first pole of the second magnet unit 310B1. Alternatively, the first pole of the first magnet unit 310A1 may be located inside, and the second pole of the first magnet unit 310A1 may be located outside. Conversely, the first pole of the second magnet unit 310B1 may be located outside, and the second pole of the second magnet unit 310B1 may be located inside. For example, the first pole may be an N pole (or an S pole), and the second pole may be an S pole (or an N pole). In another embodiment, the first magnet unit 310A1 and the second magnet unit 310B1 may be disposed such that opposite polarities thereof are close to the tilting guide unit 60. A description of the magnetic field balancing of the embodiment of FIG. 13A may be applied or analogically applied to the embodiment of FIG. 13D.

In another embodiment, the first magnet unit 310A1 and the second magnet unit 310B1 may be disposed such that the same polarity (e.g., the N pole or the S pole) is close to the tilting guide unit 60.

The OIS moving unit may be tilted about the second axis (or the second boss 66) by the first electromagnetic force F11. For example, the OIS moving unit may be second-axis tilted by the first electromagnetic force F11. The OIS moving unit may be tilted about the first axis (or the first boss 65) by the second electromagnetic force F12. For example, the OIS moving unit may be first-axis tilted by the second electromagnetic force F12.

In FIGs. 13A, 13C, and 13D, the yoke 380 may serve to increase the electromagnetic forces F1, F2, F11, and F12 (or the drive forces).

In FIGs. 13A to 13D, the OIS moving unit may be tilted about the first axis or the second axis in the diagonal direction by the magnet units 310A and 310B, the coil units 230A and 230B, and the tilting guide unit 60. In another embodiment, the disposition of the magnet units 310A and 310B and the coil units 230A and 230B, and the disposition of the axes due to the bosses 65 and 66 of the tilting guide unit may be changed to enable X-axis tilting or Y-axis tilting.

In a camera device configured such that an image sensor is stationary and a lens is moved in a direction perpendicular to the optical axis for hand-tremor compensation or shake compensation ("Comparative Example 1"), distortion of an image may occur. Also, in a camera device configured such that a lens is stationary and an image sensor is moved or tilted for hand-tremor compensation or shake compensation ("Comparative Example 2"), image distortion may occur at edges or corners of the image sensor. As such, in Comparative Example 1 and Comparative Example 2, the image sensor and the lens are separated and only one of the image sensor and the lens is moved or tilted, which may cause image distortion during hand-tremor compensation, and hand-tremor compensation at wide angles may be difficult.

In the embodiment, for hand-tremor compensation, the OIS driving unit may tilt the OIS moving unit 100 about the first axis or the second axis or may rotate the OIS moving unit within a predetermined angular range. In the embodiment, since the OIS moving unit 100 includes a lens module 400 and an image sensor 810, the tilting direction (or the rotating direction) and the tilting angle (or the rotating angle) of the lens module 400 (e.g., a lens or a lens barrel) (or the bobbin 110) may be the same or nearly the same as the tilting direction (or the rotating direction) and the tilting angle (or the rotating angle) of the image sensor 810 when OIS is performed.

In the embodiment, the lens module 400 (or the bobbin 110) and the image sensor 810 may be simultaneously tilted or rotated together when OIS is performed, whereby 100% image resolution without image distortion may be obtained, and hand-tremor compensation or shake compensation at wide angles may be possible.

Also, in the embodiment, since the OIS moving unit including the lens module 400 (or the bobbin 110) and the image sensor 810 is tilted or rotated, image degradation does not occur in the central region of the image sensor or the peripheral region of the image sensor (e.g., the corners or the corner regions of the image sensor) even if shaking occurs in the camera device. In the embodiment, therefore, broadband shake compensation may be possible. Also, in the embodiment, since distortion-free image compensation is mechanically possible, load during image processing is low, whereby current consumption may be reduced, when compared to Comparative Example 1 and Comparative Example 2.

Also, in the embodiment, since the tilting guide unit 60 is used to tilt the OIS moving unit, the OIS moving unit may be stably, precisely, and accurately tilted, when compared to an example using only a ball member or a shaft member, thereby improving the reliability of OIS operation.

Also, in the embodiment, power consumption required to perform OIS may be reduced by the bent portions 804D and 804E and the third portion 804C of the fourth substrate 804, which is a flexible substrate, of the circuit board 800.

Also, in the embodiment, since the tilting guide unit 60 is disposed in the seating portion 69 of the housing 210 and the coupling portion 49 of the housing 210 overlaps the opening 60A in the tilting guide unit 60, the height or length of the camera device 200 in the optical-axis direction may be reduced.

Also, in the embodiment, since at least a part of the elastic member 30 is disposed in the opening 60A in the tilting guide unit 60, the restoring force of the elastic member 30 may be reduced, which may increase retentive force or holding force necessary to support the OIS moving unit, whereby stable OIS operation may be performed.

Also, in the embodiment, since the first magnet unit 310A and the second magnet unit 310B, which are driving magnets for hand-tremor compensation, are disposed on the lower portion 42 of the housing 210 rather than on the side portions 71A to 71D of the housing 210, the thickness of the side portions 71A to 71D of the housing 210 (or the length thereof in a direction perpendicular to the optical axis) may be reduced, thereby enabling mounting of a large-aperture lens to the camera device.

In a comparative embodiment which uses magnetic materials which exert attractive force or repulsive force in order to realize retentive force or holding force for supporting the OIS moving unit with respect to the stationary unit, magnetic field interference may be generated between the magnetic materials and the driving magnets 130 and 310. In the comparative embodiment, desired stable holding force may not be obtained due to the magnetic field interference. Furthermore, due to the magnetic field interference, accuracy of AF operation or reliability may be deteriorated, and accuracy of OIS operation reliability for hand-tremor compensation may be deteriorated.

In the embodiment, the elastic member 30 configured to generate holding force is used. In the embodiment, since the restoring force FR of the elastic member 30 is used to generate holding force, it is possible to prevent magnetic field interference between the magnetic material and the driving magnet 130 or 310 for generation of holding force and to obtain desired stable holding force. Consequently, the embodiment allows stable OIS driving.

In comparison with the comparative embodiment, since the elastic member 30 according to the embodiment is able to obtain stable holding force, excellent linearity of tilting angle of the OIS moving unit (or displacement of the OIS moving unit) during OIS driving is excellent, and it is suitable for open-loop OIS driving in which is a position sensor omitted. Accordingly, in the embodiment, even when the position sensor 240 is not provided, it is possible to realize reliable and excellent open-loop OIS driving.

In addition, since the elastic member 30 is used, the selection of axes for module tilting may be easy and free in the embodiment, and linear holding force may be implemented with respect to the stroke (or displacement) of the OIS moving unit. For example, in the embodiment, the design may be facilitated such that the axis for module tilting is at least one of the first axis, the second axis, the X-axis, or the Y-axis.

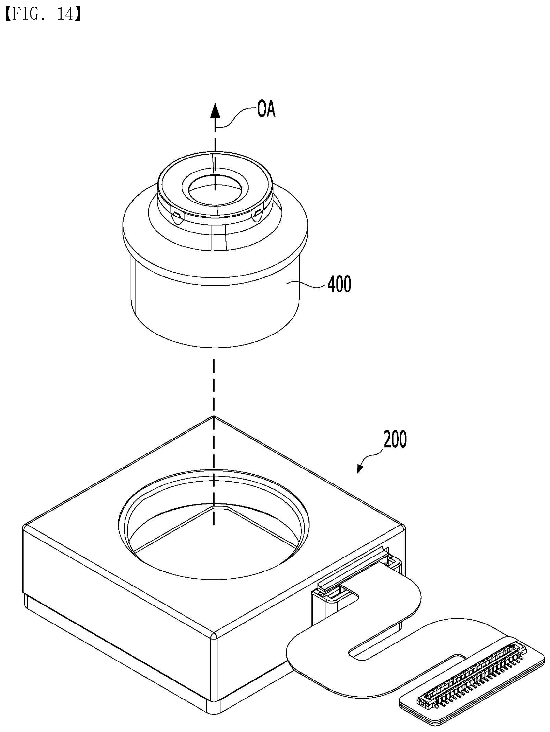

FIG. 14 is a perspective view of the camera device 200 including the lens module 400.

Referring to FIG. 14, the lens module 400 may be coupled to the bobbin 100, and may be moved with the bobbin 110 in the optical-axis direction. For example, the lens module 400 may include at least one of a lens or a lens barrel. In the embodiment, the lens module 400 and the image sensor 810 may be simultaneously first-axis tilted or second-axis tilted in the same direction and by the same angle during hand-tremor compensation or shake compensation.

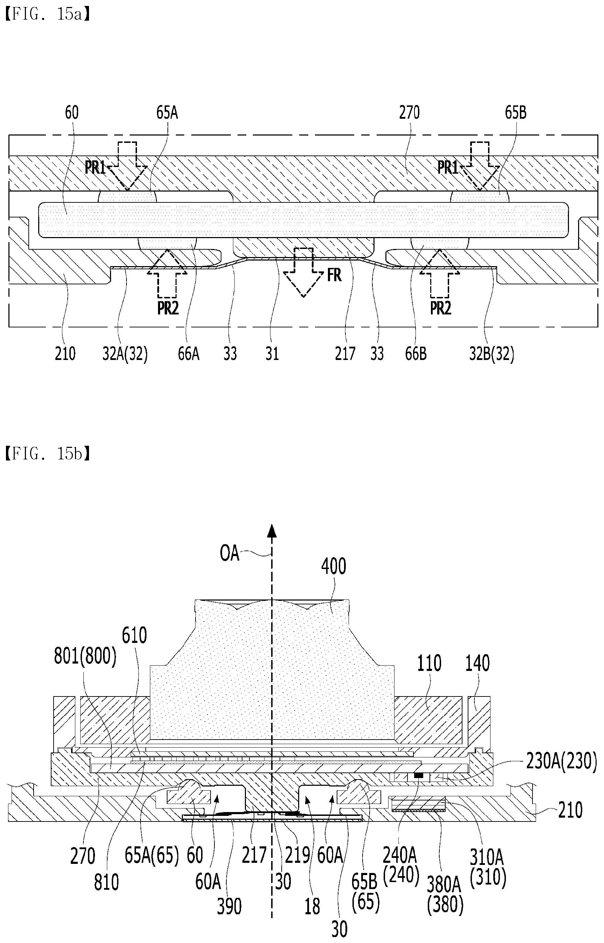

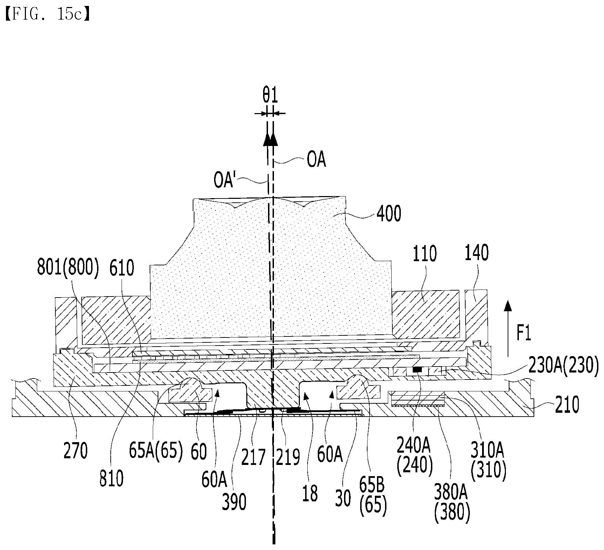

FIG. 15A shows pushing forces PR1 and PR2 acting on the tilting guide unit 60 due to the restoring force FR of the elastic member 30, FIG. 15B shows a first position of the OIS moving unit 100, and FIG. 15C shows a second position of the OIS moving unit 100. FIG. 15B shows the initial position of the OIS moving unit in which a drive signal is not supplied to the coil 230.

Referring to FIG. 15A, the first coupling portion 31 of the elastic member 30 may be coupled to the OIS moving unit (e.g., the sensor base 270), the second coupling portion 32 of the elastic member 30 may be coupled to the stationary unit (e.g., the housing 210), and the OIS moving unit (e.g., the sensor base 270) may be pulled toward the stationary unit (e.g., the housing 201) due to the restoring force FR of the elastic member 30. By virtue of the restoring force FR, the pushing force PR1 which causes the OIS moving unit (e.g., the sensor base 270) to push the bosses 65A and 65B of the tilting guide unit 60 may be generated. Therefore, the pushing force PR1 may cause the bosses 65A and 65B of the tilting guide unit 60 to contact or tightly contact the OIS moving unit (e.g., the sensor base 270).

In addition, by virtue of the restoring force FR, the pushing force PR2 which causes the stationary unit (e.g., the housing 210) to push the bosses 66A and 66B of the tilting guide unit 60 may be generated. Therefore, the pushing force PR2 may cause the bosses 66A and 66B of the tilting guide unit 60 to contact or tightly contact the stationary unit (e.g., the housing 210).

In other words, the bosses 65A and 65B of the tilting guide unit 60 may be maintained in the state of being in contact with the OIS moving unit by virtue of the pushing force PR1, and the bosses 65A and 65B of the tilting guide unit 60 may be maintained in the state of being in contact with the stationary unit by virtue of the pushing force PR2. A tilting motion may be performed while the bosses are maintained in the state of being in contact with the OIS moving unit and the stationary unit.

Referring to FIGs. 15B and 15C, the OIS moving unit 100 may be second-axis tilted about the second axis by a predetermined angle θ1 by force F1 due to interaction between the first magnet unit 310A and the first coil unit 230A. That is, when the OIS moving unit 100 is moved from the first position to the second position, both the image sensor 810 and the lens module 400 may be tilted simultaneously by the predetermined angle θ1. In addition, when the OIS moving unit 100 is moved from the first position to the second position, the tilting guide unit 60 may be tilted by the predetermined angle θ1 together with the image sensor 810 and the lens module 400.

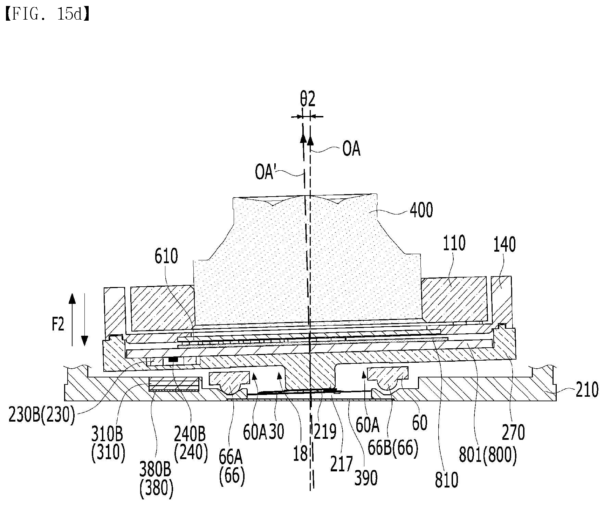

FIG. 15D shows a third position of the OIS moving unit 100.

Referring to FIG. 15D, the OIS moving unit 100 may be first-axis tilted about the first axis by a predetermined angle θ2 by force F2 due to interaction between the second magnet unit 310B and the second coil unit 230B. For example, when the OIS moving unit 100 is moved from the first position to the third position, the image sensor 810 and the lens module 400 may be simultaneously tilted by the predetermined angle θ2.

The image sensor 810 and the lens module 400 are simultaneously tilted about the first axis or the second axis by the force F1 or the force F2. In the embodiment, therefore, it is possible to obtain 100% image resolution without image distortion and to perform hand-tremor compensation or shake compensation at wide angles.

For example, when viewed from above or in the optical-axis direction, the first axis may be a first diagonal direction of the OIS moving unit 100, and the second axis may be a second diagonal direction of the OIS moving unit 100. For example, the first diagonal direction of the OIS moving unit may be a first diagonal direction of any one of the holder 140, the sensor base 270, and the first substrate 801 of the circuit board 800. In addition, the second diagonal direction of the OIS moving unit may be a second diagonal direction of any one of the holder 140, the sensor base 270, and the first substrate 801 of the circuit board 800.

In another embodiment, when viewed from above or in the optical-axis direction, the first axis may be a first diagonal direction of the stationary unit, and the second axis may be a second diagonal direction of the stationary unit. For example, the first diagonal direction of the stationary unit may be a first diagonal direction of the housing 210 or the cover member 300. In addition, the second diagonal direction of the stationary unit may be a second diagonal direction of the housing 210 or the cover member 300.

For example, the first diagonal direction of the OIS moving unit 100 (or the stationary unit) may be a direction intersecting the second direction (e.g., the X-axis direction) or the third direction, and the second diagonal direction of the OIS moving unit 100 (or the stationary unit) may be a direction intersecting the second direction (e.g., the X-axis direction) or the third direction. The first diagonal direction of the OIS moving unit 100 and the second diagonal direction of the OIS moving unit 100 may intersect each other. For example, the first diagonal direction of the OIS moving unit 100 and the second diagonal direction of the OIS moving unit 100 may be perpendicular to each other.

In another embodiment, the first axis may be a first horizontal direction of the OIS moving unit 100 (or the stationary unit), and the second axis may be a second horizontal direction of the OIS moving unit 100 (or the stationary unit).

In addition, the camera device 200 according to the embodiment may be included in an optical instrument for the purpose of forming an image of an object present in a space using reflection, refraction, absorption, interference, and diffraction, which are characteristics of light, for the purpose of increasing visibility, for the purpose of recording and reproduction of an image using a lens, or for the purpose of optical measurement or image propagation or transmission. For example, the optical instrument according to the embodiment may be a cellular phone, a mobile phone, a smartphone, a portable smart device, a digital camera, a laptop computer, a digital broadcasting terminal, a personal digital assistant (PDA), a portable multimedia player (PMP), a navigation device, etc., without being limited thereto, and may also be any of devices for capturing images or pictures.

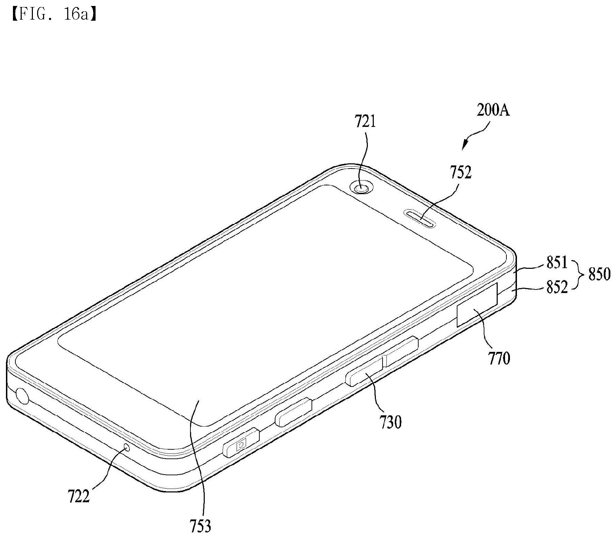

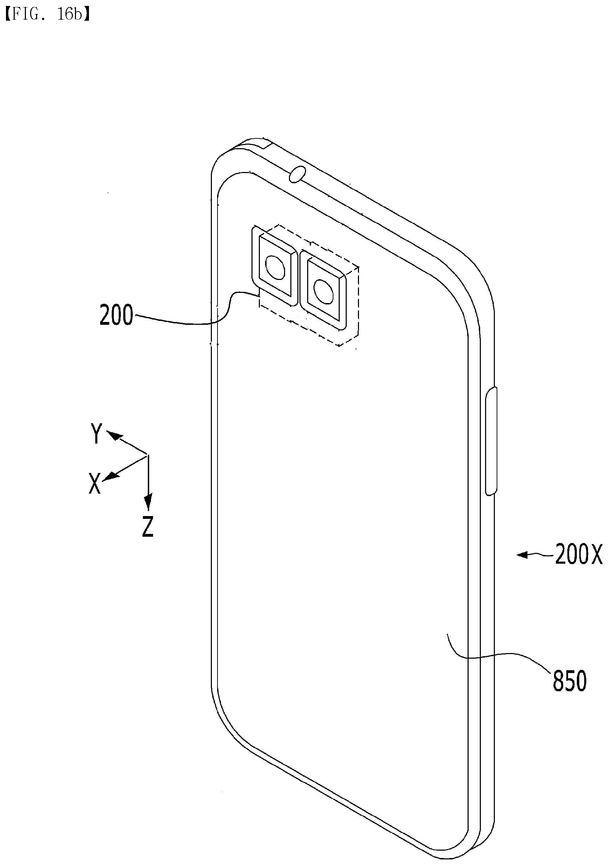

FIG. 16A is a perspective view of an optical instrument 200A according to an embodiment, FIG. 16B is a perspective view of an optical instrument 200X according to another embodiment, and FIG. 17 is a block diagram of the optical instrument 200A shown in FIGs. 16A and 16B.

For example, the embodiment of FIG. 16A may include a front camera in which a lens module 400 of a camera module 200 is disposed so as to face the front of a body 850, and the embodiment of FIG. 16B may include a rear camera in which a lens module 400 of a camera module 200 is disposed so as to face the rear of a body 850 of the optical instrument 200X. Although FIG. 16B shows an example in which two rear cameras are disposed, one, three or more rear cameras may be disposed in another embodiment. In another embodiment, the camera module 200 may be used in both the front camera and the rear camera.

Referring to FIGs. 16A, 16B, and 17, the optical instrument 200A (hereinafter referred to as a portable "terminal") may include a body 850, a wireless communication unit 710, an A/V input unit 720, a sensing unit 740, an input/output unit 750, a memory unit 760, an interface unit 770, a controller 780, and a power supply unit 790.

The body 850 may have a bar shape, without being limited thereto, and may be any of various types such as, for example, a slide type, a folder type, a swing type, or a swivel type, in which two or more sub-bodies are coupled so as to be movable relative to each other.

The wireless communication unit 710 may include one or more modules, which enable wireless communication between the terminal 200A and a wireless communication system or between the terminal 200A and a network in which the terminal 200A is located. For example, the wireless communication unit 710 may include a broadcast receiving module 711, a mobile communication module 712, a wireless Internet module 713, a nearfield communication module 714, and a location information module 715.

The audio/video (A/V) input unit 720 serves to input audio signals or video signals, and may include a camera 721 and a microphone 722.

The camera 721 may include the camera device 200 according to the embodiment.

The sensing unit 740 may sense the current state of the terminal 200A, such as the open or closed state of the terminal 200A, the position of the terminal 200A, the presence or absence of a user's touch, the orientation of the terminal 200A, or the acceleration/deceleration of the terminal 200A, and may generate a sensing signal to control the operation of the terminal 200A. For example, when the terminal 200A is a slide-type phone, whether the slide-type phone is open or closed may be detected. In addition, the sensor serves to sense whether power is supplied from the power supply unit 790 or whether the interface unit 770 is coupled to an external device.

The input/output unit 750 serves to generate visual, audible, or tactile input or output. The input/output unit 750 may generate input data to control the operation of the terminal 200A, and may display information processed in the terminal 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies in response to electrical signals. For example, the display module 751 may include at least one of a liquid crystal display, a thin-film transistor liquid crystal display, an organic light-emitting diode, a flexible display, or a 3D display.

The sound output module 752 may output audio data received from the wireless communication unit 710 in a call-signal reception mode, a call mode, a recording mode, a voice recognition mode, or a broadcast reception mode, or may output audio data stored in the memory unit 760.

The touchscreen panel 753 may convert variation in capacitance, caused by a user's touch on a specific region of a touchscreen, into electrical input signals.

The memory unit 760 may store programs for processing and control of the controller 780, and may temporarily store input/output data (e.g., a phone book, messages, audio, still images, pictures, and moving images). For example, the memory unit 760 may store images captured by the camera 721, for example, pictures or moving images.

The interface unit 770 serves as a passage for connection between the terminal 200A and an external device. The interface unit 770 may receive data or power from the external device, and may transmit the same to respective components in the terminal 200A, or may transmit data in the terminal 200A to the external device. For example, the interface unit 770 may include a wired/wireless headset port, an external charger port, a wired/wireless data port, a memory card port, a port for connection of a device having an identification module, an audio input/output (I/O) port, a video input/output (I/O) port, and an earphone port.

The controller 780 may control the overall operation of the terminal 200A. For example, the controller 780 may perform control and processing related to voice calls, data communication, and video calls.

The controller 780 may include a multimedia module 781 for multimedia playback. The multimedia module 781 may be provided in the controller 780, or may be provided separately from the controller 780.

The controller 780 may perform pattern recognition processing, by which writing or drawing input to the touchscreen is perceived as characters or images.

The power supply unit 790 may supply power required to operate the respective components upon receiving external power or internal power under the control of the controller 780.

The features, structures, effects, and the like described above in the embodiments are included in at least one embodiment of the present disclosure, but are not necessarily limited to only one embodiment. Furthermore, the features, structures, effects, and the like exemplified in the respective embodiments may be combined with other embodiments or modified by those skilled in the art. Therefore, content related to such combinations and modifications should be construed as falling within the scope of the present disclosure.

### [Industrial Applicability]

Embodiments may be used in a camera device and an optical instrument capable of achieving stable and desired holding force and performing stable OIS operation.

## Claims

1. A camera device comprising:
a stationary unit;
a moving unit comprising an image sensor and a lens;
a tilting guide unit disposed between the stationary unit and the moving unit; and
an elastic member connecting the stationary unit to the moving unit,
wherein the elastic member comprises a first coupling portion coupled to the moving unit, a second coupling portion coupled to the stationary unit, and a connecting portion connecting the first coupling portion to the second coupling portion,
wherein the tilting guide unit is pushed toward the moving unit by means of the elastic member, and
wherein the moving unit is tilted about a first axis perpendicular to an optical-axis direction or a second axis perpendicular to the optical-axis direction and intersecting the first axis.

2. The camera device according to claim 1, wherein:
the tilting guide unit comprises an opening,
the moving unit comprises an extension portion coupled to the first coupling portion, and
at least a part of the extension portion is disposed in the opening in the tilting guide unit.

3. The camera device according to claim 1, wherein the first coupling portion is located higher than the second coupling portion in the optical-axis direction.

4. The camera device according to claim 1, wherein the first coupling portion is disposed lower than a lower surface of the tilting guide unit.

5. The camera device according to claim 2, wherein the first coupling portion has a height difference from the second coupling portion in the optical-axis direction,
wherein the height difference is less than a length of the extension portion in the optical-axis direction.

6. The camera device according to claim 1, wherein:
the moving unit comprises a sensor base and a circuit board which is disposed on the sensor base and on which the image sensor is disposed,
the tilting guide unit comprises an opening, and
the sensor base comprises an extension portion which extends through the opening in the tilting guide and is coupled to the first coupling portion.

7. The camera device according to claim 6, wherein the stationary unit comprises an opening through which the extension portion and the first coupling portion are exposed.

8. The camera device according to claim 7, wherein at least a part of the extension portion is disposed in the opening in the stationary unit.

9. The camera device according to claim 7, wherein the stationary unit comprises a receiving portion depressed from a lower surface thereof, and
the second coupling portion is disposed in the receiving portion.

10. The camera device according to claim 7, comprising: a shield member which is disposed on a lower surface of the stationary unit so as to cover the opening in the stationary unit and is spaced apart from the elastic member.
